(19) Europäisches Patentamt
European Patent Office
Office européen des brevets

(11) **EP 3 611 443 B1**

(12) **EUROPEAN PATENT SPECIFICATION**

(45) Date of publication and mention
of the grant of the patent:
**25.11.2020  Bulletin 2020/48**

(21) Application number: **17905653.6**

(22) Date of filing: **11.04.2017**

(51) Int Cl.:
*F25B 13/00* (2006.01)       *F25B 49/02* (2006.01)
*F25B 41/04* (2006.01)       *F16K 11/04* (2006.01)
*F16K 31/50* (2006.01)       *F25B 25/00* (2006.01)

(86) International application number:
**PCT/JP2017/014808**

(87) International publication number:
**WO 2018/189805 (18.10.2018 Gazette 2018/42)**

(54) **REFRIGERATION CYCLE DEVICE**

KÄLTEKREISLAUFVORRICHTUNG

DISPOSITIF À CYCLE FRIGORIFIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.02.2020  Bulletin 2020/08**

(73) Proprietor: **Mitsubishi Electric Corporation
Chiyoda-ku
Tokyo 100-8310 (JP)**

(72) Inventor: **NISHIYAMA, Takumi
Tokyo 100-8310 (JP)**

(74) Representative: **Mewburn Ellis LLP
Aurora Building
Counterslip
Bristol BS1 6BX (GB)**

(56) References cited:
**WO-A1-2012/008148       WO-A1-2016/009749
JP-A- H07 280 375       JP-A- H09 196 489
JP-A- 2002 228 273       JP-A- 2012 036 933
JP-A- 2012 149 883       JP-A- 2012 202 624
JP-A- 2012 242 047       JP-A- 2012 242 047
JP-A- 2013 083 429       JP-A- 2016 061 489
US-A1- 2014 261 723       US-A1- 2015 176 848**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a refrigeration cycle apparatus.

BACKGROUND ART

A conventionally known refrigeration cycle apparatus is capable of switching the direction in which refrigerant flows through a heat exchanger without changing an operation mode. For example, Japanese Patent Laying-Open No. 2012-202624 (PTL 1) discloses a refrigeration cycle apparatus that uses non-azeotropic refrigerant mixture and switches the direction of the refrigerant flowing through an indoor heat exchanger by a four-way valve disposed in an indoor unit in accordance with the magnitude relationship between a refrigerant temperature at an inlet of the indoor heat exchanger and a refrigerant temperature at an outlet of the indoor heat exchanger. This refrigeration cycle apparatus can reduce an increase in the heat exchange loss of the heat exchanger to improve the performance of the refrigeration cycle apparatus Moreover, Japanese Patent JP2012242047 A (PTL2) discloses an air conditioner comprising a refrigeration cycle in which refrigerant circulates in a first direction of circulation in an order of a first compressor, a first heat exchanger, a first expansion valve, and a second heat exchanger, the refrigeration cycle comprising: a first flow path switching unit connected between the first expansion valve and the second heat exchanger and connected between the second heat exchanger and the first compressor; and a controller, the first flow path switching unit including a first switch valve, and the first switch valve having a motor controlled by the controller, a valve body moved by the motor, and a plurality of valve ports.

CITATION LIST

PATENT LITERATURE

PTL 1: Japanese Patent Laying-Open No. 2012-202624
PTL 2: JP 2012 242047 A

SUMMARY OF INVENTION

TECHNICAL PROBLEM

In the refrigeration cycle apparatus disclosed in Japanese Patent Laying-Open No. 2012-202624 (PTL 1), a four-way valve (outdoor four-way valve) disposed in an outdoor unit switches the direction of circulation of refrigerant to a direction of circulation which corresponds to each of a heating mode and a cooling mode. In both of the heating mode and the cooling mode, high-pressure refrigerant discharged from a compressor and low-pressure refrigerant from the heat exchanger functioning as an evaporator flow through the outdoor four-way valve. The outdoor four-way valve can achieve a sufficient amount of differential pressure of refrigerant. Even when the outdoor four-way valve is a differential-pressure-driven four-way valve which is driven by a differential pressure of refrigerant, the outdoor four-way valve can switch the direction of circulation of refrigerant at a desired timing.

Contrastingly, as to the four-way valve (indoor four-way valve) disposed in the indoor unit, high-pressure refrigerant from the compressor and high-pressure refrigerant from the indoor heat exchanger functioning as a condenser flow through the indoor four-way valve in the heating mode. In the cooling mode, low-pressure refrigerant from the expansion valve and low-pressure refrigerant from the indoor heat exchanger functioning as an evaporator flow through the indoor four-way valve. The differential pressure of the refrigerant which can be achieved in the indoor four-way valve is approximately equal to a pressure loss caused when the refrigerant flows through the indoor heat exchanger or the like. When the indoor four-way valve is a differential-pressure-driven four-way valve, the indoor four-way valve cannot operate until the pressure loss reaches a differential pressure required for the indoor four-way valve to operate. Thus, the refrigeration cycle apparatus disclosed in Japanese Patent Laying-Open No. 2012-202624 (PTL 1) may fail to switch the direction in which refrigerant flows through the indoor heat exchanger at a desired timing.

The present invention has been made to solve the above problem, and has an object to switch the direction in which refrigerant flows through the heat exchanger at a desired timing to improve the heat exchange capability of the heat exchanger without using the differential pressure of the refrigerant.

SOLUTION TO PROBLEM

A refrigeration cycle apparatus according to the present invention is as set forth in claim 1.

ADVANTAGEOUS EFFECTS OF INVENTION

The refrigeration cycle apparatus according to the present invention drives the motor by the controller, thereby switching the flow direction in which refrigerant flows through the heat exchanger. The flow direction can be switched at a desired timing because a differential pressure of the refrigerant is not required, thus improving the heat exchange capability of the heat exchanger. This can improve the performance of the refrigeration cycle apparatus.

BRIEF DESCRIPTION OF DRAWINGS

Fig. 1 shows a functional configuration of a refrigeration cycle apparatus according to Embodiment 1, as well as a flow of refrigerant in a heating mode.
Fig. 2 shows a schematic configuration of a switch valve of Fig. 1.
Fig. 3 shows the functional configuration of the refrigeration cycle apparatus according to Embodiment 1, as well as a flow of refrigerant in a cooling mode.
Fig. 4 shows a functional configuration of a refrigeration cycle apparatus according to Embodiment 2, as well as a flow of refrigerant when a flow direction of the refrigerant flowing through a heat exchanger functioning as an evaporator in the cooling mode is a counterflow.
Fig. 5 is a P-h diagram showing a relationship between pressure and enthalpy of non-azeotropic refrigerant mixture in the refrigeration cycle apparatus of Fig. 4.
Fig. 6 shows changes in the temperature of the refrigerant and changes in the temperature of the air when the direction of the refrigerant flowing through a heat exchanger functioning as an evaporator is a counterflow in the course of condensation shown in Fig. 5.
Fig. 7 shows changes in the temperature of the refrigerant and changes in the temperature of the air when the direction of the refrigerant flowing through a heat exchanger functioning as an evaporator is a parallel flow in the course of condensation shown in Fig. 5.
Fig. 8 is a P-h diagram when a pressure loss in the course of condensation in the P-h diagram of Fig. 5 is greater than that in the case shown in Fig. 5 due to, for example, an increase in the drive frequency of a compressor.
Fig. 9 shows changes in the temperature of the refrigerant and changes in the temperature of the air when the direction of the refrigerant flowing through a heat exchanger functioning as an evaporator is a counterflow in the course of condensation shown in Fig. 8.
Fig. 10 shows changes in the temperature of the refrigerant and changes in the temperature of the air when the direction of the refrigerant flowing through a heat exchanger functioning as an evaporator is a parallel flow in the course of condensation shown in Fig. 8.
Fig. 11 shows a functional configuration of a refrigeration cycle apparatus 2 according to Embodiment 2, as well as a flow of refrigerant when the flow direction of the refrigerant flowing through a heat exchanger in the cooling mode is a parallel flow.
Fig. 12 is a flowchart showing an example process performed by a controller of Fig. 4 in order to switch the flow direction of the refrigerant flowing through a heat exchanger functioning as an evaporator in the cooling mode.
Fig. 13 is a flowchart showing another example process performed by the controller of Fig. 4.
Fig. 14 is a time chart showing changes in the drive frequency of the compressor of Fig. 4.
Fig. 15 shows the functional configuration of the refrigeration cycle apparatus according to Embodiment 2, as well as a flow of refrigerant in the heating mode.
Fig. 16 shows a functional configuration of a refrigeration cycle apparatus according to Modification 1 of Embodiment 2, as well as a flow of refrigerant when the flow direction of the refrigerant flowing through a heat exchanger in the cooling mode is a counterflow.
Fig. 17 shows the functional configuration of the refrigeration cycle apparatus according to Modification 1 of Embodiment 2, as well as a flow of refrigerant when the direction of the refrigerant flowing through a heat exchanger functioning as an evaporator in the cooling mode is a parallel flow.
Fig. 18 shows the functional configuration of the refrigeration cycle apparatus according to Modification 1 of Embodiment 2, as well as a flow of refrigerant in the heating mode.
Fig. 19 shows a functional configuration of a refrigeration cycle apparatus according to Modification 2 of Embodiment 2, as well as a flow of refrigerant when the direction of the refrigerant flowing through a heat exchanger functioning as an evaporator in the cooling mode is a counterflow.

Fig. 20 shows the functional configuration of the refrigeration cycle apparatus according to Modification 2 of Embodiment 2, as well as a flow of refrigerant when the direction of the refrigerant flowing through a heat exchanger in the cooling mode is a parallel flow.

Fig. 21 shows the functional configuration of the refrigeration cycle apparatus according to Modification 2 of Embodiment 2, as well as a flow of refrigerant in the heating mode.

Fig. 22 shows a functional configuration of a refrigeration cycle apparatus according to Embodiment 3, as well as a flow of refrigerant when the flow direction of the refrigerant flowing through a heat exchanger functioning as an evaporator in the heating mode is a counterflow.

Fig. 23 shows the functional configuration of refrigeration cycle apparatus 3 of Fig. 22, as well as a flow of refrigerant when the flow direction of the refrigerant flowing through a heat exchanger functioning as an evaporator in the heating mode is a parallel flow.

Fig. 24 is a flowchart showing an example flow of a process performed by a controller of Fig. 22 in order to switch the flow direction of the refrigerant flowing through a heat exchanger functioning as an evaporator in the heating mode.

Fig. 25 shows the functional configuration of the refrigeration cycle apparatus of Fig. 22, as well as a flow of refrigerant when the flow direction of the refrigerant flowing through a heat exchanger functioning as an evaporator in the cooling mode is a counterflow.

Fig. 26 shows the functional configuration of the refrigeration cycle apparatus of Fig. 22, as well as a flow of refrigerant when the flow direction of the refrigerant flowing through a heat exchanger functioning as an evaporator in the cooling mode is a parallel flow.

Fig. 27 shows a functional configuration of a refrigeration cycle apparatus according to Embodiment 4.

Fig. 28 shows a functional configuration of a refrigeration cycle apparatus according to Modification 1 of Embodiment 4.

Fig. 29 shows a functional configuration of a refrigeration cycle apparatus according to Modification 2 of Embodiment 4.

Fig. 30 shows a functional configuration of a refrigeration cycle apparatus according to Modification 3 of Embodiment 4.

Fig. 31 shows a functional configuration of a refrigeration cycle apparatus according to Modification 4 of Embodiment 4.

Fig. 32 shows a functional configuration of a refrigeration cycle apparatus according to Embodiment 5, as well as a flow of refrigerant in the cooling mode.

Fig. 33 shows the functional configuration of the refrigeration cycle apparatus according to Embodiment 5, as well as a flow of refrigerant in the heating mode.

Fig. 34 shows a functional configuration of a refrigeration cycle apparatus according to a modification of Embodiment 5.

Fig. 35 shows a functional configuration of a refrigeration cycle apparatus according to Embodiment 6, as well as a flow of refrigerant in an all-heating mode.

Fig. 36 shows the functional configuration of the refrigeration cycle apparatus according to Embodiment 6, as well as a flow of refrigerant in an all-cooling mode.

Fig. 37 shows the functional configuration of the refrigeration cycle apparatus according to Embodiment 6, as well as a flow of refrigerant in a heating-dominant mode.

Fig. 38 shows the functional configuration of the refrigeration cycle apparatus according to Embodiment 6, as well as a flow of refrigerant in a cooling-dominant mode.

Fig. 39 shows a functional configuration of a refrigeration cycle apparatus according to Modification 1 of Embodiment 6.

Fig. 40 shows a functional configuration of a refrigeration cycle apparatus according to Modification 2 of Embodiment 6.

Fig. 41 shows a functional configuration of an outdoor unit of a refrigeration cycle apparatus according to Modification 3 of Embodiment 6, as well as a flow of refrigerant in the all-heating mode and the heating-dominant mode.

Fig. 42 shows the functional configuration of the outdoor unit of the refrigeration cycle apparatus according to Modification 3 of Embodiment 6, as well as a flow of refrigerant in the all-cooling mode and the cooling-dominant mode.

Fig. 43 shows a functional configuration of a refrigeration cycle apparatus according to Modification 4 of Embodiment 6, as well as a flow of refrigerant in the all-cooling mode.

Fig. 44 shows a functional configuration of a refrigeration cycle apparatus according to Embodiment 7, as well as a flow of refrigerant in the all-heating mode.

Fig. 45 shows the functional configuration of the refrigeration cycle apparatus according to Embodiment 7, as well as a flow of refrigerant in the all-cooling mode.

Fig. 46 shows the functional configuration of the refrigeration cycle apparatus according to Embodiment 7, as well as a flow of refrigerant in the heating-dominant mode.

Fig. 47 shows the functional configuration of the refrigeration cycle apparatus according to Embodiment 7, as well as a flow of refrigerant in the cooling-dominant mode.

Fig. 48 shows a functional configuration of an outdoor unit of a refrigeration cycle apparatus according to Modification 1 of Embodiment 7.

Fig. 49 shows a functional configuration of an outdoor unit of a refrigeration cycle apparatus according to Modification 2 of Embodiment 7.

Fig. 50 shows a functional configuration of an outdoor unit of a refrigeration cycle apparatus according to Modification 3 of Embodiment 7.

DESCRIPTION OF EMBODIMENTS

Embodiments of the present invention will be described below in detail with reference to the drawings. In the drawings, identical or corresponding parts are identically denoted.

Embodiment 1

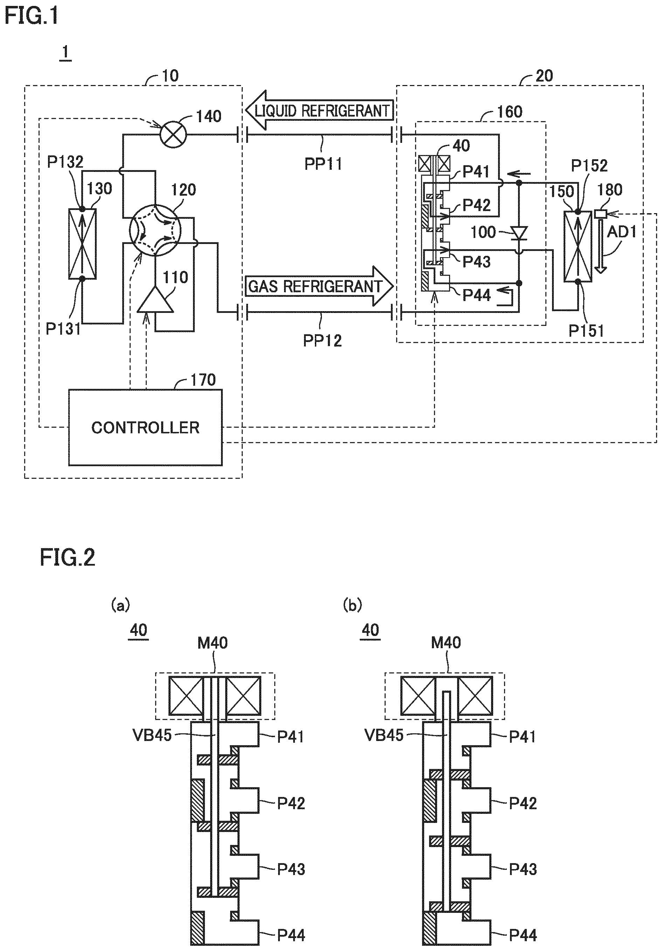

Fig. 1 shows a functional configuration of a refrigeration cycle apparatus 1 according to Embodiment 1, as well as a flow of refrigerant in a heating mode. The operation modes of refrigeration cycle apparatus 1 include the heating mode and a cooling mode. As shown in Fig. 1, refrigeration cycle apparatus 1 includes an outdoor unit 10 placed outdoors and an indoor unit 20 placed indoors. The outdoor unit accommodates a compressor 110, a six-way valve 120 that is a switch valve, a heat exchanger 130, an expansion valve 140, and a controller 170. Indoor unit 20 accommodates a flow path switching unit 160, a heat exchanger 150, and an indoor fan 180. Outdoor unit 10 and indoor unit 20 are connected to each other by a pipe PP11 and a pipe PP12.

In the heating mode, refrigerant circulates in the order of compressor 110, six-way valve 120, pipe PP12, flow path switching unit 160, heat exchanger 150, flow path switching unit 160, pipe PP11, expansion valve 140, six-way valve 120, heat exchanger 130, and six-way valve 120. In the heating mode, refrigerant in a liquid state (liquid refrigerant) flows through pipe PP11, and gaseous refrigerant (gas refrigerant) flows through pipe PP12.

Compressor 110 adiabatically compresses low-pressure gas refrigerant and discharges high-pressure gas refrigerant.

In the heating mode, six-way valve 120 connects a discharge port of compressor 110 with pipe PP12. Six-way valve 120 connects expansion valve 140 with heat exchanger 130. Six-way valve 120 connects heat exchanger 130 with a suction port of compressor 110. Six-way valve 120 may be a differential-pressure-driven switch valve; however, the differential-pressure-driven switch valve switches a flow of refrigerant instantaneously, which may easily cause a water hammer phenomenon in which refrigerant strikes against a pipe. For this reason, similarly to a switch valve 40 of flow path switching unit 160, which will be described below, six-way valve 120 is also desirably a motor-driven switch valve electric-controlled by controller 170. Six-way valve 120 may have a configuration obtained by combining a four-way valve and a Lorenz cycle having a combination of four check valves (or four on-off valves).

Heat exchanger 150 includes ports P151 and P152. Each of ports P151 and P152 is connected to flow path switching unit 160. Heat exchanger 150 functions as a condenser in the heating mode. The gas refrigerant from compressor 110 releases the heat of condensation and condenses in heat exchanger 150, thus turning into liquid refrigerant.

Indoor fan 180 forms an air flow direction AD1 of air subjected to heat exchange by heat exchanger 150. Indoor fan 180 corresponds to a fluid moving unit of the present invention.

Flow path switching unit 160 is connected between expansion valve 140 and heat exchanger 150. Flow path switching unit 160 is connected between heat exchanger 150 and compressor 110. Flow path switching unit 160 is controlled by controller 170 to switch the direction in which refrigerant flows through heat exchanger 150 between a direction from port P151 toward port P152 and a direction from port P152 toward port P151. The direction from port P151 toward port P152 is a direction (counterflow) opposed to air flow direction AD1. The direction from port P152 toward port P151 is a direction (parallel flow) along air flow direction AD1.

Flow path switching unit 160 includes switch valve 40 and a check valve 100. Fig. 2 shows a schematic configuration of switch valve 40. As shown in Fig. 2, switch valve 40 includes a plurality of valve ports P41 to P44, a valve body VB45, and a motor M40. Valve body VB45 engages with a screw mechanism (not shown). The communication state of valve ports P41 to P44 in switch valve 40 is switched depending on the position of valve body VB45. Motor M40 rotates valve body VB45, where the central axis extending longitudinally of valve body VB45 is the axis of rotation. The rotational motion of valve body VB45 is converted to a linear motion by the screw mechanism (not shown). Valve body VB45 moves between the position shown in Fig. 2(a) and the position shown in Fig. 2(b). When valve body VB45 is located at the position shown in Fig. 2(a), valve ports P41 and P42 are in communication with each other, and valve ports P43 and P44 are in communication with each other. When valve body VB45 is located at the position shown in Fig. 2(b), valve ports P42 and P43 are in communication with each other.

Referring again to Fig. 1, check valve 100 is connected between port P152 and pipe PP12. Valve port P41 is connected to port P152. Valve port P42 is connected to pipe PP11 that is a flow path between expansion valve 140 and flow path switching unit 160. Valve port P43 is connected to port P151. Valve port P44 is connected to pipe PP12 that is a flow path between compressor 110 and flow path switching unit 160.

In the heating mode, valve ports P41 and P42 are in communication with each other in switch valve 40. Valve ports P43 and P44 are in communication with each other in switch valve 40. The refrigerant from pipe PP12 flows through switch valve 40 from valve port P44 toward valve port P43 and reaches port P151 of heat exchanger 150. The refrigerant flows through heat exchanger 150 from port P151 toward port P152. The refrigerant from port P152 flows through switch valve 40 from valve port P41 toward valve port P42, and then, reaches expansion valve 140 via pipe PP11.

Expansion valve 140 adiabatically inflates liquid refrigerant to decompress the liquid refrigerant, thereby flowing the liquid refrigerant as refrigerant in the gas-liquid two-phase state (wet steam). Expansion valve 140 may be, for example, an electronic-controlled expansion valve (LEV: linear expansion valve).

Heat exchanger 130 includes ports P131 and P132. Each of ports P131 and P132 is connected to six-way valve 120. In the heating mode, port P131 is connected to expansion valve 140. In the heating mode, port P132 is connected to the suction port of compressor 110. Heat exchanger 130 functions as an evaporator in the heating mode. In heat exchanger 130, the wet steam from expansion valve 140 absorbs the heat of vaporization from the outside air to vaporize.

Controller 170 switches the operation mode of refrigeration cycle apparatus 1. Controller 170 controls the drive frequency of compressor 110 to control an amount of the refrigerant discharged from compressor 110 per unit time. Controller 170 controls six-way valve 120 to switch the direction of circulation of refrigerant to a direction of circulation corresponding to each of the heating mode and the cooling mode. Controller 170 controls the degree of opening of expansion valve 140. Controller 170 controls the amount of blowing of indoor fan 180 per unit time. In order to increase the heat exchange capability of heat exchanger 150, controller 170 controls motor M40 of switch valve 40 to set the direction in which refrigerant flows through heat exchanger 150 to a counterflow in both of the heating mode and the cooling mode. Controller 170 may be disposed in indoor unit 20 or disposed other than in outdoor unit 10 and indoor unit 20.

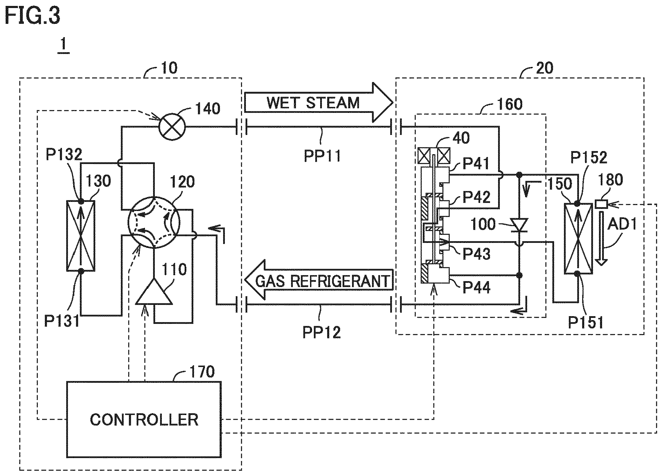

Fig. 3 shows the functional configuration of refrigeration cycle apparatus 1 according to Embodiment 1, as well as a flow of refrigerant in the cooling mode. As shown in Fig. 3, in the cooling mode, refrigerant circulates in the order of compressor 110, six-way valve 120, heat exchanger 130, six-way valve 120, expansion valve 140, pipe PP11, flow path switching unit 160, heat exchanger 150, flow path switching unit 160, pipe PP12, and six-way valve 120. In the cooling mode, wet steam flows through pipe PP11, and gas refrigerant flows through pipe PP12.

In the cooling mode, valve ports P42 and P43 are in communication with each other in switch valve 40. The refrigerant from pipe PP11 flows through switch valve 40 from valve port P42 toward valve port P43, and then, reaches port P151 of heat exchanger 150. The refrigerant flows through heat exchanger 150 from port P151 toward port P152. The refrigerant from port P152 flows through check valve 100, and then, reaches six-way valve 120 via pipe PP12.

In refrigeration cycle apparatus 1, six-way valve 120 disposed in outdoor unit 10 switches the direction of circulation of refrigerant to the direction of circulation corresponding to each of the heating mode and the cooling mode. In the heating mode, high-pressure refrigerant discharged from compressor 110 and low-pressure refrigerant from heat exchanger 130 functioning as an evaporator flow through six-way valve 120. In the cooling mode, high-pressure refrigerant discharged from compressor 110 and low-pressure refrigerant from heat exchanger 150 functioning as an evaporator flow through six-way valve 120. In other words, in both of the heating mode and the cooling mode, high-pressure refrigerant discharged from compressor 110 and low-pressure refrigerant from the heat exchanger functioning as an evaporator flow through six-way valve 120. In six-way valve 120, a sufficient amount of differential pressure of refrigerant can be achieved. Even when six-way valve 120 is a switch valve driven by differential pressure, six-way valve 120 can switch the direction of circulation of refrigerant at a desired timing.

As to switch valve 40 disposed in indoor unit 20, in the heating mode, high-pressure refrigerant from compressor 110 and high-pressure refrigerant from heat exchanger 150 functioning as a condenser flow through switch valve 40. In the cooling mode, low-pressure refrigerant from expansion valve 140 and low-pressure refrigerant from heat exchanger 150 functioning as an evaporator flow through switch valve 40. The differential pressure of the refrigerant that can be achieved in switch valve 40 is approximately a pressure loss occurring when the refrigerant flows through heat exchanger 150 or the like. When switch valve 40 is a differential-pressure-driven switch valve, switch valve 40 cannot operate until the pressure loss reaches a differential pressure required for the switch valve to operate. Thus, the differential-pressure-driven switch valve may fail to switch the direction in which the refrigerant flows through heat exchanger 150 at a desired timing.

In Embodiment 1, thus, switch valve 40 driven by a motor is used. Referring again to Fig. 2, valve body VB45 is moved by motor M40 in switch valve 40. The communication state of valve ports P41 to P44 in switch valve 40 can be switched depending on the position of valve body VB45. Switch valve 40 does not need a differential pressure of refrigerant to switch the communication state of valve ports P41 to P44. Refrigeration cycle apparatus 1 can accordingly switch the direction in which refrigerant flows through heat exchanger 150 at a desired timing, thereby improving the heat exchange capability of heat exchanger 150. Consequently, the performance of refrigeration cycle apparatus 1 can be improved. A non-limiting example of the performance of refrigeration cycle apparatus 1 is a coefficient of performance (COP).

Referring to Figs. 1 and 3, the refrigerant flowing through pipe PP11 is liquid refrigerant in the heating mode and is wet steam in the cooling mode. Contrastingly, the refrigerant flowing through pipe PP12 is gas refrigerant in both of the heating mode and the cooling mode. The gas refrigerant has a density of refrigerant which is smaller than that of liquid refrigerant, which may easily lead to a larger pressure loss when the gas refrigerant flows through a pipe. When the gas refrigerant flows through both of pipes PP11 and PP12, the diameters of both of pipes PP11 and PP12 need to be increased to reduce a pressure loss. Increasing the diameters of pipes PP11 and PP12, however, increases an amount of the refrigerant circulating through refrigeration cycle apparatus 1. Thus, when gas refrigerant flows through both of pipes PP11 and PP12, the cost of manufacturing refrigeration cycle apparatus 1 and the cost required for operating the refrigeration cycle apparatus (operational cost) increase. In refrigeration cycle apparatus 1, a pipe through which gas refrigerant flows is pipe PP12. This eliminates the need for increasing the diameter of pipe PP11, and accordingly, the pressure loss can be reduced by increasing the diameter of pipe PP12. Refrigeration cycle apparatus 1 can reduce an increase in pipe cost associated with the reduction in pressure loss and an increase in an amount of refrigerant. Consequently, the manufacturing cost and operational cost of refrigeration cycle apparatus 1 can be reduced.

As described above, Embodiment 1 can switch the direction in which the refrigerant flows through a heat exchanger at a desired timing with the use of a motor-driven switch valve, thus improving the heat exchange capability of the heat exchanger. This improves the performance of the refrigeration cycle apparatus.

Embodiment 2

Embodiment 1 has described the case in which the direction in which refrigerant flows through the heat exchanger accommodated in the indoor unit is a counterflow in both of the heating mode and the cooling mode. When the refrigerant is non-azeotropic refrigerant mixture, a counterflow may rather reduce the heat exchange capability of the heat exchanger. Embodiment 2 will describe a case in which the direction in which refrigerant flows through the heat exchanger is switched between counterflow and parallel flow when the heat exchanger performance of the heat exchanger decreases. In Embodiment 2, temperature sensors are shown near indoor fan 180 shown in Fig. 1 or the like of Embodiment 1. For easy understanding of the drawings, Embodiment 2 does not show a fan such as indoor fan 180 that forms a flow of the air subjected to heat exchange with refrigerant in the heat exchanger. The same holds true for Embodiment 3 and thereafter.

Embodiment 2 differs from Embodiment 1 in that control is performed to switch the direction in which refrigerant flows through a heat exchanger in the cooling mode between counterflow and parallel flow. The other features are similar to those of Embodiment 1, description of which will not be repeated.

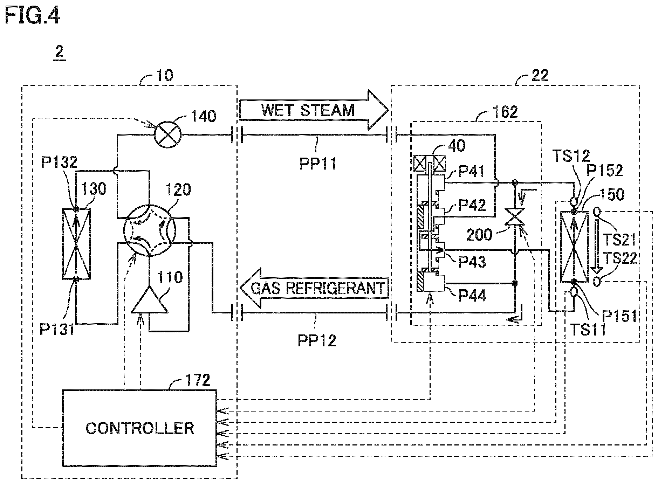

Fig. 4 shows a functional configuration of a refrigeration cycle apparatus 2 according to Embodiment 2, as well as a flow of refrigerant when the flow direction of the refrigerant flowing through heat exchanger 150 in the cooling mode is a counterflow. The refrigerant circulating through refrigeration cycle apparatus 2 is non-azeotropic refrigerant mixture. As non-azeotropic refrigerant mixture, for example, R32 is contained as low-boiling refrigerant, and R1234yf is contained as another refrigerant. The non-azeotropic refrigerant mixture used in refrigeration cycle apparatus 1 may contain R1123 or R1234ze for reduced global warming potential (GWP). The non-azeotropic refrigerant mixture used in refrigeration cycle apparatus 1 may contain three or more types of refrigerant.

As shown in Fig. 4, refrigeration cycle apparatus 2 further includes temperature sensors TS11, TS12, TS21, and TS22 in addition to the configuration of refrigeration cycle apparatus 1. In refrigeration cycle apparatus 2, controller 170 of refrigeration cycle apparatus 1 is replaced by a controller 172. In refrigeration cycle apparatus 2, flow path switching unit 160 of refrigeration cycle apparatus 1 is replaced by a flow path switching unit 162. In flow path switching unit 162, check valve 100 of flow path switching unit 160 is replaced by an on-off valve 200. In Fig. 4, on-off valve 200 is opened.

On-off valve 200 needs to operate within an indoor unit 22 that cannot achieve a sufficient amount of differential pressure of refrigerant, and accordingly, is desirably an on-off valve that moves a valve body by a motor and a screw mechanism similarly to switch valve 40. On-off valve 200 may be, for example, a solenoid valve that moves the valve body by moving a piece of iron (plunger) by an electromagnet (solenoid).

Temperature sensor TS11 is disposed in a pipe near port P151. Temperature sensor TS11 measures the temperature of the refrigerant flowing through port P151 and outputs the temperature to controller 172. Temperature sensor TS12 is disposed in a pipe near port P152. Temperature sensor TS12 measures the temperature of the refrigerant flowing through port P152 and outputs the temperature to controller 172.

Temperature sensor TS21 is disposed near port P152. Temperature sensor TS21 measures the temperature of the air subjected to heat exchange with the refrigerant flowing through port P152 and outputs the temperature to controller 172. Temperature sensor TS22 is disposed near port P151. Temperature sensor TS22 measures the temperature of the air subjected to heat exchange with the refrigerant flowing through port P151 and outputs the temperature to controller 172.

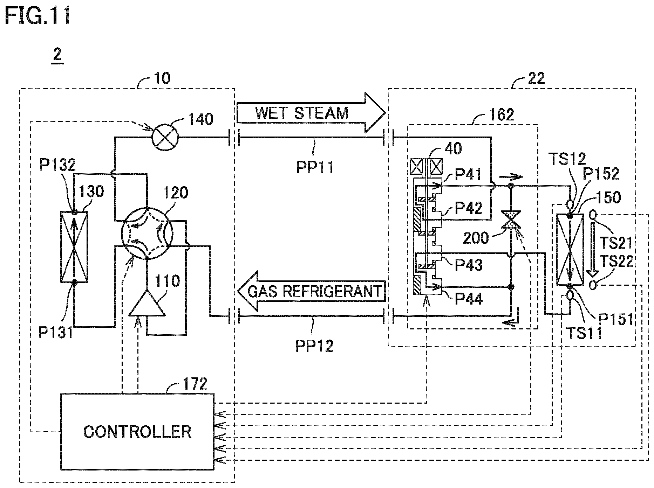

Controller 172 receives the temperatures from temperature sensors TS11, TS12, TS21, and TS22 and switches the direction in which the refrigerant flows through heat exchanger 150 between counterflow and parallel flow. The process performed in controller 172 will be described below in detail with reference to Fig. 11.

When the flow direction of the refrigerant flowing through heat exchanger 150 in the cooling mode is a counterflow, valve ports P42 and P43 are in communication with each other in switch valve 40. The refrigerant from pipe PP11 flows through switch valve 40 from valve port P42 toward valve port P43, and then, reaches port P151 of heat exchanger 150. The refrigerant flows through heat exchanger 150 from port P151 toward port P152. The refrigerant from port P152 flows through on-off valve 200, and then, reaches six-way valve 120 via pipe PP12.

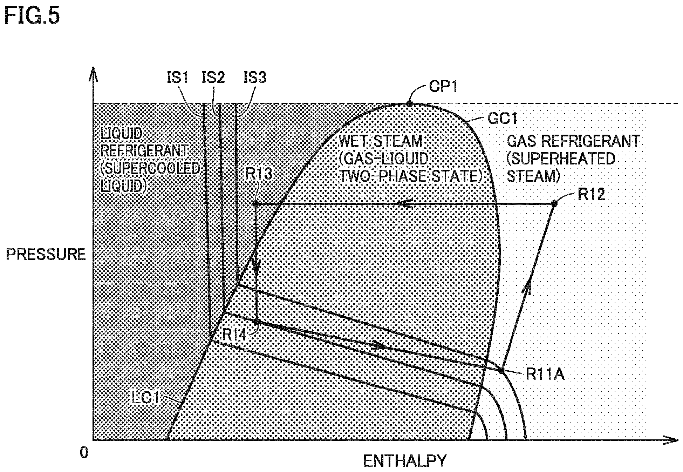

The reason why a switch is made between counterflow and parallel flow in the cooling mode will be described with reference to Figs. 5 to 10. Fig. 5 is a P-h diagram showing a relationship between the pressure and enthalpy of non-azeotropic refrigerant mixture in refrigeration cycle apparatus 2 of Fig. 4. In Fig. 5, a curve LC1 is a saturation liquid line. A curve GC1 is a saturation vapor line. A point CP1 is a critical point. Curves IS1, IS2, and IS3 are isotherms of temperatures T1, T2, and T3 (T1<T2<T3), respectively.

Critical point CP1 is a point indicating a limit of the range in which a phase change may occur between liquid refrigerant and gas refrigerant. The critical point is a point of intersection of saturation liquid line LC1 and saturation vapor line GC1. When the pressure of the refrigerant becomes higher than the pressure at critical point CP1, no phase change occurs between liquid refrigerant and gas refrigerant. In a region in which enthalpy is lower than that of saturation liquid line LC1, the refrigerant is liquid. In a region sandwiched between saturation liquid line LC1 and saturation vapor line GC1, the refrigerant is wet steam. In a region in which enthalpy is higher than that of saturation vapor line GC1, the refrigerant is gas.

In Fig. 5, the circulation of the refrigerant in refrigeration cycle apparatus 2 is shown as a cycle starting from a state R11A through states R12, R13, and R14 and returning to state R11A. A state change from state R11A to state R12A indicates the course of compression of refrigerant by compressor 110. A state change from state R12 to state R13 indicates the course of condensation of refrigerant by heat exchanger 130. A state change from state R13 to state R14 indicates the course of adiabatical inflation of refrigerant by expansion valve 140. A state change from state R14 to state R11A indicates the course of evaporation of refrigerant by heat exchanger 150. State R14 corresponds to the state of the refrigerant flowing through port P151 of heat exchanger 150 in Fig. 4. State R11A corresponds to the state of the refrigerant flowing through port P152.

As indicated by isotherms IS1 to IS3 of Fig. 5, the pressure of wet steam of non-azeotropic refrigerant mixture decreases with an increase in enthalpy at a constant temperature. In the course of condensation from state R14 to state R11A, a pressure loss occurs in heat exchanger 150. The pressure of refrigerant in state R11A is thus smaller than the pressure of refrigerant in state R14.

It is assumed here that state R14 is on isotherm IS2 and state R11A is on isotherm IS3. The temperature of the refrigerant in state R14 is temperature T2, and the temperature of the refrigerant in state R11A is temperature T3 (>T2).

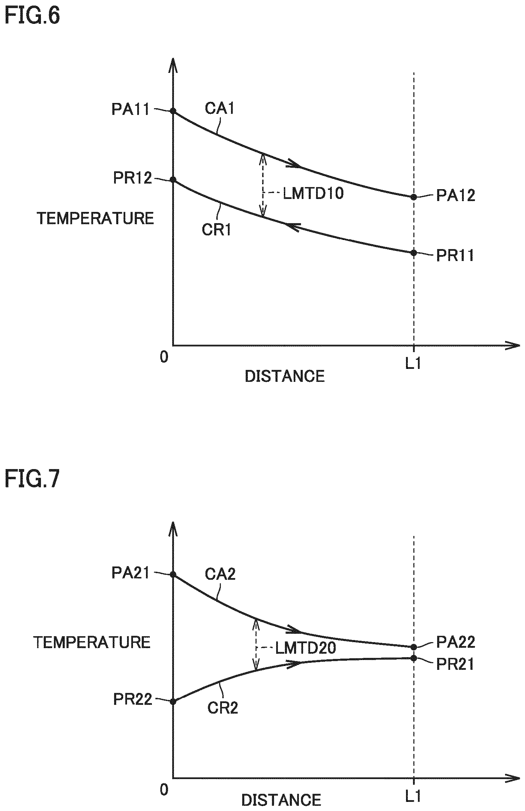

Fig. 6 shows changes in the temperature of the refrigerant and changes in the temperature of the air when the direction of the refrigerant flowing through heat exchanger 150 functioning as an evaporator is a counterflow in the course of evaporation shown in Fig. 5. In Fig. 6, a curve CA1 indicates a relationship between a distance from temperature sensor TS21 along air flow direction AD1 and the temperature of the air at the relevant distance. A curve CR1 indicates the relationship between a distance from temperature sensor TS12 along air flow direction AD1 and the temperature of refrigerant. A temperature difference LMTD10 indicates a logarithmic mean temperature difference (LMTD). Logarithmic mean temperature difference LMTD10 is calculated from a difference between the temperature of the air (the temperature at point PA11) and the temperature of the refrigerant (the temperature at point PR12) which are subjected to heat exchange at a point with a distance 0, and a difference between the temperature of the air (temperature at point PA12) and the temperature of the refrigerant (temperature at point PR11) subjected to heat exchange at a point with a distance LI.

Referring to Figs. 4 to 6, point PA11 indicates the position and temperature of the air whose temperature is measured by temperature sensor TS21. In other words, the temperature at point PA11 indicates the position and temperature of the air near port P152, which is subjected to heat exchange with the refrigerant flowing through port P152. Point PA12 indicates the position and temperature of the air whose temperature is measured by temperature sensor TS22. In other words, point PA12 indicates the position and temperature of the air near port P151, which is subjected to heat exchange with the refrigerant flowing through port P151.

Point PR11 indicates the position and temperature of the refrigerant whose temperature is measured by temperature sensor TS11. In other words, point PR11 indicates the position and temperature of the refrigerant flowing through port P151 and indicates the position and temperature of the refrigerant corresponding to state R14 of Fig. 5. Point PR12 of Fig. 6 indicates the position and temperature of the refrigerant whose temperature is measured by temperature sensor TS12. In other words, point PR12 indicates the position and temperature of the refrigerant flowing through port P152 and indicates the position and temperature of refrigerant corresponding to state R11A of Fig. 5.

Fig. 7 shows changes in the temperature of the refrigerant and changes in the temperature of the air when the direction of the refrigerant flowing through heat exchanger 150 functioning as an evaporator is a parallel flow in the course of evaporation shown in Fig. 5. In Fig. 7, curves CA2 and CR2 correspond to curves CA1 and CR1 of Fig. 6, respectively. Points PA21, PA22, PR21, and PR22 correspond to points PA11, PA12, PR11, and PR12 of Fig. 6, respectively. A temperature difference LMTD20 indicates a logarithmic mean temperature difference. Logarithmic mean temperature difference LMTD20 is calculated from a difference between the temperature of the air (the temperature at point PA21) and the temperature of the refrigerant (the temperature at point PR22) which are subjected to heat exchange at a point with a distance 0, and a difference between the temperature of the air (the temperature at point PA22) and a temperature of the refrigerant (the temperature at point PR21) which are subjected to heat exchange at a point with a distance LI.

Referring to Figs. 5 to 7, a start temperature T2 in the course of evaporation (the temperature in state R14) is lower than an end temperature T3 in the course of evaporation (the temperature in state R11A). As described above, when the start temperature is lower than the end temperature in the course of evaporation, logarithmic mean temperature difference LMTD10 of a counterflow is greater than logarithmic mean temperature difference LMTD20 of a parallel flow. The heat exchange capability of heat exchanger 150 increases as the logarithmic mean temperature difference increases. When the start temperature is lower than the end temperature in the course of evaporation, thus, the heat exchange capability of heat exchanger 150 functioning as an evaporator is greater when the flow direction of the refrigerant is a counterflow than when it is a parallel flow.

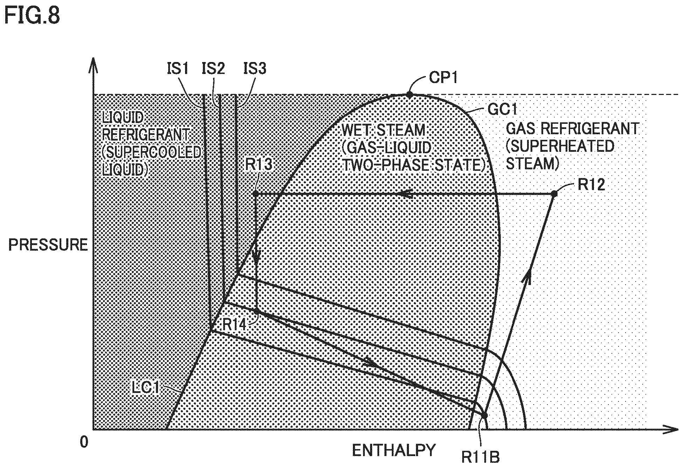

Fig. 8 is a P-h diagram when a pressure loss in the course of evaporation in the P-h diagram of Fig. 5 is greater than that in the case shown in Fig. 5 due to, for example, an increase in the drive frequency of compressor 110. In Fig. 8, a pressure loss in the course of evaporation is greater than that in the case shown in Fig. 5, and accordingly, a state R11B, which is the state at the end of the course of evaporation, is a state in which pressure is smaller than that of state R11A. It is assumed here that state R11B is on isotherm IS1. The temperature in state R11B is temperature T1 (<T2).

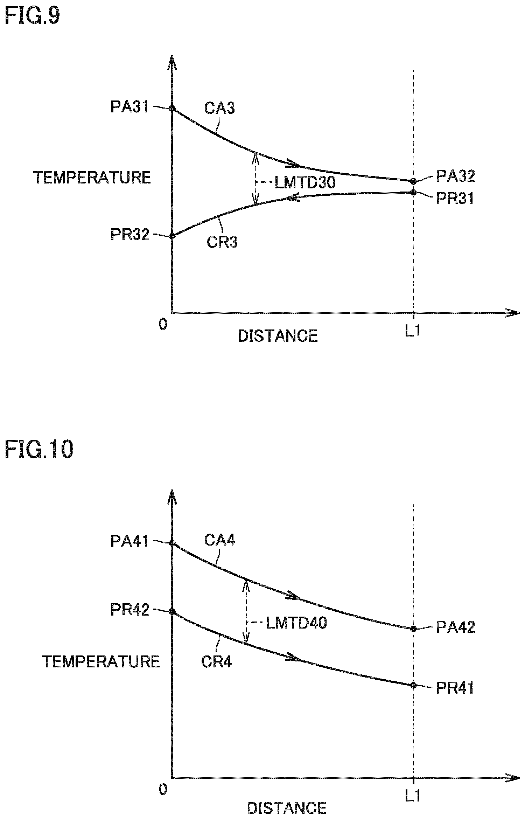

Fig. 9 shows changes in the temperature of the refrigerant and changes in the temperature of the air when the direction of the refrigerant flowing through heat exchanger 150 functioning as an evaporator is a counterflow in the course of evaporation shown in Fig. 8. In Fig. 9, curves CA3 and CR3 correspond to curves CA1 and CR1 of Fig. 6, respectively. Points PA31, PA32, PR31, and PR32 correspond to points PA11, PA12, PR11, and PR12 of Fig. 6, respectively. A temperature difference LMTD30 indicates a logarithmic mean temperature difference. Logarithmic mean temperature difference LMTD30 is calculated from a difference between the temperature of the air (the temperature at point PA31) and the temperature of the refrigerant (the temperature at point PR32) which are subjected to heat exchange at a point with a distance 0, and a difference between the temperature of the air (the temperature at point PA32) and the temperature of the refrigerant (the temperature at point PR31) which are subjected to heat exchange at a position with a distance LI.

Fig. 10 shows changes in the temperature of the refrigerant and changes in the temperature of the air when the direction of the refrigerant flowing through heat exchanger 150 functioning as an evaporator is a parallel flow in the course of evaporation shown in Fig. 8. In Fig. 10, curves CA4 and CR4 correspond to curves CA1 and CR1 of Fig. 6, respectively. Points PA41, PA42, PR41, and PR42 correspond to points PA11, PA12, PR11, and PR12 of Fig. 6, respectively. A temperature difference LMTD40 indicates a logarithmic mean temperature difference. Logarithmic mean temperature difference LMTD40 is calculated from a difference between the temperature of the air (the temperature at point PA41) and the temperature of the refrigerant (the temperature at point PR42) which are subjected to heat exchange at a point with a distance 0, and a difference between the temperature of the air (the temperature at point PA42) and the temperature of the refrigerant (the temperature at point PR41) which are subjected to heat exchange at a point with a distance LI.

Referring to Figs. 8 to 10, start temperature T2 (the temperature in state R14) in the course of evaporation is higher than end temperature T1 (the temperature in state R11A) in the course of evaporation. When the start temperature is higher than the end temperature in the course of evaporation as described above, logarithmic mean temperature difference LMTD30 of a counterflow is smaller than logarithmic mean temperature difference LMTD40 of a parallel flow. When the start temperature is higher than the end temperature in the course of evaporation, thus, the heat exchange capability of heat exchanger 150 functioning as an evaporator is greater when the flow direction of the refrigerant is a parallel flow than when it is a counterflow.

In summary, when the start temperature is lower than the end temperature in the course of evaporation, the heat exchange capability of heat exchanger 150 functioning as an evaporator is greater when the direction of the refrigerant flowing through heat exchanger 150 is a counterflow than when it is a parallel flow. Contrastingly, when the start temperature is higher than the end temperature in the course of evaporation, the heat exchange capability of heat exchanger 150 is greater when the direction of the refrigerant flowing through heat exchanger 150 is a parallel flow than when it is a counterflow. In Embodiment 2, thus, in the cooling mode, the flow direction of the refrigerant flowing through heat exchanger 150 is a counterflow when the start temperature is smaller than the end temperature in the course of evaporation, and this flow direction is a parallel flow when the start temperature is equal to or higher than the end temperature in the course of evaporation.

Fig. 11 shows the functional configuration of refrigeration cycle apparatus 2 according to Embodiment 2, as well as a flow of the refrigerant when the flow direction of the refrigerant flowing through heat exchanger 150 in the cooling mode is a parallel flow. As shown in Fig. 11, when the flow direction of the refrigerant flowing through heat exchanger 150 in the cooling mode is a parallel flow, on-off valve 200 is closed. Valve ports P41 and P42 are in communication with each other in switch valve 40. Valve ports P43 and P44 are in communication with each other in switch valve 40. The refrigerant from pipe PP12 flows through switch valve 40 from valve port P42 toward valve port P41, and then, reaches port P152 of heat exchanger 150. The refrigerant flows through heat exchanger 150 from port P152 toward port P151. The refrigerant from port P151 flows through switch valve 40 from valve port P43 toward valve port P44, and then, reaches six-way valve 120 via pipe PP12.

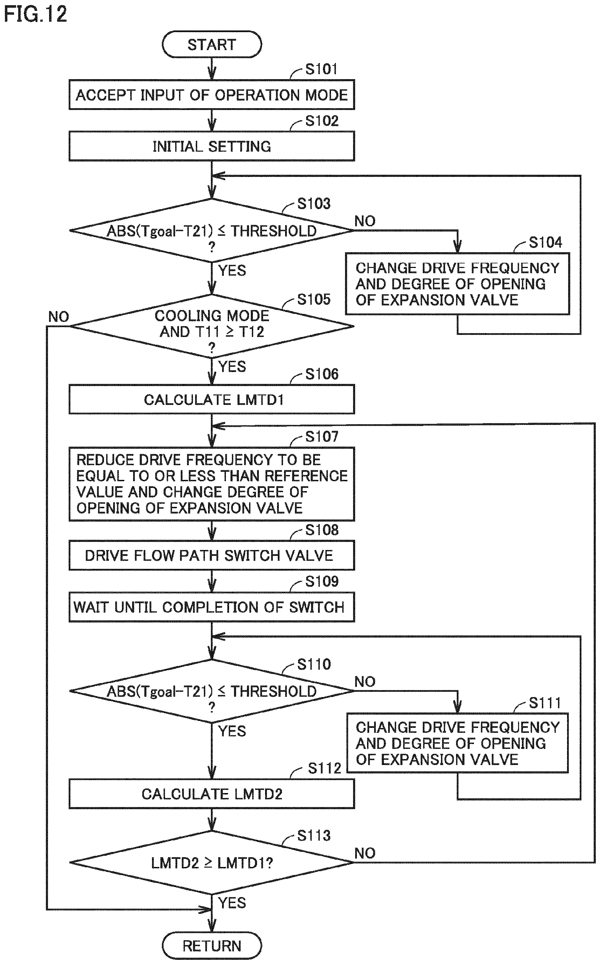

Fig. 12 is a flowchart showing an example process performed by controller 172 of Fig. 4 in order to switch the flow direction of the refrigerant flowing through heat exchanger 150 functioning as an evaporator in the cooling mode. The process shown in Fig. 12 is called by a main routine (not shown) when a user inputs the operation mode. A step is merely referred to as S below.

As shown in Fig. 12, controller 172 accepts an input of the operation mode from the user at S101 and advances the process to S102. Controller 172 performs an initial setting at S102. Specifically, at S102, for example, controller 172 sets a target temperature Tgoal, obtains a room temperature at start of the operation, sets the flow direction of the refrigerant flowing through heat exchanger 150 of the indoor unit, sets the drive frequency of compressor 110, and sets the degree of opening of expansion valve 140. The flow direction of the refrigerant flowing through heat exchanger 150 is set to a counterflow at start of the operation in both of the cooling mode and the heating mode. A temperature T21 obtained from temperature sensor TS21 is set as room temperature. A temperature T22 obtained from temperature sensor TS22 may be set as room temperature.

After initial setting at S102, controller 172 advances the process to S103. At S103, controller 172 determines whether the absolute value of the difference between target temperature Tgoal and temperature T21 (room temperature) is equal to or less than a threshold. If the absolute value of the difference between target temperature Tgoal and temperature T21 is greater than the threshold (NO at S103), at S104, controller 172 changes the drive frequency of compressor 110 and the degree of opening of expansion valve 140 so as to make the room temperature closer to target temperature Tgoal. Specifically, when target temperature Tgoal is higher than temperature T21, controller 172 increases the drive frequency by a given number. When target temperature Tgoal is lower than temperature T21, controller 172 reduces the drive frequency by the given number. The degree of opening of expansion valve 140 is reduced when the temperature of the refrigerant flowing between heat exchanger 150 and compressor 110 (e.g., the temperature of the refrigerant flowing out of heat exchanger 150 or the temperature of the refrigerant sucked by compressor 110) is lower than the saturated gas temperature, and the degree of opening of expansion valve 140 is increased when the temperature of the refrigerant flowing between heat exchanger 150 and compressor 110 is higher than the saturated gas temperature, thereby controlling expansion valve 140 to make the temperature of the refrigerant flowing between heat exchanger 150 and compressor 110 closer to the saturated gas temperature. Here, the saturated gas temperature is the temperature of gas refrigerant in an ideal state. While the apparatus is actually controlled and while the apparatus is operated as required, for wet steam, a degree of dryness X of wet steam is controlled to attain to a target value set in advance within the range of $0.85 < X < 1.00$. For gas refrigerant, a degree of superheat SH of gas refrigerant is controlled to attain to a target value set in advance within the range of $0 < SH < 20\deg$. Alternatively, expansion valve 140 may control not only the degree of dryness or the degree of superheat of the refrigerant sucked by compressor 110 but also the temperature of the refrigerant discharged from compressor 110 or a degree of supercooling SC of the refrigerant flowing out of the heat exchanger. After S104, controller 172 returns the process to S103. If the absolute value of the difference between target temperature Tgoal and temperature T21 is equal to or less than the threshold (YES at S103), controller 172 determines that the room temperature has nearly reached the target temperature, and then, advances the process to S105.

At S105, controller 172 determines whether the operation mode is the cooling mode and whether a temperature T11 obtained from temperature sensor TS11 is equal to or higher than a temperature T12 obtained from temperature sensor TS12. If the operation mode is the heating mode or if temperature T11 is lower than temperature T12 (NO at S105), controller 172 returns the process to the main routine while keeping the flow direction of the refrigerant flowing through heat exchanger 150 at a counterflow. If the operation mode is the cooling mode and if temperature T11 is equal to or higher than temperature T12 (YES at S105), controller 172 determines that the heat exchange capability of heat exchanger 150 has decreased due to a pressure loss of heat exchanger 150, and then, advances the process to S106.

At S106, controller 172 calculates a logarithmic mean temperature difference LMTD from Equations (1) to (3) below. The logarithmic mean temperature difference calculated at S106 is taken as LMTD1.

[Math 1]

$$\Delta T10 = T21 - T12 \qquad \cdots \ (1)$$

$$\Delta T20 = T22 - T11 \qquad \cdots \ (2)$$

$$LMTD = \frac{\Delta T10 - \Delta T20}{LN(\Delta T10 - \Delta T20)} \qquad \cdots \ (3)$$

After calculating logarithmic mean temperature difference LMTD1 at S106, controller 172 advances the process to S107. At S107, controller 172 reduces the drive frequency to be equal to or less than a reference value of compressor 110. At S107, compressor 110 may be stopped. Alternatively, controller 172 may perform control such that the degree of opening of expansion valve 140 attains to a target value (e.g., degree of superheat, discharge temperature, and degree of supercooling). After S107, controller 172 advances the process to S108.

At S108, controller 172 drives switch valve 40 of flow path switching unit 162 and advances the process to S109. Controller 172 waits until the communication state in switch valve 40 among valve ports P41 to P44 of switch valve 40 is switched at S109, and then, advances the process to S110.

At S110, controller 172 determines whether the absolute value of the difference between target temperature Tgoal and temperature T21 is equal to or less than the threshold. If the absolute value of the difference between target temperature Tgoal and temperature T21 is greater than the threshold (NO at S110), controller 172 changes the drive frequency of compressor 110 and the degree of opening of expansion valve 140 at S111 in order to make the room temperature closer to target temperature Tgoal, and then, returns the process to S110. If the absolute value of the difference between target temperature Tgoal and temperature T21 is equal to or less than the threshold (YES at S110), controller 172 determines that the room temperature has nearly reached the target temperature, and then, advances the process to S112.

Controller 172 calculates logarithmic mean temperature difference LMTD2 from Equations (1) to (3) above at S112, and then, advances the process to S113. At S113, controller 172 determines whether logarithmic mean temperature difference LMTD2 is equal to or greater than LMTD1. If logarithmic mean temperature difference LMTD2 is equal to or greater than LMTD1 (YES at S113), controller 172 returns the process to the main routine. If logarithmic mean temperature difference LMTD2 is smaller than LMTD1 (NO at S113), controller 172 returns the process to S107.

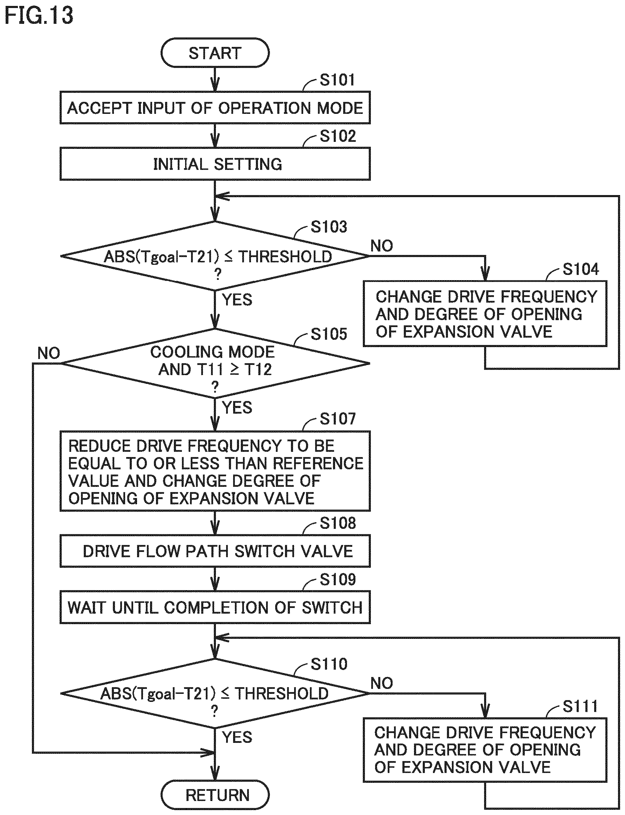

Fig. 13 is a flowchart showing another example process performed by controller 172 of Fig. 4. In the process shown in Fig. 12, controller 172 calculates each of the logarithmic mean temperature difference when the flow direction of the refrigerant flowing through heat exchanger 150 of indoor unit 20 is a counterflow and the logarithmic mean temperature difference when this direction is a parallel flow, and selects a flow direction with a greater logarithmic mean temperature difference. However, the logarithmic mean temperature difference always does not need to be calculated, and the flow direction of the refrigerant flowing through heat exchanger 150 may be switched in accordance with the magnitude relationship between temperature T11 of the refrigerant flowing through port P151 of heat exchanger 150 and temperature T12 of the refrigerant flowing through port P152. In the process in which no logarithmic mean temperature difference is used, the logarithmic mean temperature difference is not calculated though the accuracy, with which a decrease in the heat exchange capability of heat exchanger 150 is detected, decreases, thereby speeding up the process of switching between counterflow and parallel flow. Only one temperature sensor is required to detect room temperature, leading to a reduction in the manufacturing cost of refrigeration cycle apparatus 2.

As shown in Fig. 13, controller 172 performs the process similar to the process shown in Fig. 12 at S101 to S105. After S105, controller 172 performs the process similar to the process shown in Fig. 12 at S107 to S111.

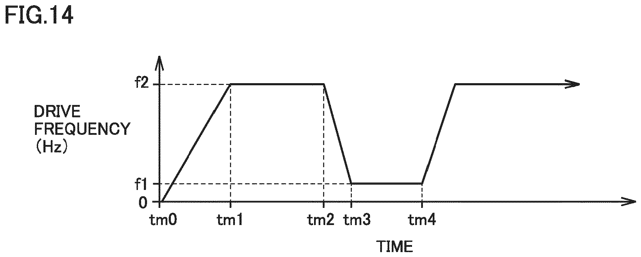

Fig. 14 is a time chart showing changes in the drive frequency of compressor 110 in Fig. 4. In Fig. 14, a time tm0 is a time at which the operation of refrigeration cycle apparatus 2 of Fig. 4 is started. As shown in Fig. 14, controller 172 increases the drive frequency of compressor 110 from time tm0 to a time tm1 and keeps the drive frequency at a drive frequency f2 from time tm1 to a time tm2. In order to switch the flow direction of the refrigerant flowing through heat exchanger 150, controller 172 reduces the drive frequency of compressor 110 from time tm2, and at a time tm3, sets the drive frequency to a drive frequency f1 (<f2), which is the reference value at S107 of Fig. 12. The drive frequency of compressor 110 may be set to be smaller than drive frequency f1, or the compressor may be stopped. Drive frequency f1 may be zero. Controller 172 starts driving switch valve 40 at and after time tm2. Controller 172 increases the drive frequency of compressor 110 from a time tm4 after the completion of switching of switch valve 40. As described above, the drive frequency of compressor 110 is reduced when the flow direction of the refrigerant flowing through heat exchanger 150 is switched, thereby suppressing a situation in which a flow of the refrigerant becomes unstable during the operation of switch valve 40. Consequently, the generation of a sound caused by the refrigerant flowing during the operation of switch valve 40 can be reduced. Switch valve 40 is desirably operated at and after time tm3 at which the frequency of compressor 110 becomes equal to or less than the reference value and the refrigerant flows somewhat gently.

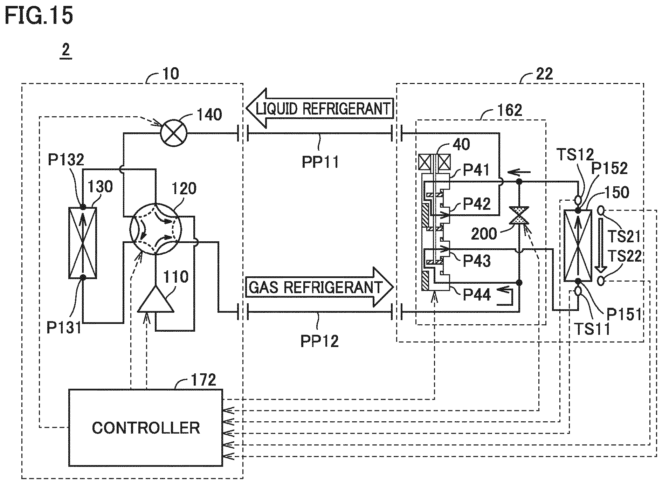

Fig. 15 shows the functional configuration of refrigeration cycle apparatus 2 according to Embodiment 2, as well as a flow of refrigerant in the heating mode. As shown in Fig. 15, on-off valve 200 is closed in the heating mode. Valve ports P41 and P42 are in communication with each other in switch valve 40. Valve ports P43 and P44 are in communication with each other in switch valve 40. The refrigerant from pipe PP12 flows through switch valve 40 from valve port P44 toward valve port P43, and then, reaches port P151 of heat exchanger 150. The refrigerant flows through heat exchanger 150 from port P151 toward port P152. The refrigerant from port P152 flows through switch valve 40 from valve port P41 toward valve port P42, and then, reaches expansion valve 140 via pipe PP12.

The flow direction of the refrigerant flowing through heat exchanger 150 is set to a counterflow in the heating mode of refrigeration cycle apparatus 2. Unlike in the cooling mode, this flow direction is not switched between counterflow and parallel flow in the heating mode in which heat exchanger 150 functions as a condenser.

In the course of condensation, refrigerant changes its state from gas (gas refrigerant) to gas-liquid two-phase state (wet steam) and to liquid (liquid refrigerant). Irrespective of a pressure loss of heat exchanger 150 functioning as a condenser, the temperature at the start of condensation at which refrigerant is gas is higher than the temperature at the end of the course of condensation at which refrigerant is liquid. Unlike in the course of evaporation, the magnitude relationship between start temperature and end temperature changes little in the course of condensation. In the heating mode, the heat exchange capability of heat exchanger 150 can be improved more by setting the flow direction of the refrigerant flowing through heat exchanger 150 to be a counterflow.

Modifications 1 and 2 of Embodiment 2

Embodiment 1 and Embodiment 2 have described the case in which the switch valve has four valve ports. The number of valve ports of the switch valve is not limited to four. The switch valve may be any switch valve that can switch the communication state of a plurality of valve ports by a valve body moved by a motor. Modification 1 will describe a case in which a switch valve has six valve ports, and Modification 2 will describe a case in which a switch valve has five valve ports.

Modification 1

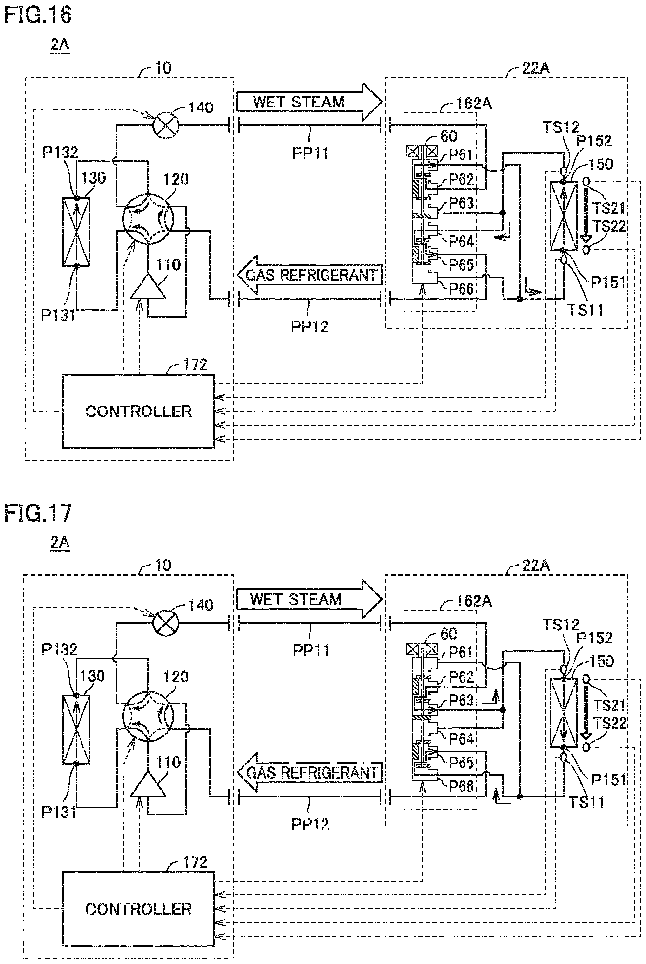

Fig. 16 shows a functional configuration of a refrigeration cycle apparatus 2A according to Modification 1 of Embodiment 2, as well as a flow of refrigerant when the flow direction of the refrigerant flowing through heat exchanger 150 in the cooling mode is a counterflow. As shown in Fig. 16, flow path switching unit 162 of Fig. 4 is replaced by a flow path switching unit 162A in refrigeration cycle apparatus 2A. Flow path switching unit 162A includes a switch valve 60.

Switch valve 60 has valve ports P61 to P66. Switch valve 60 is a motor-driven switch valve which a motor causes a valve body to drive, similarly to switch valve 40 of Fig. 2. Referring to Fig. 16, valve ports P61 and P66 are connected to a port P151. Valve port P62 is connected to pipe PP11. Valve ports P63 and P64 are connected to port P152. Valve port P65 is connected to pipe PP12.

When the direction of the refrigerant flowing through heat exchanger 150 in the cooling mode is a counterflow, valve ports P61 and P62 are in communication with each other in switch valve 60. Valve ports P64 and P65 are in communication with each other in switch valve 60. The refrigerant from pipe PP11 flows through switch valve 60 from valve port P62 toward valve port P61, and then, reaches port P151 of heat exchanger 150. The refrigerant flows through heat exchanger 150 from port P151 toward port P152. The refrigerant from port P152 flows through switch valve 60 from valve port P64 toward valve port P65, and then, reaches six-way valve 120 via pipe PP12.

Fig. 17 shows the functional configuration of refrigeration cycle apparatus 2A according to Modification 1 of Embodiment 2, as well as a flow of refrigerant when the direction of the refrigerant flowing through heat exchanger 150 in the cooling mode is a parallel flow. When the direction of the refrigerant flowing through heat exchanger 150 in the cooling mode is a parallel flow, valve ports P62 and P63 are in communication with each other in switch valve 60. Valve ports P65 and P66 are in communication with each other in switch valve 60. The refrigerant from pipe PP11 flows through switch valve 60 from valve port P62 toward valve port P63, and then, reaches port P152 of heat exchanger 150. The refrigerant flows through heat exchanger 150 from port P152 toward port P151. The refrigerant from port P151 flows through switch valve 60 from valve port P66 toward valve port P65, and then, reaches six-way valve 120 via pipe PP12.

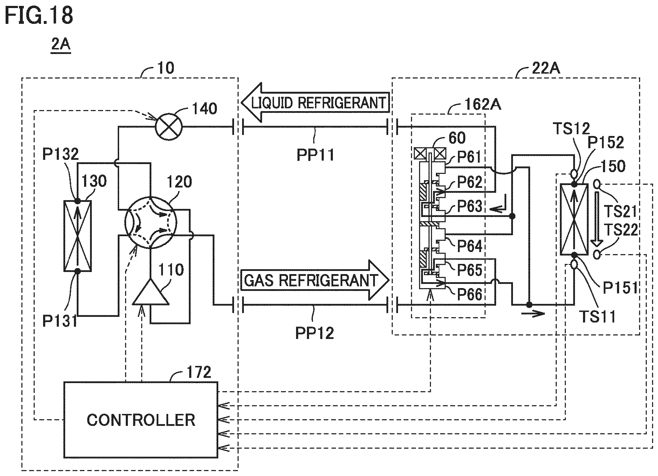

Fig. 18 shows the functional configuration of refrigeration cycle apparatus 2A according to Modification 1 of Embodiment 2, as well as a flow of refrigerant in the heating mode. In the heating mode, valve ports P62 and P63 are in communication with each other in switch valve 60. Valve ports P65 and P66 are in communication with each other in switch valve 60. The refrigerant from pipe PP12 flows through switch valve 60 from valve port P65 toward valve port P66, and then, reaches port P151 of heat exchanger 150. The refrigerant flows through heat exchanger 150 from port P151 toward port P152. The refrigerant from port P152 flows through switch valve 60 from valve port P63 toward valve port P62, and then, reaches expansion valve 140 via pipe PP11.

Modification 2

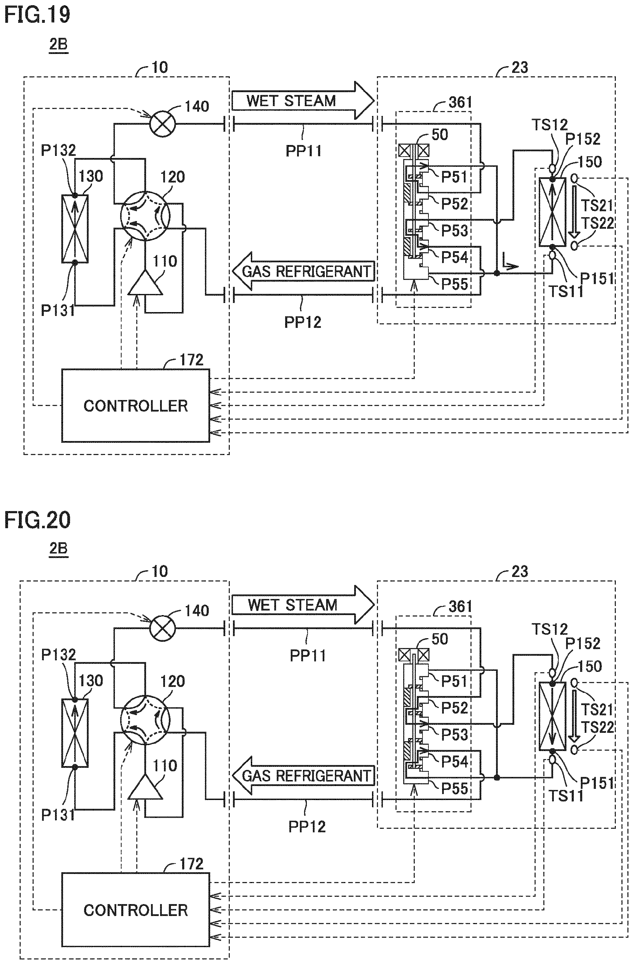

Fig. 19 shows a functional configuration of a refrigeration cycle apparatus 2B according to Modification 2 of Embodiment 2, as well as a flow of refrigerant when the direction of the refrigerant flowing through heat exchanger 150 in the cooling mode is a counterflow. As shown in Fig. 19, flow path switching unit 162 of Fig. 4 is replaced by a flow path switching unit 361 in refrigeration cycle apparatus 2B. Flow path switching unit 361 includes a switch valve 50.

Switch valve 50 has valve ports P51 to P55. Switch valve 50 is a motor-driven switch valve which a motor causes a valve body to drive, a motor causes a valve body to drive a switch valve similarly to switch valve 40 of Fig. 2. Referring to Fig. 19, valve ports P51 and P55 are connected to port P151. Valve port P52 is connected to pipe PP11. Valve port P53 is connected to port P152. Valve port P54 is connected to pipe PP12.

When the direction of the refrigerant flowing through heat exchanger 150 in the cooling mode is a counterflow, valve ports P51 and P52 are in communication with each other in switch valve 50. Valve ports P53 and P54 are in communication with each other in switch valve 50. The refrigerant from pipe PP11 flows through switch valve 50 from valve port P52 toward valve port P51, and then, reaches port P151 of heat exchanger 150. The refrigerant flows through heat exchanger 150 from port P151 toward port P152. The refrigerant from port P152 flows through switch valve 50 from valve port P53 toward valve port P54, and then, reaches six-way valve 120 via pipe PP12.

Fig. 20 shows the functional configuration of refrigeration cycle apparatus 2B according to Modification 2 of Embodiment 2, as well as a flow of refrigerant when the direction of the refrigerant flowing through heat exchanger 150 in the cooling mode is a parallel flow. When the direction of the refrigerant flowing through heat exchanger 150 in the cooling mode is a parallel flow, valve ports P52 and P53 are in communication with each other in switch valve 50. Valve ports P54 and P55 are in communication with each other in switch valve 50. The refrigerant from pipe PP11 flows through switch valve 50 from valve port P52 toward valve port P53, and then, reaches port P152 of heat exchanger 150. The refrigerant flows through heat exchanger 150 from port P152 toward port P151. The refrigerant from port P151 flows through switch valve 50 from valve port P55 toward valve port P54, and then, reaches six-way valve 120 via pipe PP12.

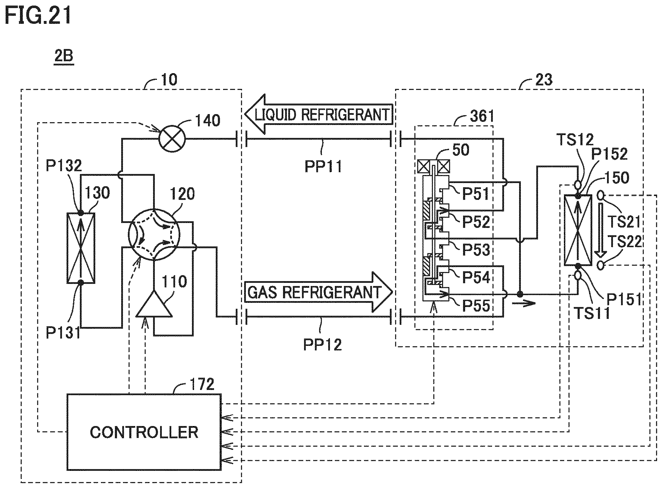

Fig. 21 shows the functional configuration of refrigeration cycle apparatus 2B according to Modification 2 of Embodiment 2, as well as a flow of refrigerant in the heating mode. In the heating mode, valve ports P52 and P53 are in communication with each other in switch valve 50. Valve ports P54 and P55 are in communication with each other in switch valve 50. The refrigerant from pipe PP12 flows through switch valve 50 from valve port P54 toward valve port P55, and then, reaches port P151 of heat exchanger 150. The refrigerant flows through heat exchanger 150 from port P151 toward port P152. The refrigerant from port P152 flows through switch valve 50 from valve port P53 toward valve port P52, and then, reaches expansion valve 140 via pipe PP12.

As described above, the refrigeration cycle apparatuses according to Embodiment 2, Modification 1, and Modification 2 can improve the heat exchange capability of the heat exchanger, thereby improving the performance of the refrigeration cycle apparatus, as in Embodiment 1.

The refrigeration cycle apparatuses according to Embodiment 2, Modification 1, and Modification 2 can also appropriately switch the flow direction of the refrigerant flowing through the heat exchanger functioning as an evaporator in the cooling mode between counterflow and parallel flow to improve the heat exchange capability of the heat exchanger, thereby further improving the performance of the refrigeration cycle apparatus.

Further, the refrigeration cycle apparatuses according to Embodiment 2, Modification 1, and Modification 2 reduce the drive frequency of compressor 110 when the flow direction of the refrigerant flowing through heat exchanger 150 is switched, thereby reducing a sound caused by a flow of refrigerant when this direction is switched.

Embodiment 3

Embodiment 1 and Embodiment 2 have described the case in which the flow direction of the refrigerant flowing through one heat exchanger of two heat exchangers of the refrigeration cycle apparatus is switchable. Embodiment 3 will describe a case in which the flow direction of the refrigerant flowing through each of two heat exchangers of the refrigeration cycle apparatus is switchable.

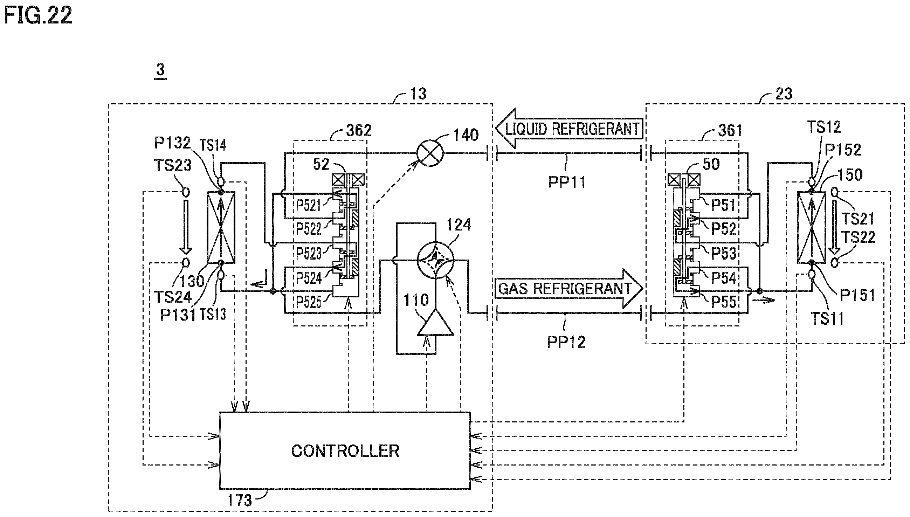

Fig. 22 shows a functional configuration of a refrigeration cycle apparatus 3 according to Embodiment 3, as well as a flow of refrigerant when the flow direction of the refrigerant flowing through heat exchanger 130 functioning as an evaporator in the heating mode is a counterflow. As shown in Fig. 22, refrigeration cycle apparatus 3 includes an outdoor unit 13 and an indoor unit 23. Indoor unit 23 is similar to indoor unit 23 of Fig. 21. In outdoor unit 13, six-way valve 120 and controller 172 of Fig. 21 are replaced by a four-way valve 124 and a controller 173, respectively, and a flow path switching unit 362 and temperature sensors TS13, TS14, TS23, and TS24 for heat exchanger 130 are added.

In the heating mode, refrigerant circulates in the order of compressor 110, four-way valve 124, pipe PP12, flow path switching unit 361, heat exchanger 150, flow path switching unit 361, pipe PP11, expansion valve 140, flow path switching unit 362, heat exchanger 130, flow path switching unit 362, and four-way valve 124.

Temperature sensor TS13 is disposed in a pipe near port P131. Temperature sensor TS13 measures the temperature of the refrigerant flowing through port P131 and outputs the temperature to controller 173. Temperature sensor TS14 is disposed in a pipe near port P132. Temperature sensor TS14 measures the temperature of the refrigerant flowing through port P132 and outputs the temperature to controller 173.

Temperature sensor TS23 is disposed near port P132. Temperature sensor TS23 measures the temperature of the air subjected to heat exchange with the refrigerant flowing through port P132 and outputs the temperature to controller 173. Temperature sensor TS24 is disposed near port P131. Temperature sensor TS24 measures the temperature of the air subjected to heat exchange with the refrigerant flowing through port P131 and outputs the temperature to controller 173.

Flow path switching unit 362 includes a switch valve 52. Switch valve 52 is a motor-driven switch valve, similarly to switch valve 51. Switch valve 52 has valve ports P521 to P525. Valve ports P521 and P525 are connected to port P131 of heat exchanger 130. Valve port P522 is connected to expansion valve 140. Valve port P523 is connected to port P132 of heat exchanger 130. Valve port P524 is connected to four-way valve 124.

When the direction of the refrigerant flowing through heat exchanger 130 functioning as an evaporator in the heating mode is a counterflow, valve ports P521 and P522 are in communication with each other in switch valve 52. Valve ports P523 and P524 are in communication with each other in switch valve 52. The refrigerant from expansion valve 140 flows through switch valve 52 from valve port P522 toward valve port P521, and then, reaches port P131 of heat exchanger 130. The refrigerant from port P131 flows through heat exchanger 130 from port P131 toward port P132. The refrigerant from port P132 flows through switch valve 50 from valve port P523 toward valve port P524, and then, reaches four-way valve 124.

Controller 173 switches the operation mode of refrigeration cycle apparatus 3. Controller 173 controls the drive frequency of compressor 110 to control an amount of the refrigerant discharged by compressor 110 per unit time. Controller 173 controls four-way valve 124 to switch the direction of circulation of refrigerant to a direction of circulation corresponding to each of the heating mode and the cooling mode. Controller 173 controls the degree of opening of expansion valve 140. Controller 173 controls flow path switching units 361 and 362.

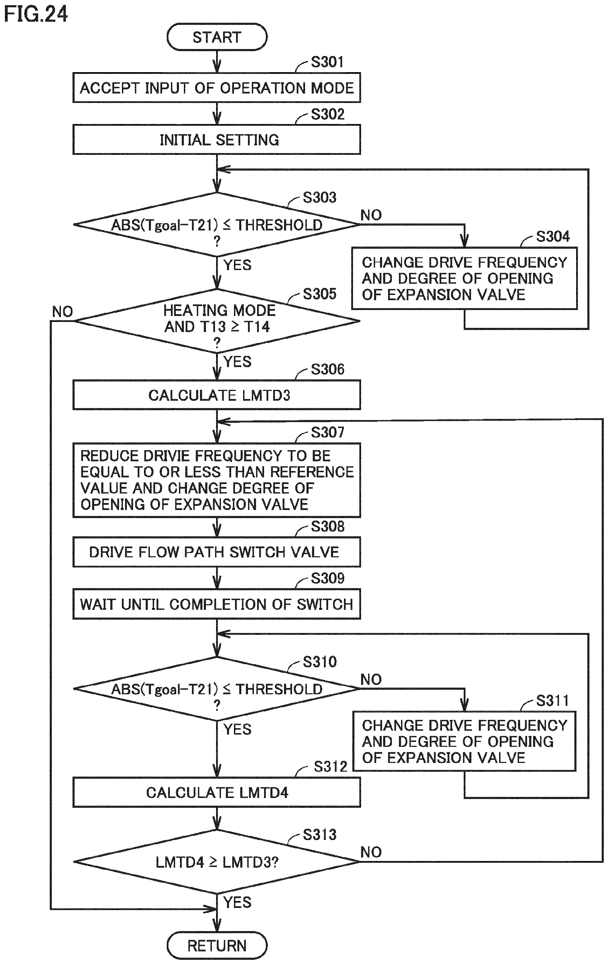

In order to increase the heat exchange capability of heat exchanger 130, controller 173 controls flow path switching unit 362 to switch the flow direction of the refrigerant flowing through heat exchanger 130 functioning as an evaporator in the heating mode between counterflow and parallel flow. Controller 173 receives the temperature from each of temperature sensors TS13, TS14, TS23, and TS24 and switches the direction in which refrigerant flows through heat exchanger 130 between counterflow and parallel flow. The process performed by controller 173 in order to switch the flow direction of the refrigerant flowing through heat exchanger 130 will be described below in detail with reference to Fig. 24.

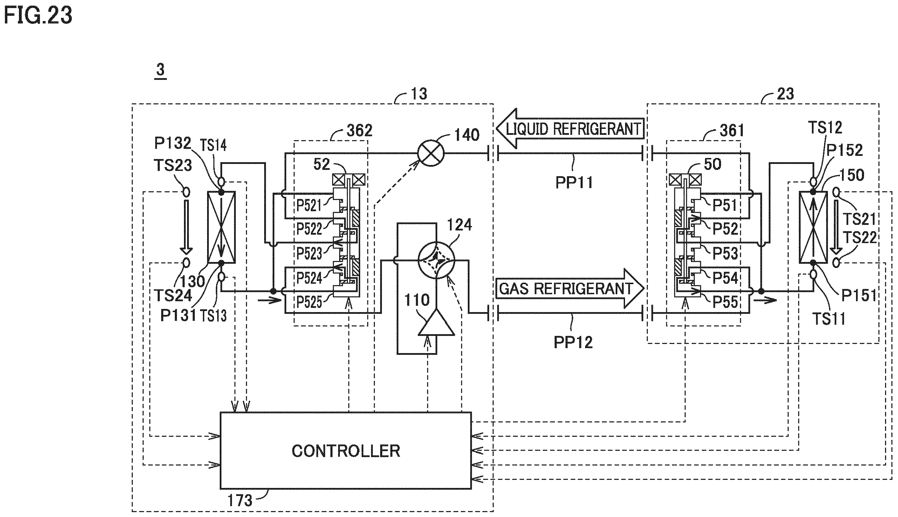

Fig. 23 shows the functional configuration of refrigeration cycle apparatus 3 of Fig. 22, as well as a flow of refrigerant when the flow direction of the refrigerant flowing through heat exchanger 130 functioning as an evaporator in the heating mode is a parallel flow. As shown in Fig. 23, when the direction of the refrigerant flowing through heat exchanger 130 functioning as an evaporator in the heating mode is a parallel flow, valve ports P522 and P523 are in communication with each other in switch valve 52. Valve ports P524 and P525 are in communication with each other in switch valve 52. The refrigerant from expansion valve 140 flows through switch valve 52 from valve port P522 toward valve port P523, and then, reaches port P132 of heat exchanger 130. The refrigerant from port P132 flows through heat exchanger 130 from port P132 toward port P131. The refrigerant from port P131 flows through switch valve 50 from valve port P525 toward valve port P524, and thus, reaches four-way valve 124.

Fig. 24 is a flowchart showing an example flow of the process performed by controller 173 of Fig. 22 in order to switch the flow direction of the refrigerant flowing through heat exchanger 130 functioning as an evaporator in the heating mode. The process shown in Fig. 24 is called by a main routine (not shown) when a user inputs an operation mode.

As shown in Fig. 24, controller 173 accepts an input of the operation mode from the user at S301 and advances the process to S302. Controller 173 performs an initial setting at S302. Specifically, at S302, controller 173 sets a target temperature Tgoal, obtains room temperature T21 at the start of the operation, sets the flow direction of the refrigerant flowing through heat exchanger 130 of outdoor unit 13, and sets the drive frequency of compressor 110. The flow direction of the refrigerant flowing through heat exchanger 130 is set to a counterflow at the start of the operation in both of the cooling mode and the heating mode.

After initial setting at S302, controller 173 advances the process to S303. At S303, controller 173 determines whether the absolute value of the difference between target temperature Tgoal and temperature T21 (room temperature) is equal to or less than a threshold. If the absolute value of the difference between target temperature Tgoal and temperature T21 is greater than the threshold (NO at S303), at S304, controller 173 changes the drive frequency of compressor 110 in order to make room temperature closer to target temperature Tgoal. Specifically, when target temperature Tgoal is higher than temperature T21, controller 173 increases the drive frequency by a given number. When target temperature Tgoal is lower than temperature T21, controller 173 reduces the drive frequency by the given number. The degree of opening of expansion valve 140 is reduced when the temperature of the refrigerant flowing between heat exchanger 150 and compressor 110 (e.g., the temperature of the refrigerant flowing out of heat exchanger 150 or the temperature of the refrigerant sucked by compressor 110) is lower than the saturated gas temperature, and the degree of opening of expansion valve 140 is increased when the temperature of the refrigerant flowing between heat exchanger 150 and compressor 110 is higher than the saturated gas temperature, thereby controlling expansion valve 140 to make the temperature of the refrigerant flowing between heat exchanger 150 and compressor 110 closer to the saturated gas temperature. Here, the saturated gas temperature is the temperature of gas refrigerant in an ideal state. While the apparatus is actually controlled and while the apparatus is operated as required, for wet steam, a degree of dryness X of wet steam is controlled to attain to a target value set in advance within the range of 0.85<X<1.00. For gas refrigerant, a degree of superheat SH of gas refrigerant is controlled to attain to a target value set in advance within the range of 0<SH<20deg. Alternatively, expansion valve 140 may control not only the degree of dryness or the degree of superheat of the refrigerant sucked by compressor 110 but also the temperature of the refrigerant discharged from compressor 110 or a degree of supercooling SC of the refrigerant flowing out of the heat exchanger. After S304, controller 173 returns the process to S303. If the absolute value of the difference between target temperature Tgoal and temperature T21 is equal to or less than the threshold (YES at S303), controller 173 determines that the room temperature has nearly reached the target temperature, and then, advances the process to S305.

At S305, controller 173 determines whether the operation mode is the heating mode and whether a temperature T13 obtained from temperature sensor TS11 is equal to or higher than a temperature T14 obtained from temperature sensor TS14. If the operation mode is the cooling mode or if temperature T13 is lower than temperature T14 (NO at S305), controller 173 returns the process to the main routine while keeping the flow direction of the refrigerant flowing through heat exchanger 150 at a counterflow. If the operation mode is the cooling mode and if temperature T13 is equal to or higher than temperature T14 (YES at S305), controller 173 determines that the heat exchange capability of heat exchanger 130 has decreased due to a pressure loss of heat exchanger 130, and then, advances the process to S306.

At S306, controller 173 calculates a logarithmic mean temperature difference LMTD from Equations (4) to (6) below. The logarithmic mean temperature difference calculated at S306 is taken as LMTD3.

[Math 2]

$$\Delta T30 = T23 - T14 \qquad \cdots (4)$$

$$\Delta T40 = T24 - T13 \qquad \cdots (5)$$

$$LMTD = \frac{\Delta T30 - \Delta T40}{LN(\Delta T30 - \Delta T40)} \qquad \cdots (6)$$

After calculating logarithmic mean temperature difference LMTD3 at S306, controller 173 advances the process to S307. At S307, controller 173 reduces the drive frequency to be equal to or less than a reference value of compressor 110. At S307, compressor 110 may be stopped. Alternatively, controller 173 may perform control such that the degree of opening of expansion valve 140 attains to a target value (e.g., degree of superheat, discharge temperature, and degree of supercooling). After S307, controller 173 advances the process to S308.

At S308, controller 173 drives switch valve 52 of flow path switching unit 362, and advances the process to S309. Controller 173 waits until the communication state of valve ports P521 to P525 in switch valve 52 is switched at S309, and then, advances the process to S310.

At S310, controller 173 determines whether the absolute value of the difference between target temperature Tgoal and temperature T21 is equal to or less than the threshold. If the absolute value of the difference between target temperature Tgoal and temperature T21 is greater than the threshold (NO at S310), controller 173 changes the drive frequency of compressor 110 and the degree of opening of expansion valve 140 at S311 in order to make the room temperature closer to target temperature Tgoal, and then, returns the process to S310. If the absolute value of the difference between target temperature Tgoal and temperature T23 is equal to or less than the threshold (YES at S310), controller 173 determines that the room temperature has nearly reached the target temperature, and then, advances the process to S312.

Controller 173 calculates a logarithmic mean temperature difference LMTD4 from Equations (4) to (6) above at S312, and then, advances the process to S313. At S313, controller 173 determines whether logarithmic mean temperature difference LMTD4 is equal to or greater than LMTD3. If logarithmic mean temperature difference LMTD4 is equal to or greater than LMTD3 (YES at S313), controller 173 returns the process to the main routine. If logarithmic mean temperature difference LMTD4 is smaller than LMTD3 (NO at S413), controller 173 returns the process to S307.

The process performed by controller 173 in order to switch the flow direction of the refrigerant flowing through heat exchanger 130 functioning as an evaporator in the heating mode may be a process of switching the flow direction of the refrigerant flowing through heat exchanger 130 in accordance with the magnitude relationship between temperature T13 of the refrigerant flowing through port P131 of heat exchanger 130 and temperature T14 of the refrigerant flowing through port P132, without calculating a logarithmic mean temperature as in the process shown in Fig. 13.

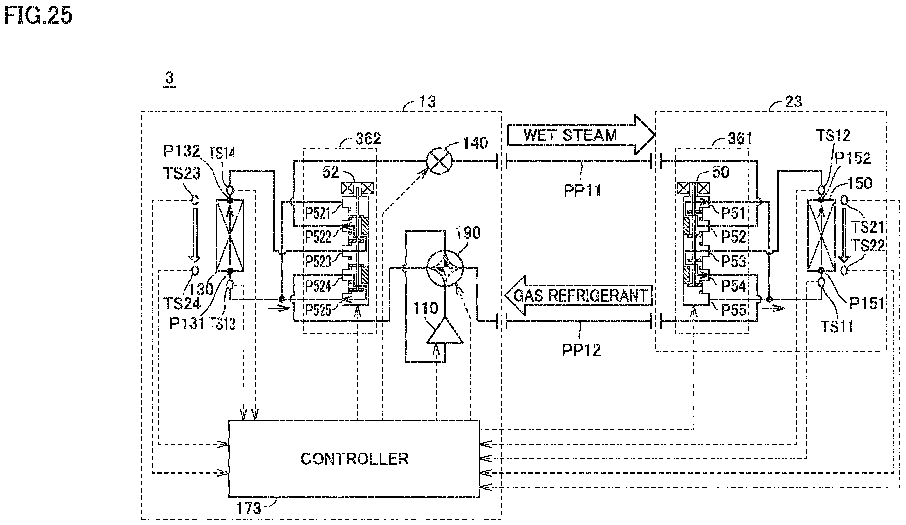

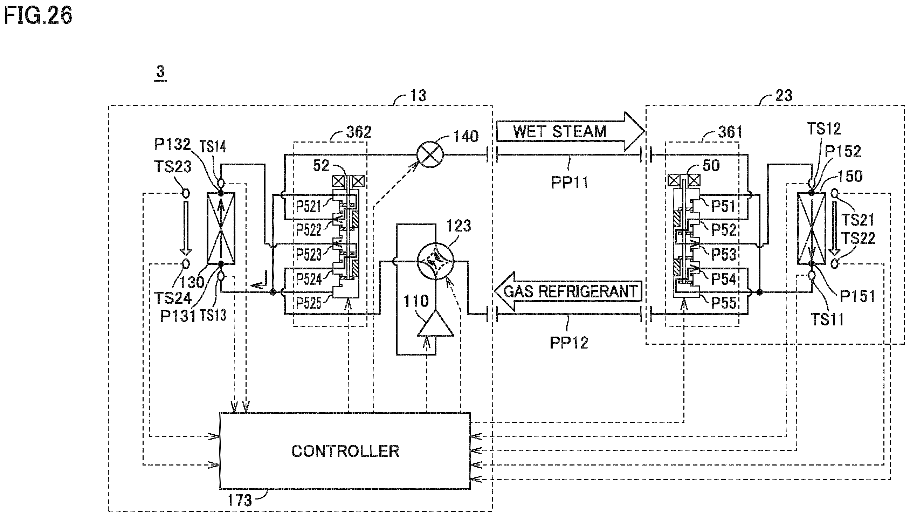

Fig. 25 shows the functional configuration of refrigeration cycle apparatus 3 of Fig. 22, as well as a flow of refrigerant when the flow direction of the refrigerant flowing through heat exchanger 150 functioning as an evaporator in the cooling mode is a counterflow. Fig. 26 shows the functional configuration of refrigeration cycle apparatus 3 of Fig. 22, as well as a flow of refrigerant when the flow direction of the refrigerant flowing through heat exchanger 150 functioning as an evaporator in the cooling mode is a parallel flow. Heat exchanger 130 functions as a condenser in the cooling mode, and accordingly, controller 173 sets the flow direction in which refrigerant flows through heat exchanger 130 to a counterflow. Since a flow of refrigerant in indoor unit 23 shown in Fig. 25 is similar to the flow of refrigerant in indoor unit 23 shown in Fig. 19, description thereof will not be repeated. Also, since a flow of refrigerant in indoor unit 23 shown in Fig. 26 is similar to the flow of refrigerant shown in Fig. 20, description thereof will not be repeated.

As shown in Figs. 25 and 26, valve ports P522 and P523 are in communication with each other in switch valve 52 in the cooling mode. Valve ports P524 and P525 are in communication with each other in switch valve 52. The refrigerant from compressor 110 flows through switch valve 52 from valve port P524 toward valve port P525, and then, reaches port P131 of heat exchanger 130. The refrigerant from port P131 flows through heat exchanger 130 from port P131 toward port P132. The refrigerant from port P132 flows through switch valve 50 from valve port P523 toward valve port P522, and then, reaches expansion valve 140.

As described above, the refrigeration cycle apparatus according to Embodiment 3 can improve the heat exchange capability of the heat exchanger, thereby improving the performance of the refrigeration cycle apparatus, as in Embodiment 1. Also, the refrigeration cycle apparatus according to Embodiment 3 can switch the flow direction of the refrigerant flowing through each of two heat exchangers of the refrigeration cycle apparatus to improve the heat exchange capability of each heat exchanger, thereby further improving the performance of the refrigeration cycle apparatus.

Embodiment 4

Embodiment 4 will describe a cascade refrigeration cycle apparatus that performs heat exchange between refrigerant and the air via a heating medium such as water or brine (salt water).

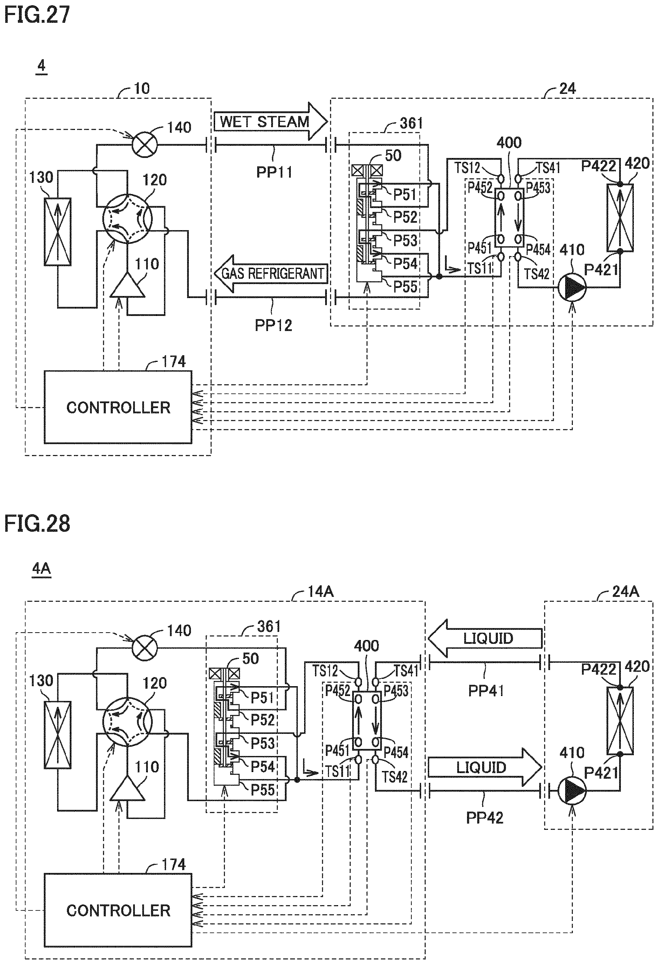

Fig. 27 shows a functional configuration of a refrigeration cycle apparatus 4 according to Embodiment 4. In the configuration of refrigeration cycle apparatus 4 shown in Fig. 27, heat exchanger 150, controller 172, and temperature sensors TS21 and TS22 of refrigeration cycle apparatus 2B shown in Fig. 19 are replaced by a cascade heat exchanger 400, a controller 174, and temperature sensors TS41 and TS42, respectively, and a pump 410 and a heat exchanger 420 are added.

As shown in Fig. 27, heat exchanger 420 includes ports P421 and P422. Cascade heat exchanger 400 includes ports P451 to P454. Each of ports P451 and P452 is a port through which refrigerant flows. Ports P451 and P452 correspond to ports P151 and P152 of heat exchanger 150 of refrigeration cycle apparatus 2B shown in Fig. 19. Port P451 is connected to valve ports P51 and P55 of switch valve 50. Port P452 is connected to valve port P53 of switch valve 50.

Each of ports P453 and P454 is a port through which a heating medium flows. The heating medium that flows through ports P453 and P454 is subjected to heat exchange with the refrigerant flowing through each of ports P452 and P451. Ports P453 and P454 are disposed near ports P452 and P451, respectively. Port P453 is connected to port P422 of heat exchanger 420. Port P454 is connected to pump 410.

Cascade heat exchanger 400 may be a heat exchanger having a double tube or a plate-type heat exchanger including a stack of a plurality of plates.

Pump 410 is connected between port P454 and port P421 of heat exchanger 420. Pump 410 is controlled by controller 174 to circulate the heating medium between heat exchanger 400 and heat exchanger 420. Pump 410 corresponds to the fluid moving unit of the present invention.

Temperature sensor TS11 is disposed in a pipe near port P451. Temperature sensor TS11 measures the temperature of the refrigerant flowing through port P451 and outputs the temperature to controller 174. Temperature sensor TS12 is disposed in a pipe near port P452. Temperature sensor TS12 measures the temperature of the refrigerant flowing through port P452 and outputs the temperature to controller 174.

Temperature sensor TS41 is disposed in a pipe near port P453. Temperature sensor TS41 measures the temperature of the heating medium flowing through port P453 and outputs the temperature to controller 174. Temperature sensor TS42 is disposed in a pipe near port P454. Temperature sensor TS42 measures the temperature of the heating medium flowing through port P454 and outputs the temperature to controller 174.

Controller 174 switches the operation mode of refrigeration cycle apparatus 3. Controller 174 controls the drive frequency of compressor 110 to control an amount of the refrigerant discharged by compressor 110 per unit time. Controller 174 controls six-way valve 120 to switch the direction of circulation of refrigerant to the direction of circulation which corresponds to each of the heating mode and the cooling mode. Controller 174 controls the degree of opening of expansion valve 140. Controller 174 receives the temperature from each of temperature sensors TS11, TS12, TS41, and TS42 and controls flow path switching unit 361, thereby switching the direction in which the refrigerant flows through cascade heat exchanger 400 between counterflow and parallel flow.

Modification 1 of Embodiment 4

Embodiment 4 has described the case in which cascade heat exchanger 400 and flow path switching unit 361 are accommodated in indoor unit 24. Cascade heat exchanger 400 and flow path switching unit 361 may be accommodated in an outdoor unit 14A, as in a refrigeration cycle apparatus 4B shown in Fig. 28. With such a configuration, the refrigerant circulates in outdoor unit 14A and does not flow through a pipe connecting outdoor unit 14A with indoor unit 24A. The pipe (extended pipe) connecting outdoor unit 14A with indoor unit 24A may be longer than any other pipe when these units are apart from each other. Thus, preventing the refrigerant from flowing through this pipe can reduce an amount of refrigerant required for refrigeration cycle apparatus 4A. This can reduce the operational cost of refrigeration cycle apparatus 4A.

Modification 2 of Embodiment 4

Embodiment 4 has described the case in which the heating medium flows through one heat exchanger. Modification 2 of Embodiment 4 will describe a case in which the heating medium flows through a plurality of heat exchangers.

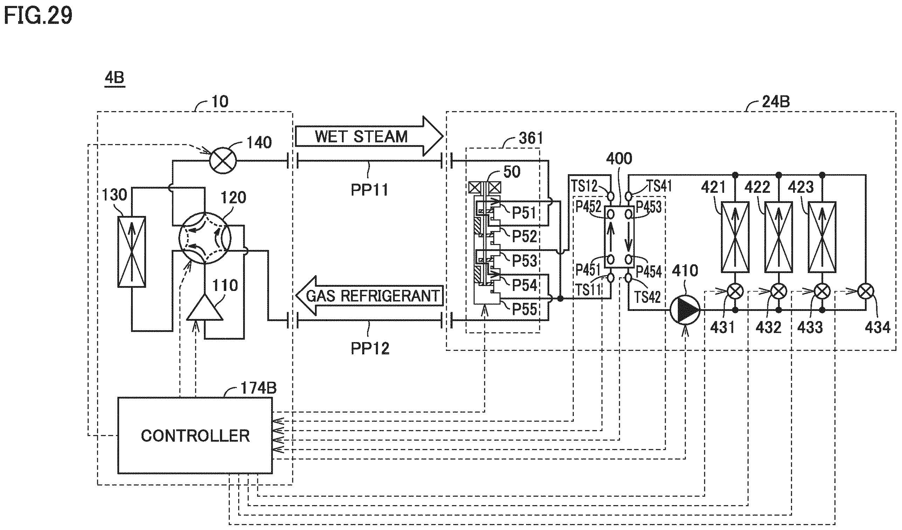

Fig. 29 shows a functional configuration of refrigeration cycle apparatus 4B according to Modification 2 of Embodiment 4. Refrigeration cycle apparatus 4B shown in Fig. 29 includes heat exchangers 421 to 423 and flow regulating valves 431 to 434 in place of heat exchanger 420 of refrigeration cycle apparatus 4 shown in Fig. 27. Also, controller 174 of refrigeration cycle apparatus 4 shown in Fig. 27 is replaced by a controller 174B.

As shown in Fig. 29, heat exchanger 421 and flow regulating valve 431 are connected in series between pump 410 and cascade heat exchanger 400. Heat exchanger 422 and flow regulating valve 432 are connected in series between pump 410 and cascade heat exchanger 400. Heat exchanger 423 and flow regulating valve 433 are connected in series between pump 410 and cascade heat exchanger 400.

Heat exchanger 421 and flow regulating valve 431 connected in series, heat exchanger 422 and flow regulating valve 432 connected in series, heat exchanger 423 and flow regulating valve 433 connected in series, and flow regulating valve 434 are connected in parallel between pump 410 and cascade heat exchanger 400.

Controller 174B controls the degrees of opening of flow regulating valves 431 to 434. Controller 174B controls pump 410 such that pump 410 discharges a constant amount of heating medium per unit time. Since the amount of a heating medium discharged from pump 410 per unit time is constant in refrigeration cycle apparatus 4B, the entire heating medium discharged from pump 410 may not flow through heat exchangers 421 to 423. In such a case, to allow for continuous circulation of the heating medium, which has failed to flow through heat exchangers 421 to 423, a bypass flow path extending via flow regulating valve 434 is provided in refrigeration cycle apparatus 4B.

Modification 3 of Embodiment 4

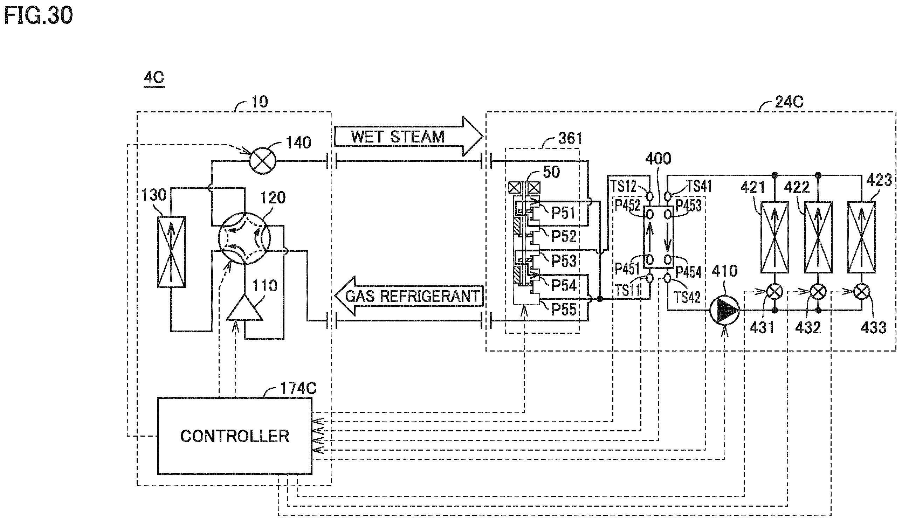

Modification 2 of Embodiment 4 has described the case in which the amount of a heating amount discharged from pump 410 per unit time is constant. When the amount of heating medium discharged from pump 410 per unit time is changeable in real time under control of the inverter, no bypass flow path may be provided as in refrigeration cycle apparatus 4C shown in Fig. 30.

Modification 4 of Embodiment 4

Embodiment 4 has described the case in which one outdoor unit is provided. Modification 4 of Embodiment 4 will describe a case in which a plurality of outdoor units are provided.

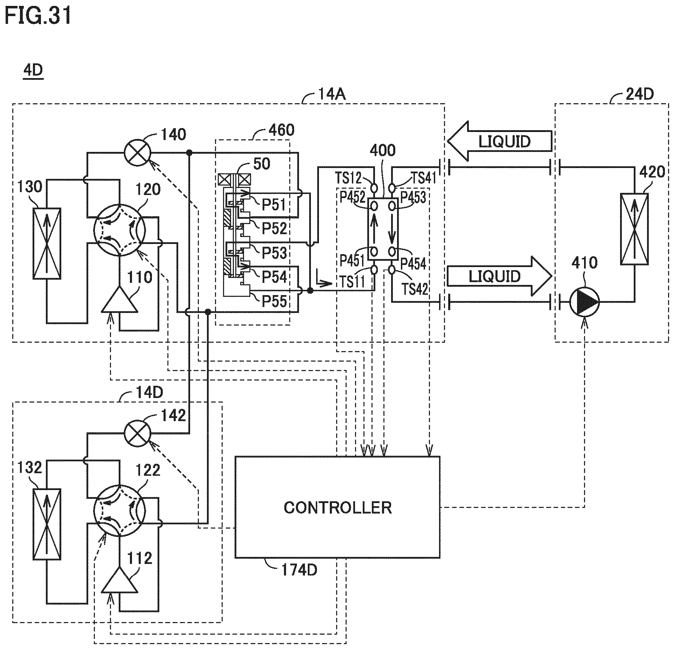

Fig. 31 shows a functional configuration of a refrigeration cycle apparatus 4D according to Modification 4 of Embodiment 4. The configuration of refrigeration cycle apparatus 4D shown in Fig. 31 is obtained by replacing controller 174 of refrigeration cycle apparatus 4A shown in Fig. 28 by a controller 174D and by adding an outdoor unit 14D to the configuration of refrigeration cycle apparatus 4A.

As shown in Fig. 31, outdoor unit 14D accommodates a compressor 112, a six-way valve 122, a heat exchanger 132, and an expansion valve 142. Compressor 112, six-way valve 122, heat exchanger 132, and expansion valve 142 correspond to compressor 110, six-way valve 120, heat exchanger 130, and expansion valve 140 of outdoor unit 14A, respectively. Expansion valve 142 is connected to valve port P52 of switch valve 50. Six-way valve 122 is connected to valve port P53 of switch valve 50.

As described above, the refrigeration cycle apparatuses according to Embodiment 4 and Modifications 1 to 4 can improve the heat exchange capability of the heat exchanger, thereby improving the performance of the refrigeration cycle apparatus, as in Embodiment 1. Further, the refrigeration cycle apparatuses according to Embodiment 4 and Modifications 1 to 4 perform heat exchange between the air and refrigerant through a heating medium, thereby reducing an amount of refrigerant required for the refrigeration cycle apparatus. The use of a heating medium (e.g., water or brine) which involves a cost lower than that of refrigerant as a heating medium can reduce the operational cost of the refrigeration cycle apparatus.

Embodiment 5

Embodiment 5 will describe a case in which an indoor unit is provided with a plurality of heat exchangers and expansion valves corresponding to the heat exchangers in one-to-one relationship.

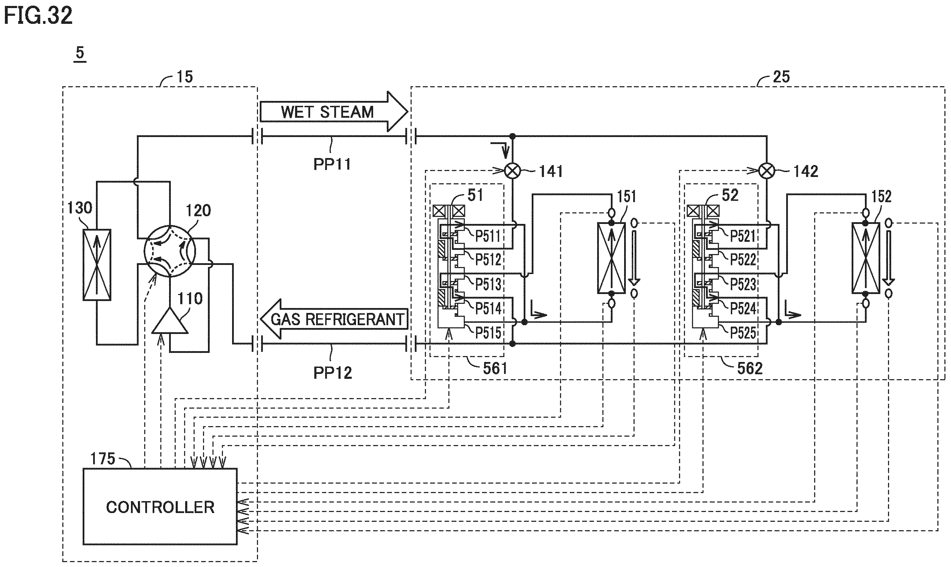

Fig. 32 shows a functional configuration of a refrigeration cycle apparatus 5 according to Embodiment 5, as well as a flow of refrigerant in the cooling mode. As shown in Fig. 32, refrigeration cycle apparatus 5 includes an outdoor unit 15 and an indoor unit 25. The configuration of outdoor unit 15 is obtained by replacing controller 172 of outdoor unit 10 shown in Fig. 19 by a controller 175 and by removing expansion valve 140 from the configuration of outdoor unit 10. Indoor unit 25 accommodates expansion valves 141 and 142, flow path switching units 561 and 562, and heat exchangers 151 and 152. Flow path switching units 561 and 562 include switch valves 51 and 52, respectively.

As shown in Fig. 32, expansion valve 141 is connected between pipe PP11 and valve port P512 of switch valve 51. Valve ports P511 and P515 are connected to one port of heat exchanger 151. Valve port P513 is connected to the other port of heat exchanger 151. Valve port P514 is connected to pipe PP12.

Expansion valve 142 is connected between pipe PP11 and valve port P522 of switch valve 52. Valve ports P521 and P525 are connected to one port of heat exchanger 152. Valve port P523 is connected to the other port of heat exchanger 152. Valve port P524 is connected to pipe PP12. Expansion valves 141 and 142 are connected in parallel between pipes PP11 and PP12.

Controller 175 controls switch valve 51 to switch the direction of the refrigerant flowing through heat exchanger 151. Controller 175 controls switch valve 52 to switch the direction of the refrigerant flowing through heat exchanger 152. Controller 175 controls the degree of opening of expansion valve 141 in accordance with the state of heat exchanger 151. Controller 175 controls the degree of opening of expansion valve 142 to an appropriate value in accordance with the state of heat exchanger 152.

In the cooling mode, the refrigerant circulates in the order of compressor 110, six-way valve 120, heat exchanger 130, six-way valve 120, expansion valve 141, flow path switching unit 561, heat exchanger 151, flow path switching unit 561, and six-way valve 120. The refrigerant also circulates in the order of compressor 110, six-way valve 120, heat exchanger 130, six-way valve 120, expansion valve 142, flow path switching unit 562, heat exchanger 152, flow path switching unit 562, and six-way valve 120.

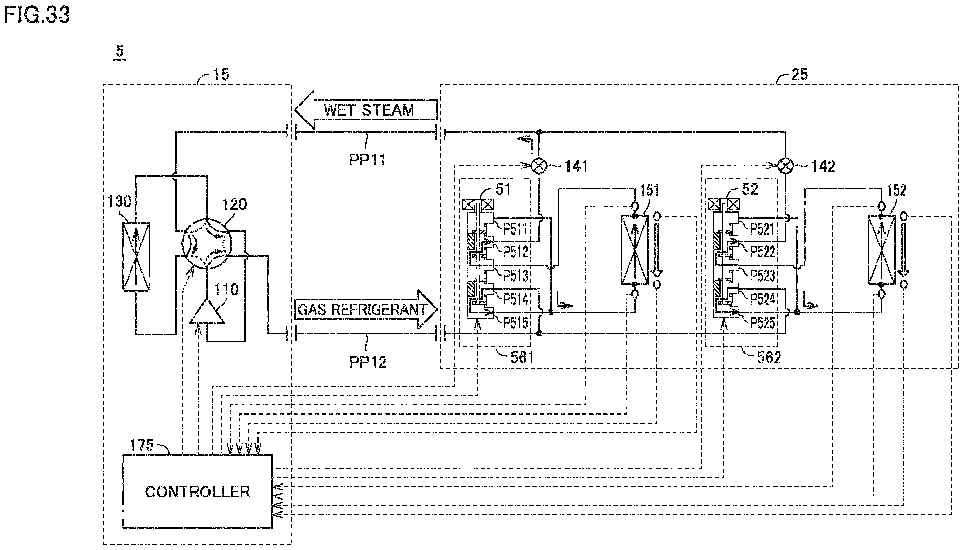

Fig. 33 shows the functional configuration of refrigeration cycle apparatus 5 according to Embodiment 5, as well as a flow of refrigerant in the heating mode. As shown in Fig. 33, in the heating mode, the refrigerant circulates in the order of compressor 110, flow path switching unit 561, expansion valve 141, six-way valve 120, heat exchanger 130, and six-way valve 120. The refrigerant also circulates in the order of compressor 110, flow path switching unit 562, heat exchanger 152, flow path switching unit 562, expansion valve 141, six-way valve 120, heat exchanger 130, and six-way valve 120.

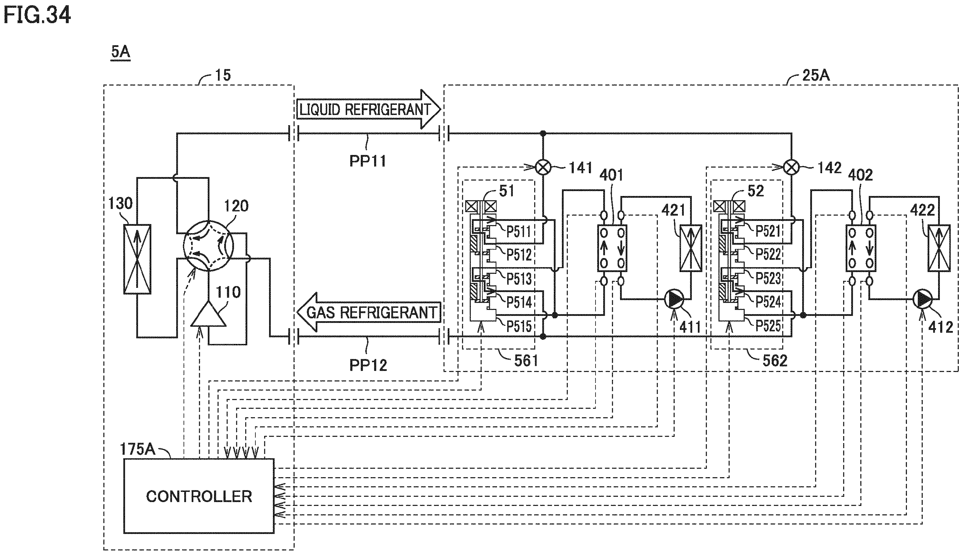

Fig. 34 shows a functional configuration of a refrigeration cycle apparatus 5A according to a modification of Embodiment 5. Refrigeration cycle apparatus 5A is a cascade refrigeration cycle apparatus. In the configuration of refrigeration cycle apparatus 5A, controller 175 and heat exchangers 151 and 152 of refrigeration cycle apparatus 5 shown in Fig. 32 are replaced by controller 175A and cascade heat exchangers 401 and 402, respectively, and pumps 411 and 412 and heat exchangers 421 and 422 are added.

Controller 175A controls flow path switching unit 561 to switch the flow direction of the refrigerant flowing through cascade heat exchanger 401. Controller 175A controls flow path switching unit 562 to switch the flow direction of the refrigerant flowing through cascade heat exchanger 402. Controller 175A controls pump 411 to circulate a heating medium between cascade heat exchanger 401 and heat exchanger 421. Controller 175A controls pump 412 to circulate a heating medium between cascade heat exchanger 402 and heat exchanger 422.

As described above, the refrigeration cycle apparatuses according to Embodiment 5 and the modification can improve the heat exchange capability of the heat exchanger, thereby improving the performance of the refrigeration cycle apparatus, as in Embodiment 1. Further, the refrigeration cycle apparatuses according to Embodiment 5 and the modification individually control the expansion valves corresponding to a plurality of heat exchangers provided in one-to-one relationship in an indoor unit, thereby improving the heat exchange capability of each heat exchanger more than in the case in which one expansion valve is provided in the outdoor unit.

Embodiment 6

Embodiment 6 will describe a refrigeration cycle apparatus including a plurality of indoor units and capable of simultaneously performing heating and cooling. In the following, the operation mode in which heating is performed in all indoor units is referred to as an all-heating mode, and the operation mode in which all indoor units perform cooling is referred to as an all-cooling mode. The operation mode in which heating and cooling are performed simultaneously while causing the heat exchanger of the outdoor unit to function as an evaporator is referred to as a heating-dominant mode. The operation mode in which heating and cooling are performed simultaneously while causing the heat exchanger of the outdoor unit to function as a condenser is referred to as a cooling-dominant mode.

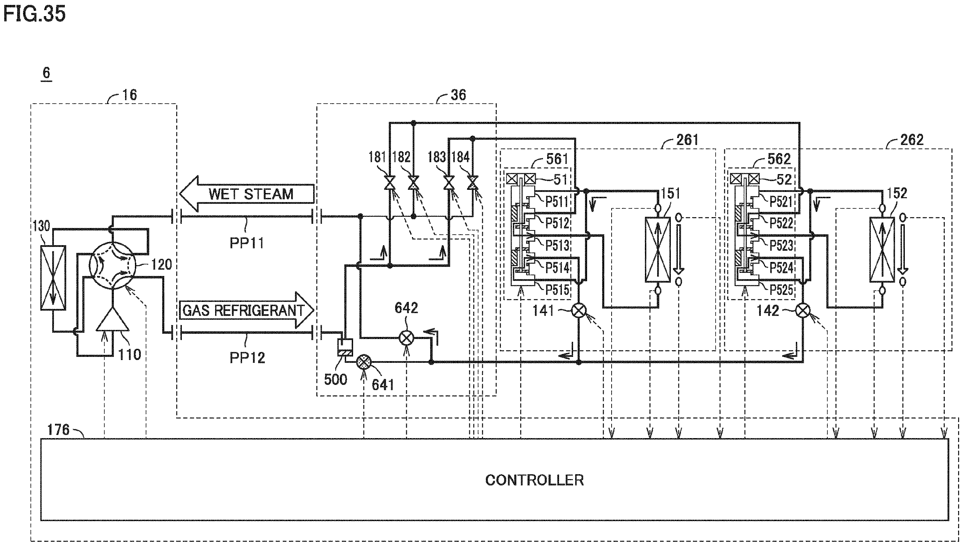

Fig. 35 shows the functional configuration of refrigeration cycle apparatus 6 according to Embodiment 6, as well as a flow of refrigerant in the all-heating mode. As shown in Fig. 35, refrigeration cycle apparatus 6 includes an outdoor unit 16, a flow divider 36, and indoor units 261 and 262. Six-way valve 120 in outdoor unit 16 may be configured as a Lorenz cycle having a combination of a four-way valve and a check valve, a solenoid valve, or any other valve.

The configuration of outdoor unit 16 is obtained by removing expansion valve 140 from outdoor unit 10 of Fig. 19 and by replacing controller 172 of Fig. 19 by a controller 176. Outdoor unit 16 is connected to flow divider 36 by pipes PP11 and PP12. Refrigeration cycle apparatus 6 is a two-pipe refrigeration cycle apparatus.

Flow divider 36 is controlled by controller 176 to distribute the refrigerant from outdoor unit 16 to indoor units 261 and 262. Flow divider 36 includes on-off valves 181 to 184, expansion valves 141 and 642, and a gas-liquid separator 500. Gas-liquid separator 500 is connected to pipe PP12. On-off valves 181 and 182 are connected between gas-liquid separator 500 and indoor unit 262. On-off valves 183 and 184 are connected between gas-liquid separator 500 and indoor unit 261. Expansion valve 142 is connected between indoor unit 261 and pipe PP11 and is connected between indoor unit 262 and pipe PP11. Expansion valve 141 is connected between indoor unit 261 and gas-liquid separator 500 and is connected between indoor unit 262 and gas-liquid separator 500.

Indoor unit 261 includes a flow path switching unit 561 having a switch valve 51, an expansion valve 141, and a heat exchanger 151. Valve ports P511 and P515 of switch valve 51 are connected to one port of heat exchanger 151. Valve port P512 is connected to on-off valves 183 and 184. Valve port P513 is connected to the other port of heat exchanger 151. Valve port P514 is connected to expansion valve 141. Expansion valve 141 is connected to expansion valves 641 and 642.

Indoor unit 262 includes a flow path switching unit 562 having a switch valve 52, an expansion valve 142, and a heat exchanger 152. Valve ports P521 and P525 of switch valve 52 are connected to one port of heat exchanger 152. Valve port P522 is connected between on-off valves 181 and 182. Valve port P523 is connected to the other port of heat exchanger 152. Valve port P524 is connected to expansion valve 142. Valve port P525 is connected to one port of heat exchanger 152. Expansion valve 142 is connected to expansion valves 641 and 642.

Controller 176 controls compressor 110 and six-way valve 120. Controller 176 controls on-off valves 181 to 184. Controller 176 controls expansion valves 141, 142, 641, and 642. Controller 176 controls switch valves 51 and 52.

In the all-heating mode, controller 176 opens on-off valves 181 and 183 and closes on-off valves 182 and 184. Controller 176 closes expansion valve 641 and opens expansion valve 642. The refrigerant circulates in the order of compressor 110, six-way valve 120, pipe PP12, gas-liquid separator 500, on-off valve 183, flow path switching unit 561, heat exchanger 151, flow path switching unit 561, expansion valve 141, expansion valve 642, pipe PP11, six-way valve 120, heat exchanger 130, and six-way valve 120. The refrigerant also circulates in the order of compressor 110, six-way valve 120, pipe PP12, gas-liquid separator 500, on-off valve 181, flow path switching unit 562, heat exchanger 152, flow path switching unit 562, expansion valve 142, expansion valve 642, pipe PP11, six-way valve 120, heat exchanger 130, and six-way valve 120.

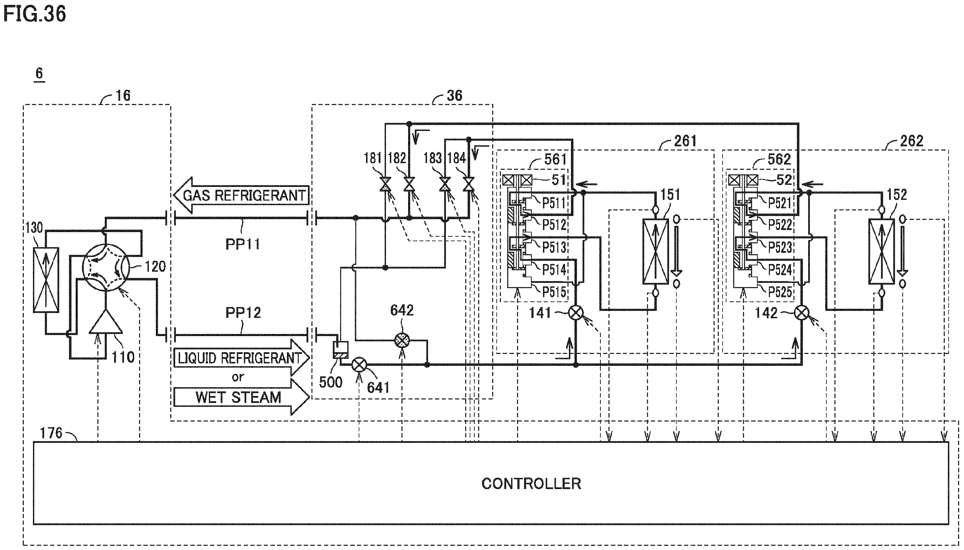

Fig. 36 shows the functional configuration of refrigeration cycle apparatus 6 according to Embodiment 6, as well as a flow of refrigerant in the all-cooling mode. In the all-cooling mode, controller 176 closes on-off valves 181 and 183 and opens on-off valves 182 and 184. Controller 176 opens expansion valve 641 and closes expansion valve 642. The refrigerant circulates in the order of compressor 110, six-way valve 120, heat exchanger 130, six-way valve 120, pipe PP12, gas-liquid separator 500, expansion valve 641, expansion valve 141, flow path switching unit 561, heat exchanger 151, flow path switching unit 561, on-off valve 184, pipe PP11, and six-way valve 120. The refrigerant also circulates in the order of compressor 110, six-way valve 120, heat exchanger 130, six-way valve 120, pipe PP12, gas-liquid separator 500, expansion valve 641, expansion valve 142, flow path switching unit 562, heat exchanger 152, flow path switching unit 562, on-off valve 182, pipe PP11, and six-way valve 120. Note that expansion valve 642 may be opened depending on the state of operation of refrigeration cycle apparatus 6 to bypass the refrigerant from pipe PP12 to pipe PP11. For example, as in refrigeration cycle apparatus 4B shown in Fig. 29, the refrigerant from pipe PP12 may be bypassed to pipe PP11 in the refrigeration cycle apparatus that does not need to distribute the refrigerant indoors. Also, the state of the refrigerant at the outlet of heat exchanger 130 may be the liquid state or the gas-liquid two-phase state depending on the state of operation of refrigeration cycle apparatus 6. The refrigerant flowing through pipe PP12 is thus liquid refrigerant or wet steam depending on the state of operation of refrigeration cycle apparatus 6. The refrigerant flowing through pipe PP12 is made wet steam having a density smaller than that of liquid refrigerant, thereby reducing the amount of refrigerant in pipe PP12.

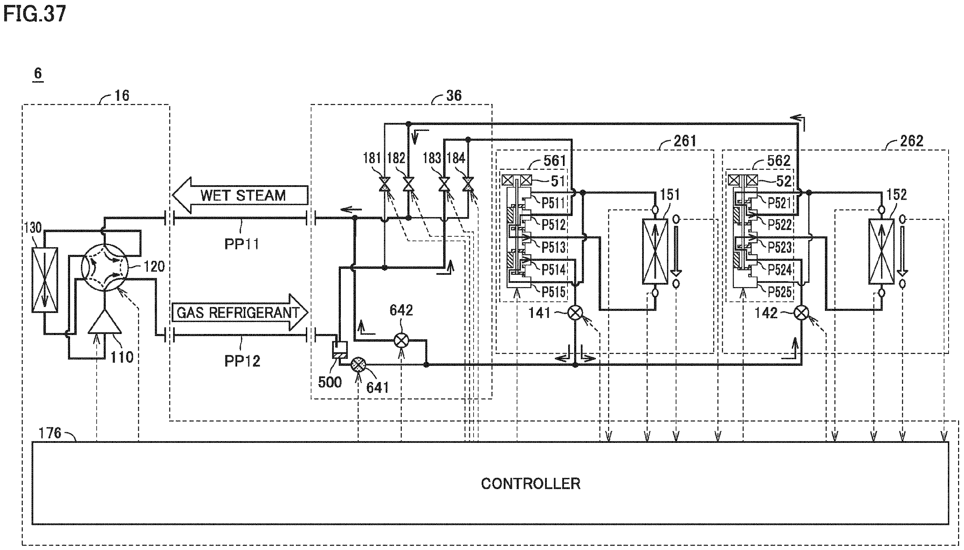

Fig. 37 shows the functional configuration of refrigeration cycle apparatus 6 according to Embodiment 6, as well as a flow of refrigerant in the heating-dominant mode. In the heating-dominant mode, controller 176 closes on-off valves 181 and 184 and opens on-off valves 182 and 183. Controller 176 closes expansion valve 641 and opens expansion valve 642. The refrigerant circulates in the order of compressor 110, six-way valve 120, pipe PP12, gas-liquid separator 500, on-off valve 183, flow path switching unit 561, heat exchanger 151, flow path switching unit 561, expansion valve 141, expansion valve 642, pipe PP11, six-way valve 120, heat exchanger 130, and six-way valve 120. In the heating-dominant mode, heating is performed in indoor unit 261. Also, the refrigerant circulates in the order of compressor 110, six-way valve 120, pipe PP12, gas-liquid separator 500, on-off valve 183, flow path switching unit 561, heat exchanger 151, flow path switching unit 561, expansion valve 141, expansion valve 142, flow path switching unit 562, heat exchanger 152, flow path switching unit 562, on-off valve 182, pipe PP11, six-way valve 120, heat exchanger 130, and six-way valve 120. In the heating-dominant mode, cooling is performed in indoor unit 262.

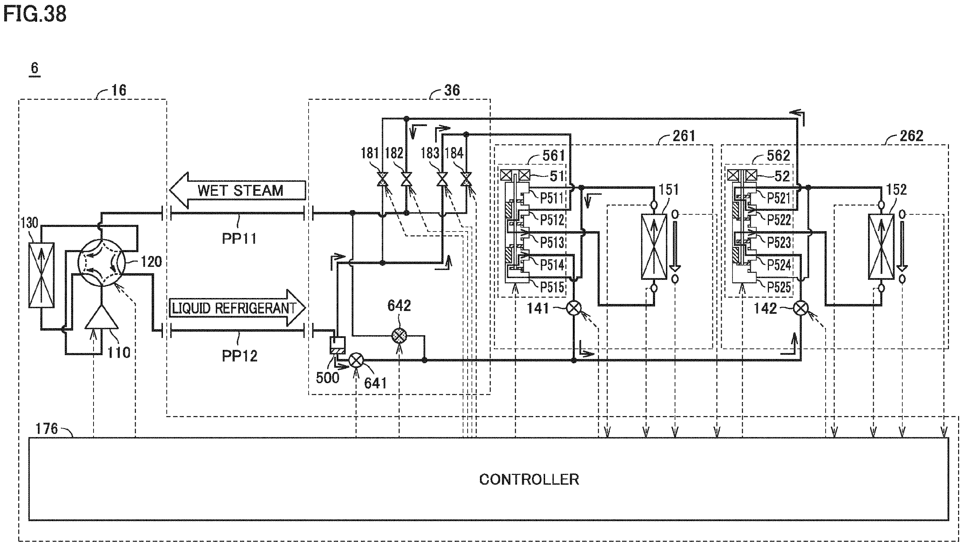

Fig. 38 shows the functional configuration of refrigeration cycle apparatus 6 according to Embodiment 6, as well as a flow of refrigerant in the cooling-dominant mode. In the cooling-dominant mode, controller 176 closes on-off valves 181 and 184 and opens on-off valves 182 and 183. Controller 176 closes expansion valve 642. The refrigerant flows in the order of compressor 110, six-way valve 120, heat exchanger 130, six-way valve 120, pipe PP12, and gas-liquid separator 500, and is separated into liquid refrigerant and gas refrigerant in gas-liquid separator 500. The gas refrigerant from gas-liquid separator 500 flows in the order of on-off valve 183, flow path switching unit 561, heat exchanger 151, flow path switching unit 561, and expansion valve 141. The liquid refrigerant from gas-liquid separator 500 flows through expansion valve 641 and then meets the wet steam from expansion valve 141, and the mixture flows in the order of expansion valve 142, flow path switching unit 562, heat exchanger 152, flow path switching unit 562, on-off valve 182, pipe PP11, and six-way valve 120. In the cooling-dominant mode, heating is performed in indoor unit 261, and cooling is performed in indoor unit 262. Note that expansion valve 642 may be opened depending on the state of operation of refrigeration cycle apparatus 6 to bypass the refrigerant from pipe PP12 to pipe PP11. Also, the state of the refrigerant at the outlet of heat exchanger 130 may be the liquid state or the gas-liquid two-phase state depending on the state of operation of refrigeration cycle apparatus 6. The refrigerant flowing through pipe PP12 is thus liquid refrigerant or wet steam depending on the state of operation of refrigeration cycle apparatus 6.

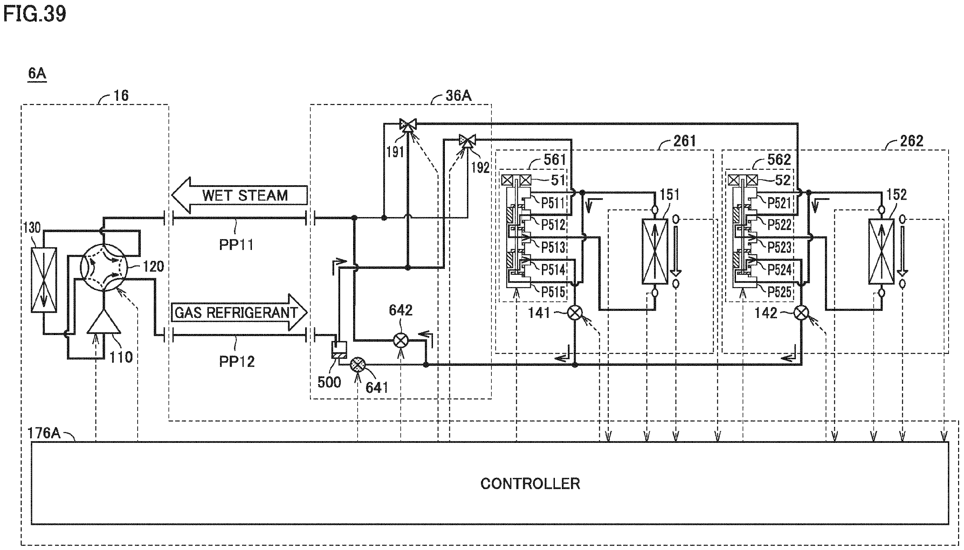

Fig. 39 shows a functional configuration of a refrigeration cycle apparatus 6A according to Modification 1 of Embodiment 6. In the configuration of refrigeration cycle apparatus 6A shown in Fig. 39, on-off valves 181 and 182 of flow divider 36 shown in Fig. 35 are replaced by a three-way valve 191 of a flow divider 36A, and on-off valves 183 and 184 are replaced by a three-way valve 192.

As shown in Fig. 39, three-way valve 191 is connected between pipe PP11 and flow path switching unit 562 and is connected between gas-liquid separator 500 and flow path switching unit 562. Three-way valve 192 is connected between pipe PP11 and flow path switching unit 561 and is connected between gas-liquid separator 500 and flow path switching unit 561. Controller 176A controls three-way valves 191 and 192.

Flow divider 36 shown in Fig. 35 includes four on-off valves 181 to 184, whereas a flow divider 36A shown in Fig. 39 includes two three-way valves 191 and 192. The use of a three-way valve in place of the on-off valve can reduce the number of components required for the refrigeration cycle apparatus.

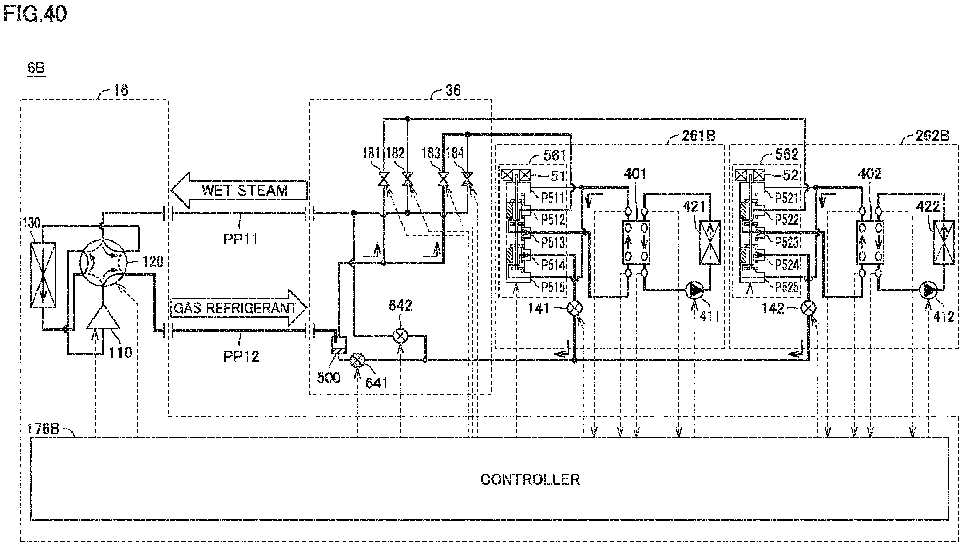

Fig. 40 shows a functional configuration of a refrigeration cycle apparatus 6B according to Modification 2 of Embodiment 6. The configuration of indoor unit 261B shown in Fig. 40 is obtained by replacing heat exchanger 151 of indoor unit 261 shown in Fig. 35 by a cascade heat exchanger 401 and also by adding a pump 411 and a heat exchanger 421 to the configuration of indoor unit 261. Also, the configuration of indoor unit 262B shown in Fig. 40 is obtained by replacing heat exchanger 152 of indoor unit 262 shown in Fig. 35 by a cascade heat exchanger 402 and by adding a pump 412 and a heat exchanger 422 to the configuration of indoor unit 262. Refrigeration cycle apparatus 6B is a two-pipe, cascade refrigeration cycle apparatus. Controller 176B controls pump 411 to circulate a heating medium between cascade heat exchanger 401 and heat exchanger 421. Controller 176B controls pump 412 to circulate the heating medium between cascade heat exchanger 402 and heat exchanger 422.

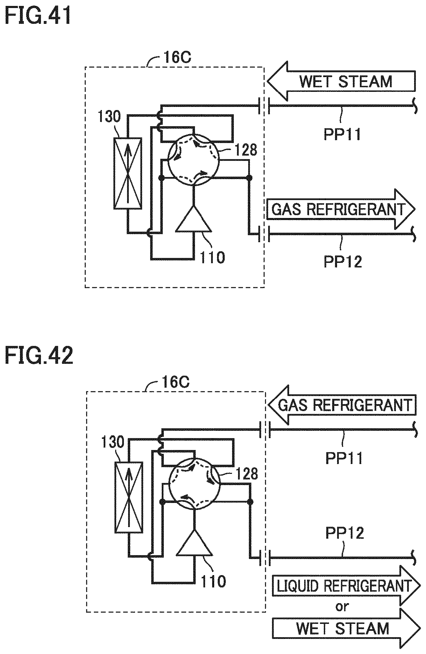

An eight-way valve can be used in place of six-way valve 120 accommodated in outdoor unit 16 shown in Fig. 35, as in outdoor unit 16C shown in Figs. 41 and 42. Fig. 41 shows a flow of refrigerant in the all-heating mode and the heating-dominant mode, and Fig. 42 shows a flow of refrigerant in the all-cooling mode and the cooling-dominant mode. As shown in Figs. 41 and 42, the use of eight-way valve 128 can keep the direction of the refrigerant flowing through heat exchanger 130 at a counterflow or parallel flow irrespective of the operation mode.

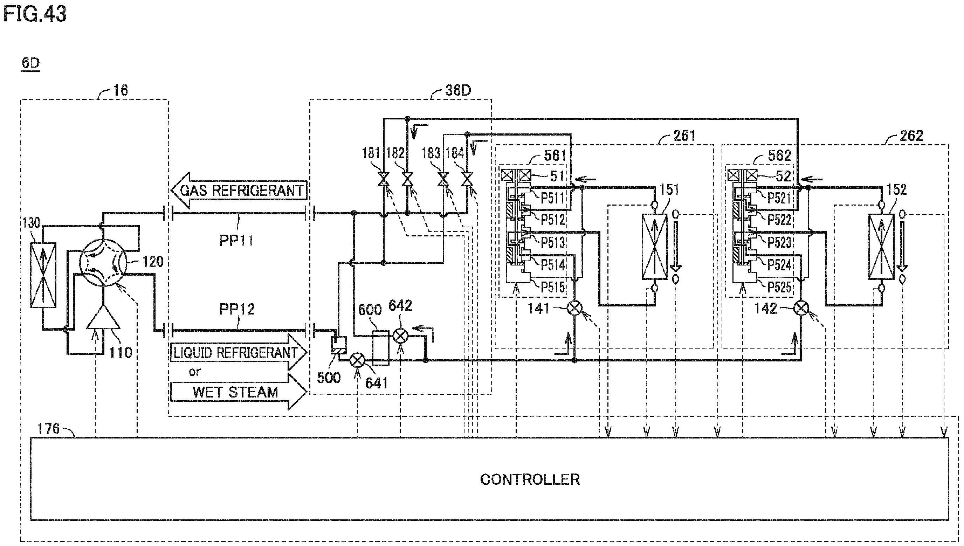

Fig. 43 shows a functional configuration of a refrigeration cycle apparatus 6D according to Modification 4 of Embodiment 6, as well as a flow of refrigerant in the all-cooling mode. The configuration of refrigeration cycle apparatus 4D shown in Fig. 43 is obtained by replacing controller 176 of refrigeration cycle apparatus 6 shown in Fig. 36 by a controller 176D and by adding an internal heat exchanger 600. Internal heat exchanger 600 is connected between expansion valve 641 and expansion valve 641 and is connected between expansion valve 642 and pipe PP11. Controller 176D opens expansion valve 642 in the all-cooling mode.

Part of the refrigerant from expansion valve 641 flows toward expansion valve 642. The refrigerant adiabatically inflates when flowing through expansion valve 642 and turns into low-temperature, low-pressure refrigerant. In internal heat exchanger 600, the refrigerant from expansion valve 641 is cooled by the refrigerant from expansion valve 642. The degree of supercooling of the refrigerant flowing into indoor units 261 and 262 increases. Consequently, the heat exchange efficiency of heat exchangers 151 and 152 can be improved.

The refrigeration cycle apparatuses according to Embodiment 6 and the modifications can improve the heat exchange capability of the heat exchanger, thereby improving the performance of the refrigeration cycle apparatus, as in Embodiment 1.

Embodiment 7

Embodiment 6 has described the two-pipe refrigeration cycle apparatus including a plurality of indoor units and capable of simultaneously performing heating and cooling. Embodiment 7 will describe a three-pipe refrigeration cycle apparatus capable of simultaneously performing heating and cooling.

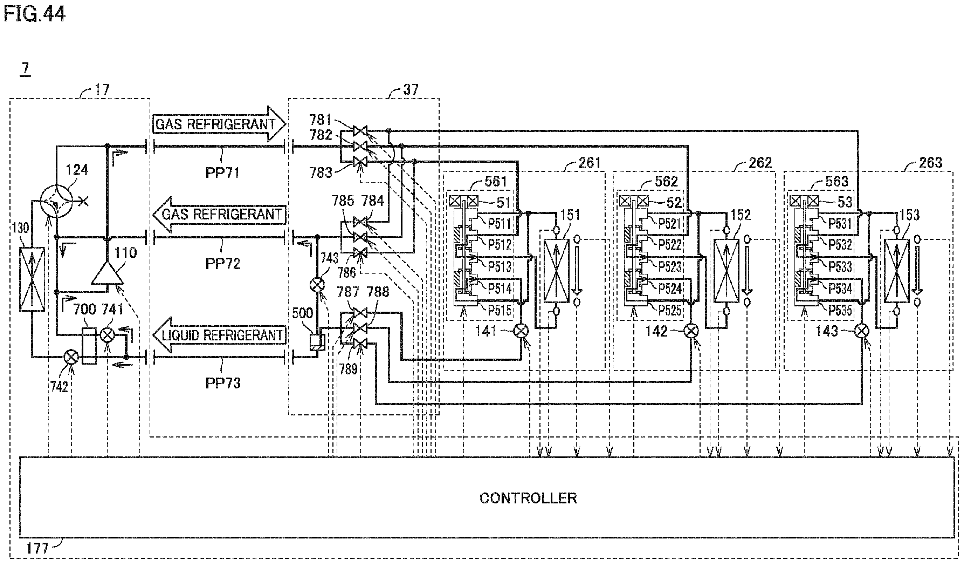

Fig. 44 shows a functional configuration of a refrigeration cycle apparatus 7 according to Embodiment 7, as well as a flow of refrigerant in the all-heating mode. As shown in Fig. 44, refrigeration cycle apparatus 7 includes an outdoor unit 17, a flow divider 37, indoor units 261 to 263, and a controller 177.

Outdoor unit 17 accommodates compressor 110, four-way valve 124, heat exchanger 130, expansion valves 741 and 742, and an internal heat exchanger 700. Outdoor unit 17 is connected to flow divider 37 by pipes PP71 to PP73. The discharge port of compressor 110 and four-way valve 124 are connected to pipe PP71. The suction port of compressor 110, four-way valve 124, and internal heat exchanger 600 are connected to pipe PP72. Expansion valves 741 and 742 are connected to pipe PP73. The suction port of compressor 110 is connected to four-way valve 124 and internal heat exchanger 700. Heat exchanger 130 is connected between four-way valve 124 and expansion valve 742. Internal heat exchanger 700 is connected between expansion valve 741 and the suction port of compressor 110 and is connected between expansion valve 742 and pipe PP73.

Flow divider 37 is controlled by controller 177 to distribute the refrigerant from outdoor unit 17 to indoor units 261 to 263. Flow divider 37 includes on-off valves 781 to 789, an expansion valve 743, and gas-liquid separator 500.

On-off valve 781 is connected between pipe PP71 and indoor unit 263. On-off valve 782 is connected between pipe PP71 and indoor unit 262. On-off valve 783 is connected between pipe PP71 and indoor unit 261.

On-off valve 784 is connected between pipe PP72 and indoor unit 263. On-off valve 785 is connected between pipe PP72 and indoor unit 262. On-off valve 786 is connected between pipe PP72 and indoor unit 261.

Gas-liquid separator 500 is connected to pipe PP73. On-off valve 787 is connected between gas-liquid separator 500 and indoor unit 261. On-off valve 788 is connected between gas-liquid separator 500 and indoor unit 262. On-off valve 789 is connected between gas-liquid separator 500 and indoor unit 263. Expansion valve 743 is connected between pipe PP72 and gas-liquid separator 500.

In indoor unit 261, valve ports P511 and P515 of switch valve 51 are connected to one port of heat exchanger 151. Valve port P512 is connected to on-off valves 783 and 786. Valve port P513 is connected to the other port of heat exchanger 151. Valve port P514 is connected to expansion valve 141. Expansion valve 141 is connected to on-off valve 787.

In indoor unit 262, valve ports P521 and P525 of switch valve 52 are connected to one port of heat exchanger 152. Valve port P522 is connected to on-off valves 782 and 785. Valve port P523 is connected to the other port of heat exchanger 151. Valve port P524 is connected to expansion valve 142. Expansion valve 142 is connected to on-off valve 788.

Indoor unit 263 includes a flow path switching unit 563 having a switch valve 53, an expansion valve 143, and a heat exchanger 153. Valve ports P531 and P535 of switch valve 53 are connected to one port of heat exchanger 153. Valve port P532 is connected to on-off valves 781 and 784. Valve port P533 is connected to the other port of heat exchanger 153. Valve port P534 is connected to expansion valve 143.

Expansion valve 143 is connected to on-off valve 789.

Controller 177 controls compressor 110 and four-way valve 124. Controller 177 controls on-off valves 781 to 789. Controller 177 controls expansion valves 141 to 143 and 741 to 743. Controller 176 controls switch valves 51 to 53.

In the all-heating mode, controller 177 opens on-off valves 781 to 783 and 787 to 789 and closes on-off valves 784 to 786. Controller 177 closes expansion valve 743.

The refrigerant circulates in the order of compressor 110, pipe PP71, on-off valve 781, valve ports P532 and valve port P533 of switch valve 53, heat exchanger 153, valve port P535, valve port P534, expansion valve 143, on-off valve 789, gas-liquid separator 500, pipe PP73, expansion valve 742, heat exchanger 130, and four-way valve 124.

The refrigerant circulates in the order of compressor 110, pipe PP71, on-off valve 782, valve port P522 and valve port P523 of switch valve 52, heat exchanger 152, valve port P525, valve port P524, expansion valve 142, on-off valve 788, gas-liquid separator 500, pipe PP73, expansion valve 742, heat exchanger 130, and four-way valve 124.

The refrigerant circulates in the order of compressor 110, pipe PP71, on-off valve 783, valve port P512 and valve port P513 of switch valve 51, heat exchanger 151, valve port P515, valve port P514, expansion valve 141, on-off valve 787, gas-liquid separator 500, pipe PP73, expansion valve 742, heat exchanger 130, and four-way valve 124.

The gas refrigerant separated in gas-liquid separator 500 reaches the suction port of compressor 110 via expansion valve 743 and pipe PP72.

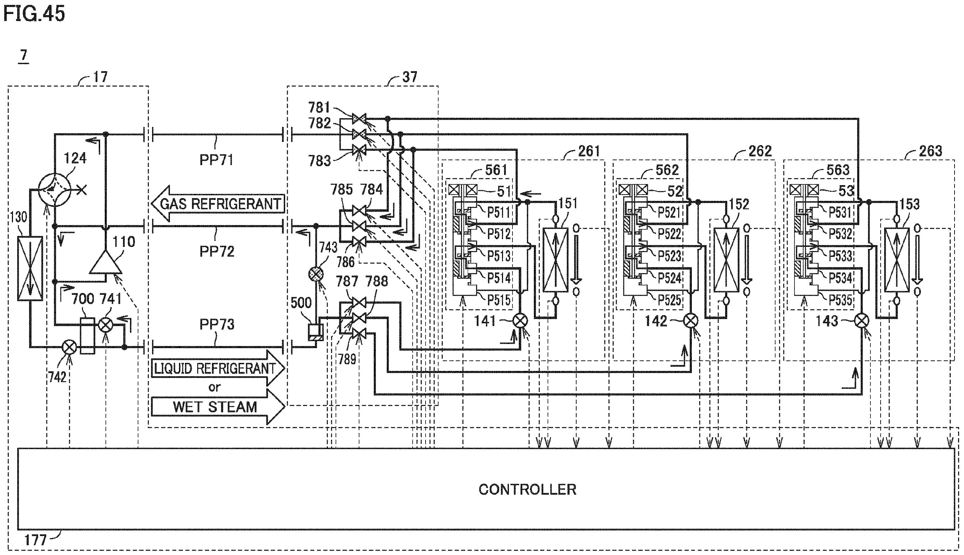

Fig. 45 shows the functional configuration of refrigeration cycle apparatus 7 according to Embodiment 7, as well as a flow of refrigerant in the all-cooling mode. In the all-cooling mode, controller 177 closes on-off valves 781 to 783 and opens on-off valves 785 to 786 and 787 to 789. Controller 177 closes expansion valve 743. Expansion valve 743 may be opened depending on the state of operation of refrigeration cycle apparatus 7 to bypass the refrigerant from pipe PP73 to pipe PP72.

The refrigerant circulates in the order of compressor 110, four-way valve 124, heat exchanger 130, expansion valve 742, pipe PP73, gas-liquid separator 500, on-off valve 787, expansion valve 141, valve port P514 and valve port P513 of switch valve 51, heat exchanger 151, valve port P511, valve port P512, on-off valve 786, and pipe PP72.

The refrigerant circulates in the order of compressor 110, four-way valve 124, heat exchanger 130, expansion valve 742, pipe PP73, gas-liquid separator 500, on-off valve 788, expansion valve 142, valve port P524 and valve port P523 of switch valve 52, heat exchanger 152, valve port P521, valve port P522, on-off valve 785, and pipe PP72.

The refrigerant circulates in the order of compressor 110, four-way valve 124, heat exchanger 130, expansion valve 742, pipe PP73, gas-liquid separator 500, on-off valve 789, expansion valve 143, valve port P534 and valve port P533 of switch valve 53, heat exchanger 153, valve port P531, valve port P532, on-off valve 784, and pipe PP72.

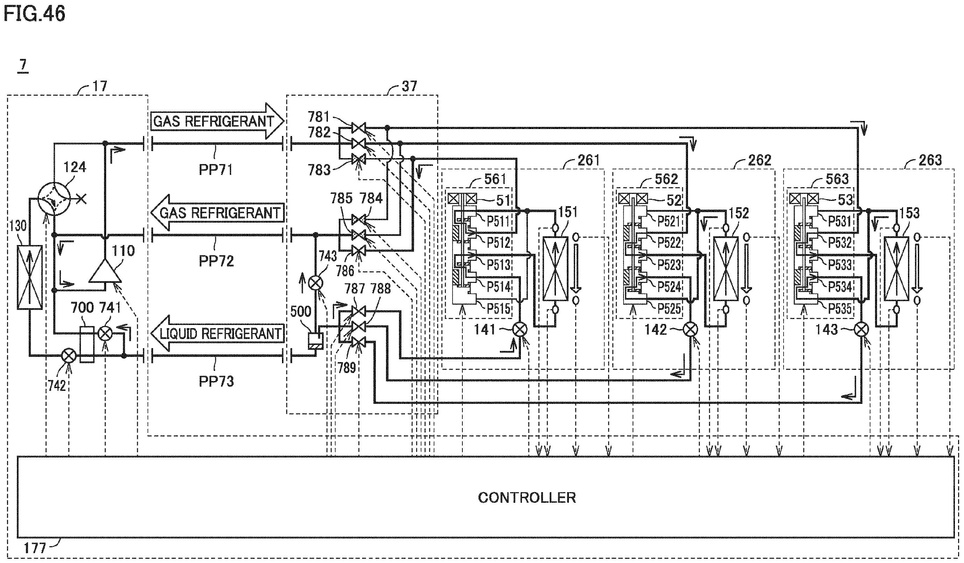

Fig. 46 shows the functional configuration of refrigeration cycle apparatus 7 according to Embodiment 7, as well as a flow of refrigerant in the heating-dominant mode. In the heating-dominant mode, controller 177 opens on-off valves 781, 782, and 786 to 789 and closes on-off valves 783 to 785. Controller 177 opens expansion valve 743.

The refrigerant circulates in the order of compressor 110, pipe PP71, on-off valve 781, valve port P532 and valve port P533 of switch valve 53, heat exchanger 153, valve port P535, valve port P534, expansion valve 143, on-off valve 789, gas-liquid separator 500, pipe PP73, expansion valve 742, heat exchanger 130, and four-way valve 124. In the heating-dominant mode, heating is performed in indoor unit 263.

The refrigerant circulates in the order of compressor 110, pipe PP71, on-off valve 782, valve port P522 and valve port P523 of switch valve 52, heat exchanger 152, valve port P525, valve port P524, expansion valve 142, on-off valve 788, gas-liquid separator 500, pipe PP73, expansion valve 742, heat exchanger 130, and four-way valve 124. In the heating-dominant mode, heating is performed in indoor unit 262.

The refrigerant circulates in the order of compressor 110, pipe PP71, on-off valve 781, valve port P532 and valve port P533 of switch valve 53, heat exchanger 153, valve port P535, valve port P534, expansion valve 143, on-off valve 789, on-off valve 787, expansion valve 141, valve port P514 and valve port P513 of switch valve 51, heat exchanger 151, valve port P511, valve port P512, on-off valve 786, and pipe PP72. The refrigerant also circulates in the order of compressor 110, pipe PP71, on-off valve 782, valve port P522 and valve port P523 of switch valve 52, heat exchanger 152, valve port P525, valve port P524, expansion valve 142, on-off valve 788, on-off valve 787, expansion valve 141, valve port P514 and valve port P513 of switch valve 51, heat exchanger 151, valve port P511, valve port P512, on-off valve 786, and pipe PP72. In the heating-dominant mode, cooling is performed in indoor unit 261.

The gas refrigerant separated in gas-liquid separator 500 reaches the suction port of compressor 110 via expansion valve 743 and pipe PP72.

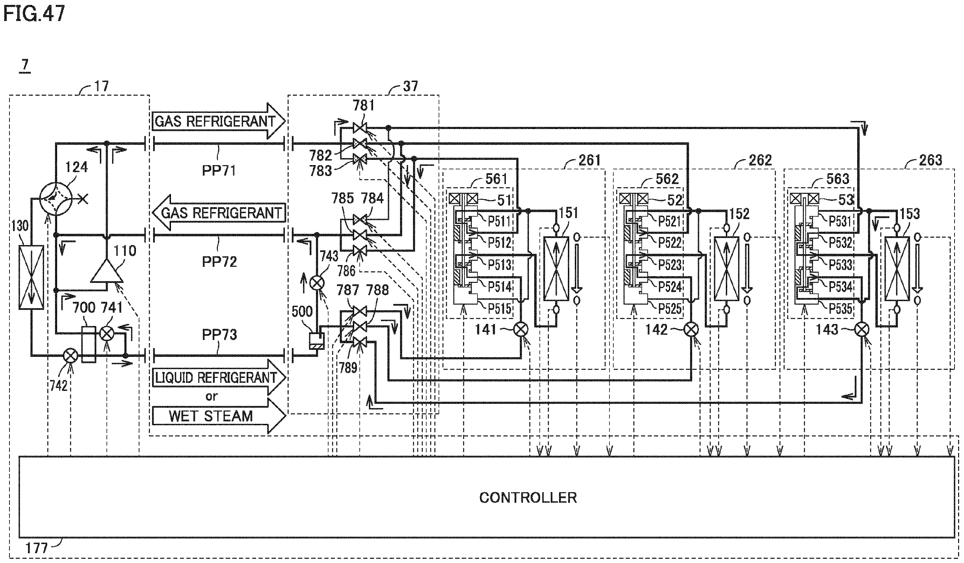

Fig. 47 shows the functional configuration of refrigeration cycle apparatus 7 according to Embodiment 7, as well as a flow of refrigerant in the cooling-dominant mode. In the cooling-dominant mode, controller 177 opens on-off valves 781 and 785 to 789 and closes on-off valves 782 to 784. Controller 177 opens expansion valve 743.

The refrigerant circulates in the order of compressor 110, four-way valve 124, heat exchanger 130, expansion valve 742, pipe PP73, gas-liquid separator 500, on-off valve 787, expansion valve 141, valve port P514 and valve port P513 of switch valve 51, heat exchanger 151, valve port P511, valve port P512, on-off valve 786, and pipe PP72. In the cooling-dominant mode, cooling is performed in indoor unit 261.

The refrigerant circulates in the order of compressor 110, four-way valve 124, heat exchanger 130, expansion valve 742, pipe PP73, gas-liquid separator 500, on-off valve 788, expansion valve 142, valve port P524 and valve port P523 of switch valve 52, heat exchanger 152, valve port P521, valve port P522, on-off valve 785, and pipe PP72. In the cooling-dominant mode, cooling is performed in indoor unit 262.

The refrigerant circulates in the order of compressor 110, pipe PP71, on-off valve 781, valve port P532 and valve port P533 of switch valve 53, heat exchanger 153, valve port P535, valve port P534, expansion valve 143, on-off valve 789, gas-liquid separator 500, expansion valve 743, and pipe PP72. In the cooling-dominant mode, heating is performed in indoor unit 263.

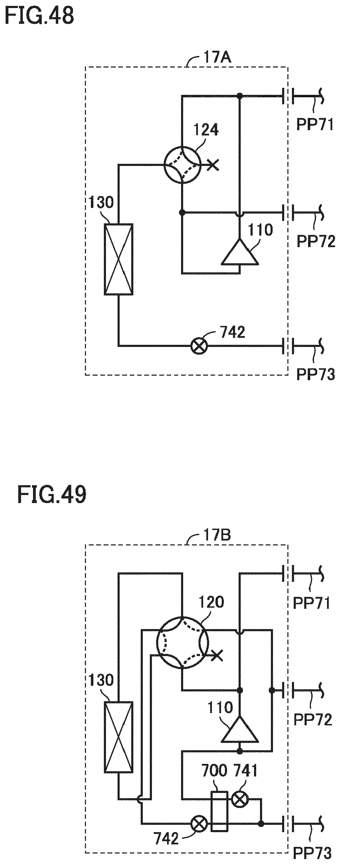

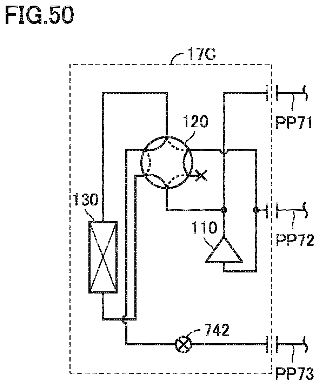

Internal heat exchanger 700 accommodated in outdoor unit 17 is not an essential component. As in outdoor unit 17A shown in Fig. 48, for example, internal heat exchanger 600 may not be disposed. Alternatively, four-way valve 124 accommodated in outdoor unit 17 can be replaced by six-way valve 120 as in outdoor unit 17B shown in Fig. 49 and outdoor unit 17C shown in 50. Fig. 49 shows a case in which outdoor unit 17B accommodates internal heat exchanger 700, and Fig. 50 shows a case in which outdoor unit 17C accommodates no internal heat exchanger.

As described above, the refrigeration cycle apparatuses according to Embodiment 7 and the modifications can improve the heat exchange capability of the heat exchanger, thereby improving the performance of the refrigeration cycle apparatus, as in Embodiment 1.

The embodiments disclosed herein are also intended to be implemented in combination as appropriate within a consistent scope. It should be understood that the embodiments disclosed herein are illustrative and non-restrictive in every respect. The scope of the present invention is defined by the terms of the claims, rather than the description above, and is intended to include any modifications within the scope of the claims.

REFERENCE SIGNS LIST

1, 2-7, 2A, 2B, 4A-4D, 5A, 6A, 6B, 6D, 7 refrigeration cycle apparatus, 10, 13, 14A, 14D, 15, 16, 16C, 17, 17A-17C outdoor unit, 20, 23, 24, 24A, 25, 261, 261B, 262, 262B, 263 indoor unit, 36, 36A, 37 flow divider, 40, 50-53, 60 switch valve, 100 check valve, 110, 112 compressor, 120, 122 six-way valve, 124 four-way valve, 128 eight-way valve, 130, 132, 150-153, 400-402, 420-423 heat exchanger, 600, 700 internal heat exchanger, 140-143, 641, 642, 741-743 expansion valve, 160, 162, 162A, 361, 362, 561-563 flow path switching unit, 170, 172, 173, 174, 174B, 174D, 175, 175A, 176, 176A, 176B, 176D, 177 controller, 180 indoor fan, 181-184, 200, 781-789 on-off valve, 191, 192 three-way valve, 410-412 pump, 431-434 flow regulating valve, 500 gas-liquid separator, M40 motor, P41-P44, P51-P55, P61-P66, P511-P515, P521-P525, P531-P535 valve port, P131, P132, P151, P152, P421, P422, P451, P452, P453, P454, P521, P525 port, PP11, PP12, PP71-PP73 pipe, VB45 valve body.

**Claims**

1. A refrigeration cycle apparatus (1) in which refrigerant circulates in a first direction of circulation in an order of a first compressor (110), a first heat exchanger (130), a first expansion valve (140), and a second heat exchanger (150), the refrigeration cycle apparatus (1) comprising:

   a first flow path switching unit (160) connected between the first expansion valve (140) and the second heat (150) exchanger and connected between the second heat exchanger (150) and the first compressor (110); and
   a controller (170) configured to control the first flow path switching unit (160) to switch a flow direction of the refrigerant flowing through the second heat exchanger (150) between a first flow direction and a second flow direction opposite to the first flow direction,
   the first flow path switching unit (160) including a first switch valve (40),
   the first switch valve (40) having

      a motor (M40) controlled by the controller (170),
      a valve body (VB45) rotated by the motor (M40) about a central axis extending longitudinally of the valve body (VB45), the rotational motion of the valve body (VB45) being converted to a linear motion along the central axis by engagement of the valve body (VB45) with a screw mechanism, and
      a plurality of valve ports (P41, P42, P43, P44), a communication state of which in the first switch valve (40) being switched depending on a position of the valve body (VB45).

2. The refrigeration cycle apparatus (1) according to claim 1, further comprising a fluid moving unit (180) configured to move a fluid in a direction opposed to the first flow direction, the fluid being subjected to heat exchange with the refrigerant in the second heat exchanger (150).

3. The refrigeration cycle apparatus (1) according to claim 2, wherein
the fluid includes air, and

the fluid moving unit includes a fan (180) that flows the air in the direction (AD1) opposed to the first flow direction.

4. The refrigeration cycle apparatus (4) according to claim 2, further comprising a third heat exchanger (420), wherein the fluid moving unit includes a pump (410), and
the pump (410) is configured to circulate the fluid between the second heat exchanger (400) and the third heat exchanger (420).

5. The refrigeration cycle apparatus (1) according to claim 2 or 3, further comprising a second switch valve (120) configured to switch a direction of circulation of the refrigerant between the first direction of circulation and a second direction of circulation in an order of the first compressor (110), the second heat exchanger (150), the first expansion valve (140), and the first heat exchanger (130),
wherein the controller (170) is configured to control the first flow path switching unit (160) to set the flow direction to the first flow direction in a first case in which the direction of circulation is the second direction of circulation.

6. The refrigeration cycle apparatus (1) according to claim 5, wherein the controller (170) is configured to control the first flow path switching unit (160) to set the flow direction to the first flow direction in a second case in which the direction of circulation is the first direction of circulation.

7. The refrigeration cycle apparatus (1) according to claim 6, wherein
the second heat exchanger (150) includes a first port (P151) and a second port (P152),
the first flow path switching unit (160) further includes a check valve (100),
the first switch valve (40) has a first valve port (P41), a second valve port (P42), a third valve port (P43), and a fourth valve port (P44) as the plurality of valve ports,
the first valve port (P41) is connected to the second port (P152),
the second valve port (P42) is connected to a first flow path (PP11) between the first expansion valve (140) and the first flow path switching unit (160),
the third valve port (P43) is connected to the first port (P151),
the fourth valve port (P44) is connected to a second flow path (PP12) between the first compressor (110) and the first flow path switching unit(160),
the check valve (100) is connected between the second port (P152) and the second flow path (PP12) to allow the refrigerant from the second port (P152) to flow toward the second flow path (PP12), and
the controller (170) is configured to

in the first case, control the motor (M40) to bring the first valve port (P41) and the second valve port (P42) into communication with each other and bring the third valve port (P43) and the fourth valve port (P44) into communication with each other, and
in the second case, control the motor (M40) to bring the second valve port (P42) and the third valve port (P43) into communication with each other.

8. The refrigeration cycle apparatus (2) according to claim 5, wherein
the second heat exchanger (150) includes a first port (P151) and a second port (P152),
the first flow direction is a direction from the first port (P151) toward the second port (P152), and
the controller (172) is configured to

in a second case in which the direction of circulation is the first direction of circulation and a first temperature of the refrigerant at the first port (P151) is lower than a second temperature of the refrigerant at the second port (P152), control the first flow path switching unit (162) to set the flow direction to the first flow direction, and
in a third case in which the direction of circulation is the first direction of circulation and the first temperature is higher than the second temperature, control the first flow path switching unit (162) to set the flow direction to the second flow direction.

9. The refrigeration cycle apparatus (2) according to claim 5, wherein
the second heat exchanger (150) includes a first port (P151) and a second port (P152),
the first flow direction is a direction in which the refrigerant flows through the second heat exchanger (150) from the first port (P151) to the second port (P152), and
the controller (172) is configured to

calculate a logarithmic mean temperature difference from a first difference between a first temperature of the fluid subjected to heat exchange with the refrigerant at the second port (P152) and a second temperature of the refrigerant at the second port (P152) and a second difference between a third temperature of the fluid subjected to heat exchange with the refrigerant at the first port (P151) and a fourth temperature of the refrigerant at the first port (P151),

in a second case in which the direction of circulation is the first direction of circulation and a first logarithmic mean temperature difference is greater than a second logarithmic mean temperature difference, control the first flow path switching unit (162) to set the flow direction to the first flow direction, the first logarithmic mean temperature difference being the logarithmic mean temperature difference when the direction of circulation is the first direction of circulation, the second logarithmic mean temperature difference being the logarithmic mean temperature difference when the flow direction is the second flow direction, and

in a third case in which the direction of circulation is the first direction of circulation and the first logarithmic mean temperature difference is smaller than the second logarithmic mean temperature difference, control the first flow path switching unit (162) to set the flow direction to the second flow direction.

10. The refrigeration cycle apparatus (2) according to claim 8 or 9, wherein the controller (172) is configured to, when switching the flow direction, control the first compressor (110) to set an amount of the refrigerant discharged by the first compressor (110) per unit time to be smaller than the reference amount.

11. The refrigeration cycle apparatus (2) according to claim 10, wherein the controller (172) is configured to control the first flow path switching unit (162) to switch the flow direction after the amount of refrigerant falls below a reference amount.

12. The refrigeration cycle apparatus (2) according to any one of claims 8 to 11, further comprising an on-off valve (200), wherein

the first switch valve (40) has a first valve port (P41), a second valve port (P42), a third valve port (P43), and a fourth valve port (P44),

the first valve port (P41) is connected to the second port (P152),

the second valve port (P42) is connected to a first flow path (PP11) between the first expansion valve (140) and the first flow path switching unit (162),

the third valve port (P43) is connected to the first port (P151),

the fourth valve port (P44) is connected to a second flow path (PP12) between the first compressor (110) and the first flow path switching unit (162),

the on-off valve (200) is connected between the second port (P152) and the second flow path (PP12), and

the controller (172) is configured to

in the first case, control the motor (M40) to bring the first valve port (P41) and the second valve port (P42) into communication with each other and bring the third valve port (P43) and the fourth valve port (P44) into communication with each other,

in the second case, control the motor (M40) to bring the second valve port (P42) and the third valve port (P43) into communication with each other and open the on-off valve (200), and

in the third case, control the motor (M40) to bring the first valve port (P41) and the second valve port (P42) into communication with each other, bring the third valve port (P43) and the fourth valve port (P44) into communication with each other, and close the on-off valve (200).

13. The refrigeration cycle apparatus (2B) according to any one of claims 8 to 11, wherein

the first switch valve (50) has a first valve port (P51), a second valve port (P52), a third valve port (P53), a fourth valve port (P54), and a fifth valve port (P55),

the first and fifth valve ports (P51, P55) are connected to the first port (P151), the second valve port (P52) is connected to a first flow path (PP11) between the first expansion valve (140) and the first flow path switching unit (361),

the third valve port (P53) is connected to the second port (P152),

the fourth valve port (P54) is connected to a second flow path (PP12) between the first compressor (110) and the first flow path switching unit (361), and

the controller (172) is configured to

in the first case, control the motor to bring the second valve port (P52) and the third valve port (P53) into communication with each other and bring the fourth valve port (P54) and the fifth valve port (P55) into communication with each other,

in the second case, control the motor to bring the first valve port (P51) and the second valve port (P52) into communication with each other and bring the third valve port (P53) and the fourth valve port (P54) into communication with each other, and

in the third case, control the motor to bring the second valve port (P52) and the third valve port (P53) into communication with each other and bring the fourth valve port (P54) and the fifth valve port (P55) into communication with each other.

**14.** The refrigeration cycle apparatus (2A) according to any one of claims 8 to 11, wherein

the first switch valve (60) has a first valve port (P61), a second valve port (P62), a third valve port (P63), a fourth valve port (P64), a fifth valve port (P65), and a sixth valve port (P66),

the first and sixth valve ports (P61, P66) are connected to the first port (P151), the second valve port (P62) is connected to a first flow path (PP11) between the first expansion valve (140) and the first flow path switching unit (162A),

the third and fourth valve ports (P63, P64) are connected to the second port (P152),

the fifth valve port (P65) is connected to a second flow path (PP12) between the first compressor (110) and the first flow path switching unit (162A), and

the controller (172) is configured to

in the first case, control the motor to bring the second valve port (P62) and the third valve port (P63) into communication with each other and bring the fifth valve port (P65) and the sixth valve port (P66) into communication with each other,

in the second case, control the motor to bring the first valve port (P61) and the second valve port (P62) into communication with each other and bring the fourth valve port (P64) and the fifth valve port (P65) into communication with each other, and

in the third case, control the motor to bring the second valve port (P62) and the third valve port (P63) into communication with each other and bring the fifth valve port (P65) and the sixth valve port (P66) into communication with each other.

**15.** The refrigeration cycle apparatus (3) according to any one of claims 1 to 14, further comprising a second flow path switching unit (362) connected between the first compressor (110) and the first heat exchanger (130) and connected between the first heat exchanger (130) and the first expansion valve (140),

wherein the controller (173) is configured to control the second flow path switching unit (362) to switch the flow direction of the refrigerant flowing through the first heat exchanger (130) between a third flow direction and a fourth flow direction opposite to the third flow direction.

**16.** The refrigeration cycle apparatus (4D) according to claim 1 or 2, further comprising:

a second compressor (112);
a third heat exchanger (132); and
a second expansion valve (142),
wherein the refrigerant circulates in the first direction of circulation and circulates in an order of the second compressor (112), the third heat exchanger (132), the second expansion valve (142), and the second heat exchanger (400).

**17.** The refrigeration cycle apparatus (5) according to claim 5, further comprising:

a second expansion valve (142);
a third heat exchanger (152); and
a second flow path switching unit (562) connected between the second expansion valve (142) and the third heat exchanger (152) and connected between the third heat exchanger (152) and the first compressor (110), wherein
operation modes of the refrigeration cycle apparatus (5) include a first mode and a second mode,
in the first mode, the refrigerant circulates in the second direction of circulation and circulates in an order of the first compressor (110), the third heat exchanger (152), the second expansion valve (142), and the first heat exchanger (130),
in the second mode, the refrigerant circulates in the first direction of circulation and circulates in an order of the first compressor (110), the first heat exchanger (130), the second expansion valve (142), and the third heat exchanger (152), and
the controller (175) is configured to control the second flow path switching unit (562) to switch the flow direction of the refrigerant flowing through the third heat exchanger (152) between a third flow direction and a fourth flow direction opposite to the third flow direction.

**18.** The refrigeration cycle apparatus (6) according to claim 17, further comprising:

a first indoor unit (261) that accommodates the first expansion valve (141), the second heat exchanger (151), and the first flow path switching unit (561);

a second indoor unit (262) that accommodates the second expansion valve (142), the third heat exchanger (152), and the second flow path switching unit (562); and

a flow divider (36) configured to be controlled by the controller (176) to distribute the refrigerant from the first compressor (110) to the first and second indoor units (261, 262), wherein

the operation modes of the refrigeration cycle apparatus (6) further include a third mode and a fourth mode,

in the third mode, the refrigerant circulates in an order of the first compressor (110), the flow divider (36), the first indoor unit (261), the flow divider (36), and the first heat exchanger (130) and circulates in an order of the first compressor (110), the flow divider (36), the first indoor unit (261), the second indoor unit (262), and the flow divider (36), and

in the fourth mode, the refrigerant circulates in an order of the first compressor (110), the first heat exchanger (130), the flow divider (36), the first indoor unit (261), the second indoor unit (262), and the flow divider (36).

**19.** The refrigeration cycle apparatus (6) according to claim 18, further comprising an outdoor unit (16) that accommodates the first compressor (110), the first heat exchanger (130), and the second switch valve (120), wherein the refrigeration cycle apparatus (6) is a two-pipe refrigeration cycle apparatus in which the outdoor unit (16) and the flow divider (36) are connected to each other by two pipes (PP11, PP12).

**20.** The refrigeration cycle apparatus (7) according to claim 18, further comprising an outdoor unit (17) that accommodates the first compressor (110), the first heat exchanger (130), and the second switch valve (124), wherein the refrigeration cycle apparatus (7) is a three-pipe refrigeration cycle apparatus in which the outdoor unit (17) and the flow divider (37) are connected to each other by three pipes (PP71, PP72, PP73).

**Patentansprüche**

**1.** Kältekreislaufvorrichtung (1), in der Kältemittel in einer ersten Zirkulationsrichtung in der Reihenfolge eines ersten Kompressors (110), eines ersten Wärmetauschers (130), eines ersten Expansionsventils (140) und eines zweiten Wärmetauschers (150) zirkuliert, wobei die Kältekreislaufvorrichtung (1) Folgendes umfasst:

eine erste Strömungspfadumschalteinheit (160), die zwischen das erste Expansionsventil (140) und den zweiten Wärmetauscher (150) geschaltet und zwischen den zweiten Wärmetauscher (150) und den ersten Kompressor (110) geschaltet ist; und

eine Steuerung (170), die ausgelegt ist, um die erste Strömungspfadumschalteinheit (160) zu steuern, um eine Strömungsrichtung des Kältemittels, das durch den zweiten Wärmetauscher (150) strömt, zwischen einer ersten Strömungsrichtung und einer der ersten Strömungsrichtung entgegengesetzten zweiten Strömungsrichtung umzuschalten;

wobei die erste Strömungspfadumschalteinheit (160) ein erstes Umschaltventil (40) umfasst, wobei das erste Umschaltventil (40) Folgendes aufweist:

einen von der Steuerung (170) gesteuerten Motor (M40),

einen Ventilkörper (VB45), der vom Motor (M40) um eine Mittelachse gedreht wird, die sich in Längsrichtung des Ventilkörpers (VB45) erstreckt, wobei die Drehbewegung des Ventilkörpers (VB45) in eine lineare Bewegung entlang der Mittelachse umgewandelt wird, indem der Ventilkörper (VB45) mit einem Schraubenmechanismus in Eingriff gelangt, und

eine Vielzahl von Ventilanschlüssen (P41, P42, P43, P44), deren Kommunikationszustand im ersten Umschaltventil (40) abhängig von einer Position des Ventilkörpers (VB45) umgeschaltet wird.

**2.** Kältekreislaufvorrichtung (1) nach Anspruch 1, ferner umfassend eine Fluidbewegungseinheit (180), die ausgelegt ist, um ein Fluid in einer der ersten Strömungsrichtung entgegengesetzten Richtung zu bewegen, wobei das Fluid einem Wärmeaustausch mit dem Kältemittel in dem zweiten Wärmetauscher (150) unterzogen wird.

3. Kältekreislaufvorrichtung (1) nach Anspruch 2, wobei
das Fluid Luft umfasst und
die Fluidbewegungseinheit ein Gebläse (180) umfasst, das die Luft in der der ersten Strömungsrichtung entgegengesetzten Richtung (AD1) strömen lässt.

4. Kältekreislaufvorrichtung (4) nach Anspruch 2, ferner umfassend einen dritten Wärmetauscher (420), wobei
die Fluidbewegungseinheit eine Pumpe (410) umfasst und
die Pumpe (410) ausgelegt ist, um das Fluid zwischen dem zweiten Wärmetauscher (400) und dem dritten Wärmetauscher (420) zu zirkulieren.

5. Kältekreislaufvorrichtung (1) nach Anspruch 2 oder 3, ferner umfassend ein zweites Umschaltventil (120), das ausgelegt ist, um eine Zirkulationsrichtung des Kältemittels zwischen der ersten Zirkulationsrichtung und einer zweiten Zirkulationsrichtung in der Reihenfolge des ersten Kompressors (110), des zweiten Wärmetauschers (150), des ersten Expansionsventils (140) und des ersten Wärmetauschers (130) umzuschalten,
wobei die Steuerung (170) ausgelegt ist, um die erste Strömungspfadumschalteinheit (160) zu steuern, um die Strömungsrichtung in einem ersten Fall, in dem die Zirkulationsrichtung die zweite Zirkulationsrichtung ist, auf die erste Strömungsrichtung einzustellen.

6. Kältekreislaufvorrichtung (1) nach Anspruch 5, wobei die Steuerung (170) ausgelegt ist, um die erste Strömungspfadumschalteinheit (160) zu steuern, um die Strömungsrichtung in einem zweiten Fall, in dem die Zirkulationsrichtung die erste Zirkulationsrichtung ist, auf die erste Strömungsrichtung einzustellen.

7. Kältekreislaufvorrichtung (1) nach Anspruch 6, wobei
der zweite Wärmetauscher (150) einen ersten Anschluss (P151) und einen zweiten Anschluss (P152) umfasst,
die erste Strömungspfadumschalteinheit (160) ferner ein Rückschlagventil (100) umfasst,
das erste Umschaltventil (40) einen ersten Ventilanschluss (P41), einen zweiten Ventilanschluss (P42), einen dritten Ventilanschluss (P43) und einen vierten Ventilanschluss (P44) als die Vielzahl von Ventilanschlüssen aufweist,
der erste Ventilanschluss (P41) mit dem zweiten Anschluss (P152) verbunden ist,
der zweite Ventilanschluss (P42) mit einem ersten Strömungspfad (PP11) zwischen das erste Expansionsventil (140) und die erste Strömungspfadumschalteinheit (160) geschaltet ist,
der dritte Ventilanschluss (P43) mit dem ersten Anschluss (P151) verbunden ist,
der vierte Ventilanschluss (P44) mit einem zweiten Strömungspfad (PP12) zwischen den ersten Kompressor (110) und die erste Strömungspfadumschalteinheit (160) geschaltet ist,
das Rückschlagventil (100) zwischen den zweiten Anschluss (P152) und den zweiten Strömungspfad (PP12) geschaltet ist, um zu ermöglichen, dass das Kältemittel vom zweiten Anschluss (P152) zum zweiten Strömungspfad (PP12) hin strömt, und
die Steuerung (170) ausgelegt ist, um
im ersten Fall den Motor (M40) zu steuern, um den ersten Ventilanschluss (P41) und den zweiten Ventilanschluss (P42) in Kommunikation miteinander zu bringen und den dritten Ventilanschluss (P43) und den vierten Ventilanschluss (P44) in Kommunikation miteinander zu bringen, und
im zweiten Fall den Motor (M40) zu steuern, um den zweiten Ventilanschluss (P42) und den dritten Ventilanschluss (P43) in Kommunikation miteinander zu bringen.

8. Kältekreislaufvorrichtung (2) nach Anspruch 5, wobei
der zweite Wärmetauscher (150) einen ersten Anschluss (P151) und einen zweiten Anschluss (P152) umfasst,
die erste Strömungsrichtung eine Richtung vom ersten Anschluss (P151) zum zweiten Anschluss (P152) hin ist und
die Steuerung (172) ausgelegt ist, um
in einem zweiten Fall, in dem die Zirkulationsrichtung die erste Zirkulationsrichtung ist und eine erste Temperatur des Kältemittels am ersten Anschluss (P151) niedriger als eine zweite Temperatur des Kältemittels am zweiten Anschluss (P152) ist, die erste Strömungspfadumschalteinheit (162) zu steuern, um die Strömungsrichtung auf die erste Strömungsrichtung einzustellen, und
in einem dritten Fall, in dem die Zirkulationsrichtung die erste Zirkulationsrichtung ist und die erste Temperatur höher als die zweite Temperatur ist, die erste Strömungspfadumschalteinheit (162) zu steuern, um die Strömungsrichtung auf die zweite Strömungsrichtung einzustellen.

9. Kältekreislaufvorrichtung (2) nach Anspruch 5, wobei
der zweite Wärmetauscher (150) einen ersten Anschluss (P151) und einen zweiten Anschluss (P152) umfasst,
die erste Strömungsrichtung eine Richtung ist, in der das Kältemittel vom ersten Anschluss (P151) zum zweiten Anschluss (P152) durch den zweiten Wärmetauscher (150) strömt, und

die Steuerung (172) ausgelegt ist, um

eine logarithmische mittlere Temperaturdifferenz aus einer ersten Differenz zwischen einer ersten Temperatur des Fluids, das einem Wärmeaustausch mit dem Kältemittel unterzogen wird, am zweiten Anschluss (P152) und einer zweiten Temperatur des Kältemittels am zweiten Anschluss (P152) und einer zweiten Differenz zwischen einer dritten Temperatur des Fluids, das einem Wärmeaustausch mit dem Kältemittel unterzogen wird, am ersten Anschluss (P151) und einer vierten Temperatur des Kältemittels am ersten Anschluss (P151) zu berechnen,

in einem zweiten Fall, in dem die Zirkulationsrichtung die erste Zirkulationsrichtung ist und eine erste logarithmische mittlere Temperaturdifferenz größer als eine zweite logarithmische mittlere Temperaturdifferenz ist, die erste Strömungspfadumschalteinheit (162) zu steuern, um die Strömungsrichtung auf die erste Strömungsrichtung einzustellen, wobei die erste logarithmische mittlere Temperaturdifferenz die logarithmische mittlere Temperaturdifferenz ist, wenn die Zirkulationsrichtung die erste Zirkulationsrichtung ist, die zweite logarithmische mittlere Temperaturdifferenz die logarithmische mittlere Temperaturdifferenz ist, wenn die Strömungsrichtung die zweite Strömungsrichtung ist, und

in einem dritten Fall, in dem die Zirkulationsrichtung die erste Zirkulationsrichtung ist und die erste logarithmische mittlere Temperaturdifferenz kleiner als die zweite logarithmische mittlere Temperaturdifferenz ist, die erste Strömungspfadumschalteinheit (162) zu steuern, um die Strömungsrichtung auf die zweite Strömungsrichtung einzustellen.

10. Kältekreislaufvorrichtung (2) nach Anspruch 8 oder 9, wobei die Steuerung (172) ausgelegt ist, um bei Umschalten der Strömungsrichtung den ersten Kompressor (110) zu steuern, um eine Menge des vom ersten Kompressor (110) pro Zeiteinheit abgegebenen Kältemittels so festzulegen, dass sie kleiner als die Referenzmenge ist.

11. Kältekreislaufvorrichtung (2) nach Anspruch 10, wobei die Steuerung (172) ausgelegt ist, um die erste Strömungspfadumschalteinheit (162) zu steuern, um die Strömungsrichtung umzuschalten, nachdem die Menge an Kältemittel unter eine Referenzmenge gefallen ist.

12. Kältekreislaufvorrichtung (2) nach einem der Ansprüche 8 bis 11, ferner umfassend ein Ein/Aus-Ventil (200), wobei das erste Umschaltventil (40) einen ersten Ventilanschluss (P41), einen zweiten Ventilanschluss (P42), einen dritten Ventilanschluss (P43) und einen vierten Ventilanschluss (P44) aufweist,

der erste Ventilanschluss (P41) mit dem zweiten Anschluss (P152) verbunden ist, der zweite Ventilanschluss (P42) mit einem ersten Strömungspfad (PP11) zwischen das erste Expansionsventil (140) und den ersten Strömungspfadumschalteinheit (162) geschaltet ist,

der dritte Ventilanschluss (P43) mit dem ersten Anschluss (P151) verbunden ist,

der vierte Ventilanschluss (P44) mit einem zweiten Strömungspfad (PP12) zwischen den ersten Kompressor (110) und die erste Strömungspfadumschalteinheit (162) geschaltet ist,

das Ein/Aus-Ventil (200) zwischen den zweiten Anschluss (P152) und den zweiten Strömungspfad (PP12) geschaltet ist und

die Steuerung (172) ausgelegt ist, um

im ersten Fall den Motor (M40) zu steuern, um den ersten Ventilanschluss (P41) und den zweiten Ventilanschluss (P42) in Kommunikation miteinander zu bringen und den dritten Ventilanschluss (P43) und den vierten Ventilanschluss (P44) in Kommunikation miteinander zu bringen,

im zweiten Fall den Motor (M40) zu steuern, um den zweiten Ventilanschluss (P42) und den dritten Ventilanschluss (P43) in Kommunikation miteinander zu bringen und das Ein/Aus-Ventil (200) zu öffnen, und

im dritten Fall den Motor (M40) zu steuern, um den ersten Ventilanschluss (P41) und den zweiten Ventilanschluss (P42) in Kommunikation miteinander zu bringen, den dritten Ventilanschluss (P43) und den vierten Ventilanschluss (P44) miteinander in Kommunikation miteinander zu bringen und das Ein/Aus-Ventil (200) zu schließen.

13. Kältekreislaufvorrichtung (2B) nach einem der Ansprüche 8 bis 11, wobei

das erste Umschaltventil (50) einen ersten Ventilanschluss (P51), einen zweiten Ventilanschluss (P52), einen dritten Ventilanschluss (P53), einen vierten Ventilanschluss (P54) und einen fünften Ventilanschluss (P55) aufweist,

der erste und der fünfte Ventilanschluss (P51, P55) mit dem ersten Anschluss (P151) verbunden sind,

der zweite Ventilanschluss (P52) mit einem ersten Strömungspfad (PP11) zwischen dem ersten Expansionsventil (140) und der ersten Strömungspfadumschalteinheit (361) verbunden ist,

der dritte Ventilanschluss (P53) mit dem zweiten Anschluss (P152) verbunden ist, der vierte Ventilanschluss (P54) mit einem zweiten Strömungspfad (PP12) zwischen dem ersten Kompressor (110) und der ersten Strömungspfadumschalteinheit (361) verbunden ist und

die Steuerung (172) ausgelegt ist, um

im ersten Fall den Motor zu steuern, um den zweiten Ventilanschluss (P52) und den dritten Ventilanschluss (P53) in Kommunikation miteinander zu bringen und den vierten Ventilanschluss (P54) und den fünften Ventilanschluss (P55) in Kommunikation miteinander zu bringen,
im zweiten Fall den Motor zu steuern, um den ersten Ventilanschluss (P51) und den zweiten Ventilanschluss (P52) in Kommunikation miteinander zu bringen und den dritten Ventilanschluss (P53) und den vierten Ventilanschluss (P54) in Kommunikation miteinander zu bringen, und
im dritten Fall den Motor zu steuern, um den zweiten Ventilanschluss (P52) und den dritten Ventilanschluss (P53) in Kommunikation miteinander zu bringen und den vierten Ventilanschluss (P54) und den fünften Ventilanschluss (P55) in Kommunikation miteinander zu bringen.

14. Kältekreislaufvorrichtung (2A) nach einem der Ansprüche 8 bis 11, wobei
das erste Umschaltventil (60) einen ersten Ventilanschluss (P61), einen zweiten Ventilanschluss (P62), einen dritten Ventilanschluss (P63), einen vierten Ventilanschluss (P64), einen fünften Ventilanschluss (P65) und einen sechsten Ventilanschluss (P66) aufweist,
der erste und der sechste Ventilanschluss (P61, P66) mit dem ersten Anschluss (P151) verbunden sind,
der zweite Ventilanschluss (P62) mit einem ersten Strömungspfad (PP11) zwischen dem ersten Expansionsventil (140) und der ersten Strömungspfadumschalteinheit (162A) verbunden ist,
der dritte und der vierte Ventilanschluss (P63, P64) mit dem zweiten Anschluss (P152) verbunden sind,
der fünfte Ventilanschluss (P65) mit einem zweiten Strömungspfad (PP12) zwischen dem ersten Kompressor (110) und der ersten Strömungspfadumschalteinheit (162A) verbunden ist und
die Steuerung (172) ausgelegt ist, um
im ersten Fall den Motor zu steuern, um den zweiten Ventilanschluss (P62) und den dritten Ventilanschluss (P63) in Kommunikation miteinander zu bringen und den fünften Ventilanschluss (P65) und den sechsten Ventilanschluss (P66) in Kommunikation miteinander zu bringen,
im zweiten Fall den Motor zu steuern, um den ersten Ventilanschluss (P61) und den zweiten Ventilanschluss (P62) in Kommunikation miteinander zu bringen und den vierten Ventilanschluss (P64) und den fünften Ventilanschluss (P65) in Kommunikation miteinander zu bringen, und
im dritten Fall den Motor zu steuern, um den zweiten Ventilanschluss (P62) und den dritten Ventilanschluss (P63) in Kommunikation miteinander zu bringen und den fünften Ventilanschluss (P65) und der sechste Ventilanschluss (P66) in Kommunikation miteinander zu bringen.

15. Kältekreislaufvorrichtung (3) nach einem der Ansprüche 1 bis 14, ferner umfassend eine zweite Strömungspfadumschalteinheit (362), die zwischen den ersten Kompressor (110) und den ersten Wärmetauscher (130) geschaltet und zwischen den ersten Wärmetauscher (130) und das erste Expansionsventil (140) geschaltet ist;
wobei die Steuerung (173) ausgelegt ist, um die zweite Strömungspfadumschalteinheit (362) zu steuern, um die Strömungsrichtung des Kältemittels, das durch den ersten Wärmetauscher (130) strömt, zwischen einer dritten Strömungsrichtung und einer der dritten Strömungsrichtung entgegengesetzten vierten Strömungsrichtung umzuschalten.

16. Kältekreislaufvorrichtung (4D) nach Anspruch 1 oder 2, ferner umfassend:

einen zweiten Kompressor (112);
einen dritten Wärmetauscher (132); und
ein zweites Expansionsventil (142),
wobei das Kältemittel in der ersten Zirkulationsrichtung zirkuliert und in der Reihenfolge des zweiten Kompressors (112), des dritten Wärmetauschers (132), des zweiten Expansionsventils (142) und des zweiten Wärmetauschers (400) zirkuliert.

17. Kältekreislaufvorrichtung (5) nach Anspruch 5, ferner umfassend:

ein zweites Expansionsventil (142);
einen dritten Wärmetauscher (152); und
eine zweite Strömungspfadumschalteinheit (562), die zwischen das zweite Expansionsventil (142) und den dritten Wärmetauscher (152) geschaltet und zwischen den dritten Wärmetauscher (152) und den ersten Kompressor (110) geschaltet ist, wobei
Betriebsmodi der Kältekreislaufvorrichtung (5) einen ersten Modus und einen zweiten Modus umfassen,
im ersten Modus das Kältemittel in der zweiten Zirkulationsrichtung zirkuliert und in der Reihenfolge des ersten Kompressors (110), des dritten Wärmetauschers (152), des zweiten Expansionsventils (142) und des ersten Wärmetauschers (130) zirkuliert,

im zweiten Modus das Kältemittel in der ersten Zirkulationsrichtung zirkuliert und in der Reihenfolge des ersten Kompressors (110), des ersten Wärmetauschers (130), des zweiten Expansionsventils (142) und des dritten Wärmetauschers (152) zirkuliert und

die Steuerung (175) ausgelegt ist, um die zweite Strömungspfadumschalteinheit (562) zu steuern, um die Strömungsrichtung des durch den dritten Wärmetauscher (152) strömenden Kältemittels zwischen einer dritten Strömungsrichtung und einer der dritten Strömungsrichtung entgegengesetzten vierten Strömungsrichtung umzuschalten.

18. Kältekreislaufvorrichtung (6) nach Anspruch 17, ferner umfassend:

eine erste Innenraumeinheit (261), die das erste Expansionsventil (141), den zweiten Wärmetauscher (151) und die erste Strömungspfadumschalteinheit (561) aufnimmt;

eine zweite Innenraumeinheit (262), die das zweite Expansionsventil (142), den dritten Wärmetauscher (152) und die zweite Strömungspfadumschalteinheit (562) aufnimmt; und

einen Strömungsteiler (36), der ausgelegt ist, um von der Steuerung (176) gesteuert zu werden, um das Kältemittel vom ersten Kompressor (110) zur ersten und zweiten Innenraumeinheit (261, 262) zu verteilen, wobei die Betriebsmodi der Kältekreislaufvorrichtung (6) ferner einen dritten Modus und einen vierten Modus umfassen,

im dritten Modus das Kältemittel in der Reihenfolge des ersten Kompressors (110), des Strömungsteilers (36), der ersten Innenraumeinheit (261), des Strömungsteilers (36) und des ersten Wärmetauschers (130) zirkuliert und in der Reihenfolge des ersten Kompressors (110), des Strömungsteilers (36), der ersten Innenraumeinheit (261), der zweiten Innenraumeinheit (262) und des Strömungsteilers (36) zirkuliert und

im vierten Modus das Kältemittel in der Reihenfolge des ersten Kompressors (110), des ersten Wärmetauschers (130), des Strömungsteilers (36), der ersten Innenraumeinheit (261), der zweiten Innenraumeinheit (262) und des Strömungsteilers (36) zirkuliert.

19. Kältekreislaufvorrichtung (6) nach Anspruch 18, ferner umfassend eine Außeneinheit (16), die den ersten Kompressor (110), den ersten Wärmetauscher (130) und das zweite Umschaltventil (120) aufnimmt,

wobei die Kältekreislaufvorrichtung (6) eine Zweirohr-Kältekreislaufvorrichtung ist, bei der die Außeneinheit (16) und der Strömungsteiler (36) durch zwei Rohre (PP11, PP12) miteinander verbunden sind.

20. Kältekreislaufvorrichtung (7) nach Anspruch 18, ferner umfassend eine Außeneinheit (17), die den ersten Kompressor (110), den ersten Wärmetauscher (130) und das zweite Umschaltventil (124) aufnimmt,

wobei die Kältekreislaufvorrichtung (7) eine Dreirohr-Kältekreislaufvorrichtung ist, bei der die Außeneinheit (17) und der Strömungsteiler (37) durch drei Rohre (PP71, PP72, PP73) miteinander verbunden sind.

## Revendications

1. Appareil à cycle frigorifique (1) dans lequel du fluide frigorigène circule dans une première direction de circulation dans un ordre d'un premier compresseur (110), d'un premier échangeur de chaleur (130), d'un premier détendeur (140) et d'un deuxième échangeur de chaleur (150), l'appareil à cycle frigorifique (1) comprenant :

une première unité de commutation de passage d'écoulement (160) reliée entre le premier détendeur (140) et le deuxième échangeur de chaleur (150) et reliée entre le deuxième échangeur de chaleur (150) et le premier compresseur (110) ; et

un dispositif de commande (170) configuré pour commander la première unité de commutation de passage d'écoulement (160) pour qu'elle commute une direction d'écoulement du fluide frigorigène s'écoulant à travers le deuxième échangeur de chaleur (150) entre une première direction d'écoulement et une deuxième direction d'écoulement opposée à la première direction d'écoulement,

la première unité de commutation de passage d'écoulement (160) incluant une première soupape de commutation (40), la première soupape de commutation ayant

un moteur (M40) commandé par le dispositif de commande (170),

un corps de soupape (VB45) mis en rotation par le moteur (M40) autour d'un axe central s'étendant longitudinalement au corps de soupape (VB45), le mouvement de rotation du corps de soupape (VB45) étant converti en un mouvement linéaire le long de l'axe central par mise en prise du corps de soupape (VB45) avec un mécanisme de vis, et

une pluralité d'orifices de soupape (P41, P42, P43, P44), dont un état de communication dans la première soupape de commutation (40) est commuté en fonction d'une position du corps de soupape (VB45).

2. Appareil à cycle frigorifique (1) selon la revendication 1, comprenant en outre une unité de déplacement de fluide (180) configurée pour déplacer un fluide dans une direction opposée à la première direction d'écoulement, le fluide étant soumis à un échange de chaleur avec le fluide frigorigène dans le deuxième échangeur de chaleur (150).

3. Appareil à cycle frigorifique (1) selon la revendication 2, dans lequel
   le fluide inclut de l'air, et
   l'unité de déplacement de fluide inclut un ventilateur (180) qui fait s'écouler l'air dans la direction (AD1) opposée à la première direction d'écoulement.

4. Appareil à cycle frigorifique (4) selon la revendication 2, comprenant en outre un troisième échangeur de chaleur (420), dans lequel
   l'unité de déplacement de fluide inclut une pompe (410), et
   la pompe (410) est configurée pour faire circuler le fluide entre le deuxième échangeur de chaleur (400) et le troisième échangeur de chaleur (420).

5. Appareil à cycle frigorifique (1) selon la revendication 2 ou 3, comprenant en outre une seconde soupape de commutation (120) configurée pour commuter une direction de circulation du fluide frigorigène entre la première direction de circulation et une seconde direction de circulation dans un ordre du premier compresseur (110), du deuxième échangeur de chaleur (150), du premier détendeur (140) et du premier échangeur de chaleur (130), dans lequel le dispositif de commande (170) est configuré pour commander la première unité de commutation de passage d'écoulement (160) pour définir la direction d'écoulement à la première direction d'écoulement dans un premier cas dans lequel la direction de circulation est la seconde direction de circulation.

6. Appareil à cycle frigorifique (1) selon la revendication 5, dans lequel le dispositif de commande (170) est configuré pour commander la première unité de commutation de passage d'écoulement (160) pour définir la direction d'écoulement à la première direction d'écoulement dans un deuxième cas dans lequel la direction de circulation est la première direction de circulation.

7. Appareil à cycle frigorifique (1) selon la revendication 6, dans lequel
   le deuxième échangeur de chaleur (150) inclut un premier orifice (P151) et un second orifice (P152),
   la première unité de commutation de passage d'écoulement (160) inclut en outre un clapet anti-retour (100),
   la première soupape de commutation (40) a un premier orifice de soupape (P41), un deuxième orifice de soupape (P42), un troisième orifice de soupape (P43) et un quatrième orifice de soupape (P44) en tant que la pluralité d'orifices de soupape,
   le premier orifice de soupape (P41) est relié au second orifice (P152),
   le deuxième orifice de soupape (P42) est relié au premier passage d'écoulement (PP11) entre le premier détendeur (140) et la première unité de commutation de passage d'écoulement (160),
   le troisième orifice de soupape (P43) est relié au premier orifice (P151),
   le quatrième orifice de soupape (P44) est relié à un second passage d'écoulement (PP12) entre le premier compresseur (110) et la première unité de commutation de passage d'écoulement (160),
   le clapet anti-retour (100) est relié entre le second orifice (P152) et le second passage d'écoulement (PP12) pour permettre au fluide frigorigène provenant du second orifice (P152) de s'écouler vers le second passage d'écoulement (PP12), et
   le dispositif de commande (170) est configuré pour
   dans le premier cas, commander le moteur (M40) pour amener le premier orifice de soupape (P41) et le deuxième orifice de soupape (P42) en communication l'un avec l'autre et amener le troisième orifice de soupape (P43) et le quatrième orifice de soupape (P44) en communication l'un avec l'autre, et
   dans le deuxième cas, commander le moteur (M40) pour amener le deuxième orifice de soupape (P42) et le troisième orifice de soupape (P43) en communication l'un avec l'autre.

8. Appareil à cycle frigorifique (2) selon la revendication 5, dans lequel
   le deuxième échangeur de chaleur (150) inclut un premier orifice (P151) et un second orifice (P152),
   la première direction d'écoulement est une direction allant du premier orifice (P151) vers le second orifice (P152), et
   le dispositif de commande (172) est configuré pour
   dans un deuxième cas dans lequel la direction de circulation est la première direction de circulation et une première température du fluide frigorigène au niveau du premier orifice (P151) est inférieure à une seconde température du fluide frigorigène au niveau du second orifice (P152), commander la première unité de commutation de passage d'écoulement (162) pour définir la direction d'écoulement à la première direction d'écoulement, et

dans un troisième cas dans lequel la direction de circulation est la première direction de circulation et la première température est supérieure à la seconde température, commander la première unité de commutation de passage d'écoulement (162) pour définir la direction d'écoulement à la deuxième direction d'écoulement.

9. Appareil à cycle frigorifique (2) selon la revendication 5, dans lequel
le deuxième échangeur de chaleur (150) inclut un premier orifice (P151) et un second orifice (P152),
la première direction d'écoulement est une direction dans laquelle le fluide frigorigène s'écoule à travers le deuxième échangeur de chaleur (150) du premier orifice (P151) au second orifice (P152), et
le dispositif de commande (172) est configuré pour

calculer une différence de température moyenne logarithmique à partir d'une première différence entre une première température du fluide soumis à un échange de chaleur avec le fluide frigorigène au niveau du second orifice (P152) et une deuxième température du fluide frigorigène au niveau du second orifice (P152) et d'une seconde différence entre une troisième température du fluide soumis à un échange de chaleur avec le fluide frigorigène au niveau du premier orifice (P151) et une quatrième température du fluide frigorigène au niveau du premier orifice (P151),

dans un deuxième cas dans lequel la direction de circulation est la première direction de circulation et une première différence de température moyenne logarithmique est supérieure à une seconde différence de température moyenne logarithmique, commander la première unité de commutation de passage d'écoulement (162) pour définir la direction d'écoulement à la première direction d'écoulement, la première différence de température moyenne logarithmique étant la différence de température moyenne logarithmique lorsque la direction de circulation est la première direction de circulation, la seconde différence de température moyenne logarithmique étant la différence de température moyenne logarithmique lorsque la direction d'écoulement est la deuxième direction d'écoulement, et

dans un troisième cas dans lequel la direction de circulation est la première direction de circulation et la première différence de température moyenne logarithmique est inférieure à la seconde différence de température moyenne logarithmique, commander la première unité de commutation de passage d'écoulement (162) pour définir la direction d'écoulement à la deuxième direction d'écoulement.

10. Appareil à cycle frigorifique (2) selon la revendication 8 ou 9, dans lequel le dispositif de commande (172) est configuré pour commander, lors de la commutation de la direction d'écoulement, le premier compresseur (110) pour définir une quantité du fluide frigorigène déchargée par le premier compresseur (110) par unité de temps à une quantité inférieure à la quantité de référence.

11. Appareil à cycle frigorifique (2) selon la revendication 10, dans lequel le dispositif de commande (172) est configuré pour commander la première unité de commutation de passage d'écoulement (162) pour qu'elle commute la direction d'écoulement une fois que la quantité de fluide frigorigène tombe en dessous d'une quantité de référence.

12. Appareil à cycle frigorifique (2) selon l'une quelconque des revendications 8 à 11, comprenant en outre une vanne tout ou rien (200), dans lequel
la première soupape de commutation (40) a un premier orifice de soupape (P41), un deuxième orifice de soupape (P42), un troisième orifice de soupape (P43) et un quatrième orifice de soupape (P44),
le premier orifice de soupape (P41) est relié au second orifice (P152),
le deuxième orifice de soupape (P42) est relié à un premier passage d'écoulement (PP11) entre le premier détendeur (140) et la première unité de commutation de passage d'écoulement (162),
le troisième orifice de soupape (P43) est relié au premier orifice (P151),
le quatrième orifice de soupape (P44) est relié à un second passage d'écoulement (PP12) entre le premier compresseur (110) et la première unité de commutation de passage d'écoulement (162),
la vanne tout ou rien (200) est reliée entre le second orifice (P152) et le second passage d'écoulement (PP12), et
le dispositif de commande (172) est configuré pour
dans le premier cas, commander le moteur (M40) pour amener le premier orifice de soupape (P41) et le deuxième orifice de soupape (P42) en communication l'un avec l'autre et amener le troisième orifice de soupape (P43) et le quatrième orifice de soupape (P44) en communication l'un avec l'autre,
dans le deuxième cas, commander le moteur (M40) pour amener le deuxième orifice de soupape (P42) et le troisième orifice de soupape (P43) en communication l'un avec l'autre et ouvrir la vanne tout ou rien (200), et
dans le troisième cas, commander le moteur (M40) pour amener le premier orifice de soupape (P41) et le deuxième orifice de soupape (P42) en communication l'un avec l'autre, amener le troisième orifice de soupape (P43) et le quatrième orifice de soupape (P44) en communication l'un avec l'autre, et fermer la vanne tout ou rien (200).

13. Appareil à cycle frigorifique (2B) selon l'une quelconque des revendications 8 à 11, dans lequel

la première soupape de commutation (50) a un premier orifice de soupape (P51), un deuxième orifice de soupape (P52), un troisième orifice de soupape (P53), un quatrième orifice de soupape (P54) et un cinquième orifice de soupape (P55),

les premier et cinquième orifices de soupape (P51, P55) sont reliés au premier orifice (P151),

le deuxième orifice de soupape (P52) est relié au premier passage d'écoulement (PP11) entre le premier détendeur (140) et la première unité de commutation de passage d'écoulement (361),

le troisième orifice de soupape (P53) est relié au second orifice (P152),

le quatrième orifice de soupape (P54) est relié à un second passage d'écoulement (PP12) entre le premier compresseur (110) et la première unité de commutation de passage d'écoulement (361), et

le dispositif de commande (172) est configuré pour dans le premier cas, commander le moteur pour amener le deuxième orifice de soupape (P52) et le troisième orifice de soupape (P53) en communication l'un avec l'autre et amener le quatrième orifice de soupape (P54) et le cinquième orifice de soupape (P55) en communication l'un avec l'autre,

dans le deuxième cas, commander le moteur pour amener le premier orifice de soupape (P51) et le deuxième orifice de soupape (P52) en communication l'un avec l'autre et amener le troisième orifice de soupape (P53) et le quatrième orifice de soupape (P54) en communication l'un avec l'autre, et

dans le troisième cas, commander le moteur pour amener le deuxième orifice de soupape (P52) et le troisième orifice de soupape (P53) en communication l'un avec l'autre et amener le quatrième orifice de soupape (P54) et le cinquième orifice de soupape (P55) en communication l'un avec l'autre.

14. Appareil à cycle frigorifique (2A) selon l'une quelconque des revendications 8 à 11, dans lequel

la première soupape de commutation (60) a un premier orifice de soupape (P61), un deuxième orifice de soupape (P62), un troisième orifice de soupape (P63), un quatrième orifice de soupape (P64), un cinquième orifice de soupape (P65) et un sixième orifice de soupape (P66),

les premier et sixième orifices de soupape (P61, P66) sont reliés au premier orifice (P151),

le deuxième orifice de soupape (P62) est relié au premier passage d'écoulement (PP11) entre le premier détendeur (140) et la première unité de commutation de passage d'écoulement (162A),

les troisième et quatrième orifices de soupape (P63, P64) sont reliés au second orifice (P152),

le cinquième orifice de soupape (P65) est relié à un second passage d'écoulement (PP12) entre le premier compresseur (110) et la première unité de commutation de passage d'écoulement (162A), et

le dispositif de commande (172) est configuré pour

dans le premier cas, commander le moteur pour amener le deuxième orifice de soupape (P62) et le troisième orifice de soupape (P63) en communication l'un avec l'autre et amener le cinquième orifice de soupape (P65) et le sixième orifice de soupape (P66) en communication l'un avec l'autre,

dans le second cas, commander le moteur pour amener le premier orifice de soupape (P61) et le deuxième orifice de soupape (P62) en communication l'un avec l'autre et amener le quatrième orifice de soupape (P64) et le cinquième orifice de soupape (P65) en communication l'un avec l'autre, et

dans le troisième cas, commander le moteur pour amener le deuxième orifice de soupape (P62) et le troisième orifice de soupape (P63) en communication l'un avec l'autre et amener le cinquième orifice de soupape (P65) et le sixième orifice de soupape (P66) en communication l'un avec l'autre.

15. Appareil à cycle frigorifique (3) selon l'une quelconque des revendications 1 à 14, comprenant en outre une seconde unité de commutation de passage d'écoulement (362) reliée entre le premier compresseur (110) et le premier échangeur de chaleur (130) et reliée entre le premier échangeur de chaleur (130) et le premier détendeur (140), dans lequel le dispositif de commande (173) est configuré pour commander la seconde unité de commutation de passage d'écoulement (362) pour qu'elle commute la direction d'écoulement du fluide frigorigène s'écoulant à travers le premier échangeur de chaleur (130) entre une troisième direction d'écoulement et une quatrième direction d'écoulement opposée à la troisième direction d'écoulement.

16. Appareil à cycle frigorifique (4D) selon la revendication 1 ou 2, comprenant en outre :

un second compresseur (112) ;
un troisième échangeur de chaleur (132) ; et
un second détendeur (142),

dans lequel le fluide frigorigène circule dans la première direction de circulation et circule dans un ordre du second compresseur (112), du troisième échangeur de chaleur (132), du second détendeur (142) et du deuxième échangeur de chaleur (400).

17. Appareil à cycle frigorifique (5) selon la revendication 5, comprenant en outre :

un second détendeur (142) ;
un troisième échangeur de chaleur (152) ; et
une seconde unité de commutation de passage d'écoulement (562) reliée entre le second détendeur (142) et le troisième échangeur de chaleur (152) et reliée entre le troisième échangeur de chaleur (152) et le premier compresseur (110), dans lequel
des modes de fonctionnement de l'appareil à cycle frigorifique (5) incluent un premier mode et un deuxième mode,
dans le premier mode, le fluide frigorigène circule dans la seconde direction de circulation et circule dans un ordre du premier compresseur (110), du troisième échangeur de chaleur (152), du second détendeur (142) et du premier échangeur de chaleur (130),
dans le deuxième mode, le fluide frigorigène circule dans la première direction de circulation et circule dans un ordre du premier compresseur (110), du premier échangeur de chaleur (130), du second détendeur (142) et du troisième échangeur de chaleur (152), et
le dispositif de commande (175) est configuré pour commander la seconde unité de commutation de passage d'écoulement (562) pour qu'elle commute la direction d'écoulement du fluide frigorigène s'écoulant à travers le troisième échangeur de chaleur (152) entre une troisième direction d'écoulement et une quatrième direction d'écoulement opposée à la troisième direction d'écoulement.

18. Appareil à cycle frigorifique (6) selon la revendication 17, comprenant en outre :

une première unité intérieure (261) qui loge le premier détendeur (141), le deuxième échangeur de chaleur (151) et la première unité de commutation de passage d'écoulement (561) ;
une seconde unité intérieure (262) qui loge le second détendeur (142), le troisième échangeur de chaleur (152) et la seconde unité de commutation de passage d'écoulement (562) ; et
un diviseur d'écoulement (36) configuré pour être commandé par le dispositif de commande (176) pour distribuer le fluide frigorigène du premier compresseur (110) aux première et seconde unités intérieures (261, 262), dans lequel
les modes de fonctionnement de l'appareil à cycle frigorifique (6) incluent en outre un troisième mode et un quatrième mode,
dans le troisième mode, le fluide frigorifique circule dans un ordre du premier compresseur (110), du diviseur d'écoulement (36), de la première unité intérieure (261), du diviseur d'écoulement (36) et du premier échangeur de chaleur (130) et circule dans un ordre du premier compresseur (110), du diviseur d'écoulement (36), de la première unité intérieure (261), de la seconde unité intérieure (262) et du diviseur d'écoulement (36), et
dans le quatrième mode, le fluide frigorigène circule dans un ordre du premier compresseur (110), du premier échangeur de chaleur (130), du diviseur d'écoulement (36), de la première unité intérieure (261), de la seconde unité intérieure (262) et du diviseur d'écoulement (36).

19. Appareil à cycle frigorifique (6) selon la revendication 18, comprenant en outre une unité extérieure (16) qui loge le premier compresseur (110), le premier échangeur de chaleur (130) et la seconde soupape de commutation (120), dans lequel l'appareil à cycle frigorifique (6) est un cycle frigorifique à deux tuyaux dans lequel l'unité extérieure (16) et le diviseur d'écoulement (36) sont reliés l'un à l'autre par deux tuyaux (PP11, PP12).

20. Appareil à cycle frigorifique (7) selon la revendication 18, comprenant en outre une unité extérieure (17) qui loge le premier compresseur (110), le premier échangeur de chaleur (130) et la seconde soupape de commutation (124), dans lequel l'appareil à cycle frigorifique (7) est un appareil à cycle frigorifique à trois tuyaux dans lequel l'unité extérieure (17) et le diviseur d'écoulement (37) sont reliés l'un à l'autre par trois tuyaux (PP71, PP72, PP73).

FIG.1

FIG.2

# FIG.3

<u>1</u>

FIG.4

FIG.5

FIG.6

FIG.7

FIG.8

FIG.9

FIG.10

FIG.11

FIG.12

START
↓ S101
ACCEPT INPUT OF OPERATION MODE
↓ S102
INITIAL SETTING
↓
S103
ABS(Tgoal−T21) ≤ THRESHOLD ? —NO→ S104 CHANGE DRIVE FREQUENCY AND DEGREE OF OPENING OF EXPANSION VALVE
↓ YES
S105
COOLING MODE AND T11 ≥ T12 ? —NO→
↓ YES
S106
CALCULATE LMTD1
↓
S107
REDUCE DRIVE FREQUENCY TO BE EQUAL TO OR LESS THAN REFERENCE VALUE AND CHANGE DEGREE OF OPENING OF EXPANSION VALVE
↓ S108
DRIVE FLOW PATH SWITCH VALVE
↓ S109
WAIT UNTIL COMPLETION OF SWITCH
↓
S110
ABS(Tgoal−T21) ≤ THRESHOLD ? —NO→ S111 CHANGE DRIVE FREQUENCY AND DEGREE OF OPENING OF EXPANSION VALVE
↓ YES
S112
CALCULATE LMTD2
↓
S113
LMTD2 ≥ LMTD1? —NO→
↓ YES
RETURN

## FIG.13

START

S101 ACCEPT INPUT OF OPERATION MODE

S102 INITIAL SETTING

S103 ABS(Tgoal−T21) ≤ THRESHOLD ?
— NO → S104 CHANGE DRIVE FREQUENCY AND DEGREE OF OPENING OF EXPANSION VALVE

YES

S105 COOLING MODE AND T11 ≥ T12 ?
— NO
— YES

S107 REDUCE DRIVE FREQUENCY TO BE EQUAL TO OR LESS THAN REFERENCE VALUE AND CHANGE DEGREE OF OPENING OF EXPANSION VALVE

S108 DRIVE FLOW PATH SWITCH VALVE

S109 WAIT UNTIL COMPLETION OF SWITCH

S110 ABS(Tgoal−T21) ≤ THRESHOLD ?
— NO → S111 CHANGE DRIVE FREQUENCY AND DEGREE OF OPENING OF EXPANSION VALVE

YES

RETURN

FIG.14

DRIVE
FREQUENCY
(Hz)

f2

f1

0

tm0  tm1        tm2  tm3        tm4

TIME

FIG.15

<u>2</u>

FIG.16

2A

WET STEAM

GAS REFRIGERANT

CONTROLLER

FIG.17

2A

WET STEAM

GAS REFRIGERANT

CONTROLLER

FIG.18

<u>2A</u>

FIG.19

2B

WET STEAM

PP11

GAS REFRIGERANT

PP12

CONTROLLER

FIG.20

2B

WET STEAM

PP11

GAS REFRIGERANT

PP12

CONTROLLER

FIG.21

2B

FIG.22

FIG.23

## FIG.24

```
                    ┌─────────────┐
                    │    START    │
                    └──────┬──────┘
                           │            ┌─S301
            ┌──────────────▼──────────────────┐
            │  ACCEPT INPUT OF OPERATION MODE  │
            └──────────────┬──────────────────┘
                           │            ┌─S302
            ┌──────────────▼──────────────────┐
            │         INITIAL SETTING          │
            └──────────────┬──────────────────┘
                           │
                           │            ┌─S303
                      ◇────▼────◇  NO
              ABS(Tgoal−T21) ≤ THRESHOLD ──────┐       ┌─S304
                      ◇ ? ◇                     ▼
                       │YES              ┌──────────────────────┐
                       │         ┌─S305  │ CHANGE DRIVE FREQUENCY│
         NO       ◇────▼────◇           │ AND DEGREE OF OPENING │
        ┌────────  HEATING MODE         │ OF EXPANSION VALVE    │
        │           AND T13 ≥ T14 ◇─────└──────────────────────┘
        │              ◇ ? ◇
        │               │YES      ┌─S306
        │    ┌──────────▼──────────────┐
        │    │     CALCULATE LMTD3      │
        │    └──────────┬──────────────┘
        │               │            ┌─S307
        │    ┌──────────▼──────────────────────┐
        │    │ REDUCE DRIVIE FREQUENCY TO BE    │
        │    │ EQUAL TO OR LESS THAN REFERENCE  │
        │    │ VALUE AND CHANGE DEGREE OF       │
        │    │ OPENING OF EXPANSION VALVE       │
        │    └──────────┬──────────────────────┘
        │               │            ┌─S308
        │    ┌──────────▼──────────────┐
        │    │  DRIVE FLOW PATH SWITCH VALVE │
        │    └──────────┬──────────────┘
        │               │            ┌─S309
        │    ┌──────────▼──────────────┐
        │    │ WAIT UNTIL COMPLETION OF SWITCH │
        │    └──────────┬──────────────┘
        │               │            ┌─S310
        │          ◇────▼────◇  NO
        │  ABS(Tgoal−T21) ≤ THRESHOLD ──────┐    ┌─S311
        │          ◇ ? ◇                    ▼
        │           │YES             ┌──────────────────────┐
        │           │         ┌─S312 │ CHANGE DRIVE FREQUENCY│
        │  ┌────────▼────────┐       │ AND DEGREE OF OPENING │
        │  │ CALCULATE LMTD4 │       │ OF EXPANSION VALVE    │
        │  └────────┬────────┘       └──────────────────────┘
        │           │            ┌─S313
        │      ◇────▼────◇  NO
        │    LMTD4 ≥ LMTD3? ──────────────────┐
        │      ◇─────────◇
        │           │YES
        └───────────┤
                    ▼
             ┌─────────────┐
             │   RETURN    │
             └─────────────┘
```

FIG.25

FIG.26

EP 3 611 443 B1

**FIG.27**

**FIG.28**

FIG.29

FIG.30

FIG.31

# FIG.32

WET STEAM

GAS REFRIGERANT

EP 3 611 443 B1

# FIG.33

EP 3 611 443 B1

FIG.34

FIG.35

EP 3 611 443 B1

FIG.36

FIG.37

FIG.38

EP 3 611 443 B1

FIG.39

FIG.40

FIG.41

16C

130

128

110

WET STEAM

PP11

GAS REFRIGERANT

PP12

FIG.42

16C

130

128

110

GAS REFRIGERANT

PP11

PP12

LIQUID REFRIGERANT
or
WET STEAM

FIG.43

EP 3 611 443 B1

FIG.44

FIG.45

FIG.46

# FIG.47

FIG.48

FIG.49

# FIG.50

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012202624 A

- JP 2012242047 A